# EUROPÄISCHE PATENTSCHRIFT

(11) **EP 1 328 590 B1**
(45) Veröffentlichungstag und Bekanntmachung des Hinweises auf die Patenterteilung: **03.08.2011**
(21) Anmeldenummer: 01976296.2
(22) Anmeldetag: 10.10.2001
(51) Int. Cl.: C09D 5/00, C09D 5/08

(54) **VERFAHREN ZUR VORBEHANDLUNG ODER/UND BESCHICHTUNG VON METALLISCHEN OBERFLÄCHEN VOR DER UMFORMUNG MIT EINEM LACKÄHNLICHEN ÜBERZUG UND VERWENDUNG DER DERART BESCHICHTETEN SUBSTRATE**
METHOD FOR PRETREATING AND/OR COATING METALLIC SURFACES WITH A PAINT-LIKE COATING PRIOR TO FORMING AND USE OF SUBSTRATES COATED IN THIS WAY
PROCEDE DE PRETRAITEMENT ET / OU D'ENDUCTION DE SURFACES METALLIQUES AVANT LE FORMAGE A L'AIDE D'UNE COUCHE DE TYPE PEINTURE ET UTILISATION DES SUBSTRATS AINSI RECOUVERTS

(30) Priorität: 11.10.2000 DE 10050537; 06.03.2001 DE 10110830; 21.04.2001 DE 10119606; 07.06.2001 DE 10127721
(43) Veröffentlichungstag der Anmeldung: 23.07.2003
(60) Teilanmeldung: 05017734.4
(73) Patentinhaber: Chemetall GmbH, 60487 Frankfurt (DE)
(72) Erfinder: JUNG, Christian, 96173 Oberhaid (DE); SHIMAKURA, Toshiaki, 272-0815 Ichikawa-shi, Chiba-Ken (JP); MAURUS, Norbert, 63225 Langen (DE); DOMES, Heribert, 35789 Weilmünster (DE); WIETZORECK, Hardy, 65934 Frankfurt am Main (DE); SCHINZEL, Marcus, 65817 Eppstein (DE); KOLBERG, Thomas, D-64646 Heppenheim (DE); BITTNER, Klaus, 60385 Frankfurt am Main (DE)
(74) Vertreter: Uppena, Franz
(86) Internationale Anmeldenummer: PCT/EP2001/011737
(87) Internationale Veröffentlichungsnummer: WO 2002/031064

(56) Entgegenhaltungen:
- EP-A- 0 344 717
- EP-A- 0 551 568
- WO-A1-94/12570
- WO-A2-02/24344
- US-A- 5 700 523
- US-A- 5 905 105

## Beschreibung

Die Erfindung betrifft ein Verfahren zur Beschichtung von metallischen Oberflächen sowie die Verwendung der nach dem erfindungsgemäßen Verfahren hergestellten beschichteten Substrate insbesondere im Fahrzeugbau, insbesondere in der Automobilserienfertigung, und für die Herstellung von Komponenten oder Karosserieteilen bzw. vormontierten Elementen in der Fahrzeug-, Luftfahrt- oder Raumfahrtindustrie. Sie betrifft insbesondere neue Möglichkeiten der Vorbereitung und Montage von Kraftfahrzeugen, indem nicht mehr wie heute üblich die verschiedenen Teile der Karosserie zusammenmontiert, gereinigt, phosphatiert und erst anschließend mit dem gesamten Lacksystem lackiert werden.

Es besteht der Bedarf, die Fertigung von Karossen bzw. ihren Einzelteilen sowie von Verkleidungen für Fahrzeuge und Luftfahrtzeuge noch stärker zu rationalisieren.

Die Korrosionsschutzschicht(en) soll(en) zusammen mit dem Lack oder einer lackähnlichen Schicht gut umformbar sein und soll(en) auch nach dem Umformen einen guten Korrosionsschutz und eine gute Lackhaftung aufweisen. Zusätzlich kann es je nach dem Fügeverfahren erforderlich sein, daß diese Schicht(en) auch gut clinchbar sind, ohne dadurch stärker zur Korrosion zu neigen.

Es gibt bereits zur Herstellung von Lack-beschichteten Blechen ähnliche Herstellungsverfahren für am Band vorbeschichtete Bleche, die für Haushaltsgeräte, Architekturbleche und Möbel genutzt werden. Die Anforderungen an diese Bleche sind jedoch deutlich geringer als die Anforderungen insbesondere im Automobil- und Flugzeugbau. Denn die Anforderungen in der Fahrzeug-, Luftfahrt- oder Raumfahrtindustrie an die Festigkeit der beschichteten Bleche, an die Fügetechniken, an den Lackaufbau und die Lackschichteigenschaften wie Brillianz, Glanz, Korrosionsbeständigkeit, Kratzfestigkeit, Lackhaftung und Steinschlagfestigkeit sind deutlich unterschiedlich und beeinflussen das komplexe Fertigungsverfahren. Die hochwertigen Eigenschaften dieser Bleche müssen insbesondere im Bereich der umgeformten und gefügten Partien auch noch ausreichend hoch sein. Üblicherweise werden die gleichen hohen Anforderungen, wie sie heute angelegt werden, an ein geändertes Fertigungsverfahren und einen geänderten Schichtaufbau angelegt, selbst wenn einzelne Schichten dünner als 4 µm sind. Auch die Zusammensetzung der hierzu verwendeten Polymere und Partikel enthaltenden Beschichtung ist nach Kenntnis der Anmelderin neu.

Der Grundlack (Base Coat) für Architekturbleche auf der Außenseite enthält heute oft Chromat, um bei einer relativ geringen Schichtdicke eine erhöhte Korrosionsbeständigkeit zu erzielen; hierauf wird normalerweise ein Decklack mit einer Dicke im Bereich von 10 bis 20 µm appliziert. Auf der Innenseite von Architekturblechen werden oft die gleichen oder ähnlichen Grundlacke wie auf der Vorderseite als Rückseitenlack mit einer Dicke im Bereich von 6 bis 15 µm als einzige Lackschicht aufgebracht. Bisher sind nach Kenntnis der Anmelderin aber noch keine UV-gehärteten Lacke im Haushaltsgeräte- und Architekturbereich bei der Bandbeschichtung im Einsatz.

Die jeweils genutzte Bandanlage kann eine Verzinkungslinie, eine Coil-Coating-Linie oder/und eine andersartige Beschichtungslinie sein wie z.B. eine Lackierlinie beispielsweise in einem Automobilwerk sein, auf der geschnittes Band mit einem Lack oder/und mit einer lackähnlichen Beschichtung lackiert wird, das zuvor auf einer Bandanlage vorbehandelt wurde.

Unter Vorphosphatieren wird ein vorübergehender Schutz metallischer Oberflächen verstanden, wobei die derart beschichteten Substrate danach ggf. beölt, zwischengelagert, umgeformt, nach Entölung z.B. durch Clinchen, Kleben bzw. Schweißen gefügt oder/und erneut z.B. mit Phosphat vorbehandelt werden können, bevor das Lacksystem aufgetragen wird.

Die Vorbehandlung vor dem Lackieren erfolgt heute, vor allem in der europäischen Automobilindustrie, teilweise ohne absichtliche Chromzugabe und teilweise mit Chromzugabe. Es ist jedoch grundsätzlich bevorzugt, chromfrei oder weitgehend chromfrei, insbesondere insoweit chromfrei, daß kein Chrom absichtlich zugesetzt wird, zu arbeiten, um dieses giftige Schwermetall zu vermeiden. Andererseits wirkt ein Chromzusatz besonders korrosionsschützend, weil ein Selbstheilungseffekt bei einer verletzten Stelle auftreten kann. Vorzugsweise sind die Vorbehandlungslösungen auch arm oder frei jeweils an Kobalt, Kupfer, Nickel oder/und anderen Schwermetallen. Aber insbesondere Gehalte an Nickel sind immer noch besonders vorteilhaft und daher praktisch immer z.B. bei Phosphatierungen enthalten. Die Vorbehandlungslösungen können entweder im rinse- oder im no-rinse-Verfahren aufgebracht werden. Beim rinse-Verfahren wird nach dem Applizieren der Lösung - was insbesondere durch Spritzen oder/und Tauchen erfolgen kann -, wobei sich die Vorbehandlungsschicht ausbildet, gespült. Beim no-rinse-Verfahren wird die Lösung z.B. mit einem Rollcoater aufgetragen und sofort ohne Spülen aufgetrocknet.

Unter einem Base Coat wird ein Lack oder eine lackähnliche Beschichtung verstanden, die den üblicherweise im Karosseriebau eingesetzten kathodischen Tauchlack (KTL; Elektrotauchlack) ersetzt. Das kann ein Primer, insbesondere ein Gleit-, Schweiß- oder Pretreatment-Primer, sein oder eine andersartige Beschichtung z.B. auf Basis von Silan/Siloxan. Bei Bedarf kann zwischen den Base Coat und den Füller (= Farblack) eine Lackzwischenschicht aufgebracht werden. Auf den Füller folgt üblicherweise mindestens ein Klarlack, der die Brillianz verstärkt und auch als Top Coat bezeichnet wird.

Die mit einem Gleitprimer ausgebildete Beschichtung läßt sich aufgrund der guten Gleiteigenschaften, ihrer geringen Reibung und ihrer Flexibilität besonders gut und leicht umformen. Ein Schweißprimer und die daraus hergestellte Beschichtung enthält einen so hohen Anteil an elektrisch leitfähiger Substanz, insbesondere an elektrisch leitfähigen Partikeln, daß ein Zusammenschweißen von zwei Blechen ohne deutlich erhöhten Aufwand möglich ist, selbst wenn dabei zwei lackähnliche Schichten durchkontaktiert werden müssen. Ein Pretreatment-Primer ist ein Primer bzw. eine entsprechende Beschichtung, die auch die korrosionsschützenden Eigenschaften einer Vorbehandlungsschicht ersetzen kann. Dies sind alles lackähnliche Beschichtungen.

Die Erfindung betrifft außerdem ein Verfahren zur Beschichtung von metallischen Oberflächen mit einer Polymer sowie feine anorganische Partikel enthaltenden wässerigen Zusammensetzung. Ferner betrifft die Erfindung eine entsprechende wässerige Zusammensetzung sowie die Verwendung der nach dem erfindungsgemäßen Verfahren beschichteten Substrate.

Die bislang am häufigsten eingesetzten Verfahren zur Oberflächenbehandlung bzw. Vorbehandlung vor der Lackierung von Metallen, insbesondere von Metallband, basieren auf dem Einsatz von Chrom(VI)-Verbindungen zusammen mit diversen Zusatzstoffen. Aufgrund der toxikologischen und ökologischen Risiken, die derartige Verfahren mit sich bringen und darüber hinaus aufgrund der absehbaren gesetzlichen Einschränkungen bezüglich der Anwendung von Chromat-haltigen Verfahren wird schon seit längerer Zeit nach Alternativen zu diesen Verfahren auf allen Gebieten der Metalloberflächenbehandlung gesucht.

Es sind Harzgemische bekannt, bei denen Harze mit anorganischen Säuren abgemischt werden, um auf diese Weise auch einen Beizangriff und somit einen besseren Kontakt der Harzschicht direkt mit der metallischen Oberfläche zu erzielen. Diese Zusammensetzungen haben den Nachteil, daß aufgrund des Beizangriffes die Kontamination während des Kontaktierens der Behandlungsflüssigkeit (Dispersion) zum Substrat eintritt. Dies führt zur Anreicherung von Metallen in der Behandlungsflüssigkeit und dadurch bedingt zur permanenten Veränderung der chemischen Zusammensetzung der Behandlungsflüssigkeit, wodurch der Korrosionsschutz signifikant beeinträchtigt wird. Diese Metalle werden durch den Beizangriff aus der metallischen Oberfläche der zu behandelnden Substrate herausgelöst.

Ein weiterer Nachteil besteht darin, daß sich speziell bei Aluminium bzw. bei Aluminium-enthaltenden Legierungen die Oberflächen dunkel, u.U. dunkelgrau bis anthrazitfarben verfärben. Die dunkel verfärbten Metalloberflächen sind für dekorative Anwendungen nicht einsetzbar, da die Verfärbung selbst aus ästhetischen Gründen unerwünscht ist. Die Dunkelfärbung ist je nach der Dicke der Schichtauflage mit unterschiedlicher Intensität sichtbar.

US 5,905,105 lehrt wässerige Lösungen auf Basis von Polyvinylalkohol, einem zweiten organischen Polymer, Flußsäure, Siliciumdioxidpartikeln und einer Ti/Hf/Zr-enthaltenden Verbindung, sowie Verfahren zur Beschichtung von metallischen Oberflächen mit diesen Lösungen.

EP-A2-0 344 717 beschreibt Stahlbänder, die zuerst mit Aluminium oder/und Zink metallisch plattiert, danach chromatiert und schließlich mit einer organischen Beschichtung auf Basis von modifizierten Epoxidharzen oder von Polyvinylharzen mit Siliciumdioxidpartikeln und Polyethylenwachs beschichtet sind.

WO 02/24344 A2, betrifft Verfahren zur Beschichtung eines metallischen Bandes mit einer wässerigen Dispersion auf Basis von UV-vernetzbarem Harz, Wachs, Photoinitiator und Korrosionsinhibitor, die ähnliche Verfahrensabfolgen wie die vorliegende Anmeldung beschreibt.

Es bestand daher die Aufgabe, die Nachteile des Standes der Technik zu überwinden und insbesondere ein Verfahren zur Beschichtung von metallischen Oberflächen vorzuschlagen, das auch für hohe Beschichtungsgeschwindigkeiten, wie sie für Bänder genutzt werden, geeignet ist, das weitgehend oder gänzlich frei von Chrom(VI)-Verbindungen anwendbar ist, das möglichst auch frei von anorganischen und organischen Säuren ist und das großtechnisch einsetzbar ist.

Aufgabe der Erfindung ist es, ein Verfahren zur Beschichtung von metallischen Substraten vorzuschlagen, die auch für die Beschichtung schnell laufender Bänder geeignet sind, mit dem organische, ausreichend flexible und gleichzeitig ausreichend korrosionsbeständige Beschichtungen aufgebracht werden können, die die Herstellung eines Base Coat und ggfs. auch der nachfolgenden Schichten ermöglichen. Dieses Verfahren soll für die wirtschaftliche und möglichst umweltfreundliche industrielle Umsetzung geeignet sein.

Außerdem bestand die Aufgabe, ein Verfahren zur Herstellung von Teilen, insbesondere zur Montage von Automobilkarosserien vorzuschlagen, bei denen es möglich ist, einen längeren Teil des Fertigungsprozesses der Teile, ggf. noch als Band, als bisher in einer Bandlinie auszuführen.

Die Aufgabe wird gelöst mit einem Verfahren zur Beschichtung eines metallischen Bandes, wobei das Band oder die im folgenden Prozeß daraus hergestellten Bandabschnitte zuerst mit mindestens einer Korrosionsschutzschicht und danach mit mindestens einer Schicht einer lackähnlichen Polymer-haltigen Schicht überzogen wird/werden, wobei das Band nach dem Beschichten mit mindestens einer Korrosionsschutzschicht oder nach dem Beschichten mit mindestens einer Schicht einer lackähnlichen Beschichtung zu Bandabschnitten zerteilt wird, wobei die beschichteten Bandabschnitte dann umgeformt, gefügt oder/und mit mindestens einer lackähnlichen Schicht oder/und Lackschicht beschichtet werden, wobei die lackähnliche Beschichtung gebildet wird durch Beschichten der Oberfläche mit einer wässerigen Dispersion, die neben Wasser
a) einen organischen Filmbildner enthält, der aus mindestens einem wasserlöslichen oder wasserdispergierten Polymer mit einer Säurezahl im Bereich von 5 bis 200 auf der Basis von Kunstharzgemischen oder/und Mischpolymerisaten aus Kunstharz auf Basis von
   Acrylat,
   Ethylen,
   Harnstoff-Formaldehyd,
   Polyester,
   Polyurethan,
   Styrol,
   Styrolbutadien oder/und von
   Acryl-Polyester-Polyurethan-Mischpolymerisat,
   Carboxylgruppen-haltigem Polyester,
   Ethylen-Acryl-Mischpolymerisat,
   Melamin-Formaldehyd oder/und
   Styrolacrylat besteht,
b) mindestens eine anorganische Verbindung in Partikelform mit einem mittleren Partikeldurchmesser gemessen an einem Rasterelektronenmikroskop im Bereich von 0,005 bis zu 0,3 µm Durchmesser und
c) mindestens ein Gleitmittel,
   wobei die mit mindestens einer Korrosionsschutzschicht beschichtete metallische Oberfläche mit der wässerigen Zusammensetzung in Kontakt gebracht und ein Partikel enthaltender Film auf der metallischen Oberfläche ausgebildet wird, der anschließend getrocknet wird oder getrocknet und zusätzlich ausgehärtet wird, wobei keine aktinische Strahlung zur Aushärtung verwendet wird, wobei der getrocknete oder getrocknete und auch ausgehärtete Film eine Schichtdicke im Bereich von 0,01 bis 10 µm aufweist.

Hierbei werden metallische Oberflächen insbesondere von Aluminium, Eisen, Kupfer, Magnesium, Nickel, Titan, Zinn, Zink oder Aluminium, Eisen, Kupfer, Magnesium, Nickel, Titan, Zinn oder/und Zink enthaltenden Legierungen beschichtet. Die verwendete wässerige Zusammensetzung kann hierbei weitgehend oder gänzlich von Chrom(VI)-Verbindungen frei sein. Sie kann zur Vorbehandlung vor einer weiteren Beschichtung wie z.B. Lackierung oder zur Behandlung, bei der der zu beschichtende Körper ggf. - insbesondere ein, Band oder Bandabschnitt - nach der Beschichtung umgeformt wird, dienen. Vor allem soll sie aber zur Ausbildung einer ersten oder/und zweiteh lackähnlichen Beschichtung dienen.

Über die zuvor genannten Bestandteile hinaus kann sie ggf. mindestens ein organisches Lösemittel, ggf. mindestens ein Silan oder/und Siloxan berechnet als Silan, ggf. mindestens ein Vernetzungsmittel insbesondere auf Basis einer basischen Verbindung und ggf. mindestens eine Chrom(VI)-Verbindung enthalten.

Die Schichtdicke des getrockneten und ggf. auch ausgehärteten Films kann bestimmt werden durch Ablösen einer definierten Fläche des Films und Auswiegen.

Der getrocknete und ggf. auch ausgehärtete Film weist vorzugsweise eine Pendelhärte von 30 bis 190 s, vorzugsweise von 50 bis 180 s, auf, gemessen mit einem Pendelhärteprüfer nach König nach DIN 53157. Die Pendelhärte nach König liegt vorzugsweise im Bereich von 60 bis 150 s, besonders bevorzugt im Bereich von 80 bis 120 s. Die erfindungsgemäß hergestellten Schichten sind nur an Prüfkörpern mit chemisch gleichartigen, aber ausreichend dicken Schichten zu prüfen, jedoch nicht an dünnen Beschichtungen im Bereich bis zu 10 µm Dicke.

Der getrocknete und ggf. auch ausgehärtete Film weist vorzugsweise eine derartige Flexibilität auf, daß beim Biegen über einen konischen Dorn bei einem Dornbiegetest weitestgehend nach DIN ISO 6860 für einen Dorn von 3.2 mm bis 38 mm Durchmesser - jedoch ohne die Testfläche anzureißenkeine Risse länger als 2 mm entstehen, die bei der anschließenden Benetzung mit Kupfersulfat durch Farbumschlag infolge Kupferabscheidung auf der aufgerissenen metallischen Oberfläche erkennbar werden. Der Nachweis der Flexibilität durch Anwendung des Dornbiegetests und anschließendem Tauchen der auf diese Weise umgeformten Bereiche in eine Kupfersulfatlösung zum Erkennen von Fehlstellen gewährt ein reproduzierbares Testergebnis und hat den Vorteil, daß hierzu keine aufwendigen, z.B. 240 h andauernden Korrosionsprüfungen erforderlich sind, die teilweise je nach chemischer Zusammensetzung und Rauheit der metallischen Oberfläche zu unterschiedlichen Ergebnissen führen kann, die daher nur begrenzt miteinander verglichen werden können. Für diesen Test ist es bei unedleren metallischen Oberflächen wie bei Aluminiumlegierungen erforderlich, vor der Beschichtung die metallische Oberfläche erst einmal beizend zu reinigen, um die Oxidschicht weitestgehend zu entfernen.

### Erfindungsgemäße Zusammensetzung zur Ausbildung einer Behandlungsschicht bzw. Vorbehandlungsschicht oder/und einer lackähnlichen Beschichtung:

Vorzugsweise ist die wässerige Zusammensetzung frei von anorganischen Säuren oder/und organischen Carbonsäuren, insbesondere frei von anorganischen Säuren.

Der organische Filmbildner ist in der wässerigen Zusammensetzung (Badlösung) vorzugsweise in einem Gehalt von 0,1 bis 1000 g/L enthalten, besonders bevorzugt in einem Bereich von 2 bis 600 g/L, ganz besonders bevorzugt von 50 bis 550 g/L, insbesondere von 150 bis 450 g/L. Vorzugsweise werden auf 100 Gewichtsteile Wasser 2 bis 100 Teile des organischen Filmbildners zugegeben, besonders bevorzugt 10 bis 60 Teile, ganz besonders bevorzugt 15 bis 45 Teile. Die höchsten Gehalte an organischem Filmbildner können ohne oder nur mit geringen flüchtigen Anteilen wie organischen Lösemitteln oder/und Restmonomeren auftreten. Für das erfindungsgemäße Verfahren besonders bevorzugt sind vorwiegend oder allein beim Trocknen verfilmte bzw. thermisch-physikalisch gehärtete Beschichtungen.

Die mindestens eine anorganische Verbindung in Partikelform ist in der wässerigen Zusammensetzung (Badlösung) vorzugsweise in einem Gehalt von 0,1 bis 500 g/L enthalten, besonders bevorzugt in einem Bereich von 10 bis 200 g/L, ganz besonders bevorzugt von 30 bis 100 g/L. Vorzugsweise werden auf 100 Gewichtsteile Wasser 0,1 bis 50 Teile der mindestens einen anorganischen Verbindung in Partikelform zugegeben, besonders bevorzugt 0,5 bis 20 Teile, ganz besonders bevorzugt 0,8 bis 10 Teile. Unter den anorganischen Verbindungen in Partikelform sind insbesondere solche bevorzugt, die die Transparenz der erfindungsgemäßen Beschichtung erhalten, also farblos bzw. weiß sind, wie z.B. Aluminiumoxid, Bariumsulfat, Silicat, Siliciumdioxid, kolloidalem Siliciumdioxid, Zinkoxid oder/und Zirkoniumoxid, um den visuellen Charakter der metallischen Oberfläche möglichst unverfälscht sichtbar zu erhalten.

Das Verhältnis der Gehalte an organischem Filmbildner zu Gehalten an anorganischen Verbindungen in Partikelform in der wässerigen Zusammensetzung (Badlösung) kann in weiten Bereichen schwanken; insbesondere kann es bei ² 25 : 1 liegen. Vorzugsweise liegt dieses Verhältnis in einem Bereich von 0,05 : 1 bis 15 : 1, besonders bevorzugt in einem Bereich von 1 : 1 bis 8 : 1.

Der Gehalt an mindestens einem Silan oder/und Siloxan berechnet als Silan beträgt in der wässerigen Zusammensetzung (Badlösung) vorzugsweise 0,1 bis 50 g/L, besonders bevorzugt 0,2 bis 35 g/L, ganz besonders bevorzugt 0,5 bis 20 g/L, insbesondere 1 bis 10 g/L.

Für ein Konzentrat zum Ansetzen der Badlösung in erster Linie durch Verdünnen mit Wasser bzw. für eine Ergänzungslösung zum Einstellen der Badlösung beim längeren Betrieb eines Bades werden vorzugsweise wässerige Zusammensetzungen verwendet, die die meisten oder fast alle Bestandteile der Badlösung enthält, jedoch nicht die mindestens eine anorganische Verbindung in Partikelform, die bevorzugt separat gehalten und separat zugeben wird. Auch Reaktions- und Trocknungsbeschleuniger wie z.B. das Morpholinsalz der Paratoluolsulfosäure können vorteilhaft separat zugegeben werden, insbesondere zur Aushärtung bei Polyester-Melaminharz-Systemen. Das Konzentrat bzw. die Ergänzungslösung weisen vorzugsweise eine Konzentration auf, die fünfmal bis zehnmal bezüglich der einzelnen Bestandteile so stark angereichert ist wie die Badlösung. In manchen Fällen kann jedoch auch mit dem "Konzentrat" direkt als Badlösung gearbeitet werden, ggf. nach einer geringen Verdünnung um z.B. 5 bis 30 %.

Die wässerige Zusammensetzung, die vorzugsweise weitgehend frei von Chrom(VI)-Verbindungen ist, weist auf Chrom-freien metallischen Oberflächen nur einen Chrom-Gehalt von bis zu 0,05 Gew.-%, auf Chromhaltigen metallischen Oberflächen einen Chrom-Gehalt von bis zu 0,2 Gew.-% auf. Vorzugsweise ist der Lösung oder Dispersion kein Chrom bewußt zugegeben. Im Bad auftretende Chromgehalte können dann durch Beizangriff aus der metallischen Oberfläche herausgelöst sein, aus Verunreinigungsgehalten in Spuren stammen bzw. eingeschleppt sein aus vorgeschalteten Bädern bzw. aus Behältern und Rohrleitungen kommen. Vorzugsweise werden auch Gehalte an Cadmium, Nickel, Kobalt oder/und Kupfer äußerst gering gehalten und nicht zugegeben. Üblicherweise ist jedoch für die erfindungsgemäßen Lösungen bzw. Dispersionen der Beizangriff derart gering, daß kein Stahlveredler wie z.B. Chrom oder Nickel aus einer Stahloberfläche herausgelöst werden kann.

Bei dem erfindungsgemäßen Verfahren kann der organische Filmbildner in der Form einer Lösung, Dispersion, Emulsion, Mikroemulsion oder/und Suspension vorliegen Der Begriff Dispersion umfaßt dabei auch die Unterbegriffe Emulsion, Mikroemulsion und Suspension. Der organische Filmbildner kann mindestens ein Kunstharz sein bzw. enthalten, insbesondere ein Kunstharz auf Basis Acrylat, Butadien, Ethylen, Polyester, Polyurethan, Siliconpolyester, Epoxid, Phenol, Styrol, Harnstoff-Formaldehyd, deren Mischungen oder/und deren Mischpolymerisaten. Hierbei kann es sich um ein kationisch, anionisch oder/und sterisch stabilisiertes Kunstharz bzw. Polymer oder/und deren Lösung handeln. Vorzugsweise ist der organische Filmbildner ein Kunstharzgemisch oder/und ein Mischpolymerisat, das einen Gehalt an Kunstharz auf Basis Acrylat, Epoxid, Ethylen, Harnstoff-Formaldehyd, Phenol, Polyester, Polyurethan, Styrol oder/und Styrolbutadien enthält, aus dem während bzw. nach der Abgabe von Wasser und anderen flüchtigen Bestandteilen ein organischer Film ausbildet wird. Der organische Filmbildner kann Kunstharz oder/und Polymer auf der Basis von Epoxid, Phenol, Polyacrylat, Polyethylenimin, Polyurethan, Polyvinylalkohol, Polyvinylphenol, Polyvinylpyrrolidon, Polyasparaginsäure oder/und deren Derivate bzw. Copolymere, insbesondere Copolymere mit einer Phosphor enthaltenden Vinylverbindung, enthalten.

Ganz besonders bevorzugt ist ein Kunstharz auf Basis Acrylat oder auf Basis Ethylen-Acrylsäure mit einem Schmelzpunkt im Bereich von 60 bis 95 °C oder ein Kunstharz mit einem Schmelzpunkt im Bereich von 20 bis 160 °C, insbesondere im Bereich von 60 bis 120 °C.

Die Säurezahl des Kunstharzes/Kunstharzgemisches kann vorzugsweise im Bereich von 10 bis 140 liegen, besonders bevorzugt im Bereich von 15 bis 100, ganz besonders bevorzugt im Bereich von 20 bis 80. In einem hohen Bereich der Säurezahl ist es üblicherweise nicht notwendig, einen Filmbildner kationisch, anionisch oder/und sterisch zu stabilisieren. Bei einer geringen Säurezahl ist jedoch eine solche Stabilisierung meistens notwendig. Dann ist es vorteilhaft, bereits stabilisierte Kunstharze bzw. deren Gemische einzusetzen.

Das Molekulargewicht des Kunstharzes bzw. des Polymers kann im Bereich von mindestens 1.000 u, vorzugsweise von 5.000 bis 250.000 u, besonders bevorzugt im Bereich von 20.000 bis 200.000 u liegen.

Bei dem erfindungsgemäßen Verfahren kann der pH-Wert der wässerigen Lösung des organischen Filmbildners ohne Zugabe weiterer Verbindungen vorzugsweise im Bereich von 0,5 bis 12 liegen, besonders bevorzugt im Bereich von 1 bis 6 bzw. 6 bis 10,5, ganz besonders bevorzugt im Bereich von 1,5 bis 4 bzw. 7 bis 9, je nachdem, ob im sauren oder eher basischen Bereich gearbeitet wird. Hierbei ist zu berücksichtigen, daß die Kunstharze oft bereits beim Kunstharzhersteller neutralisiert wurden. Vorzugsweise liegt der pH-Wert nur des organischen Filmbildners in einer wässerigen Zubereitung ohne Zugabe weiterer Verbindungen im Bereich von 1 bis 12. Falls jedoch der pH-Wert aufgrund der Lagerung der Kunstharze bzw. der Gemische abgefallen sein sollte, kann es hilfreich sein, den pH-Wert insbesondere der ansonsten einsatzbereiten Lösung/Dispersion z.B. durch Zugabe von Natronlage wieder in einen alkalischeren Bereich zu bringen.

Der organische Filmbildner kann auch so zusammengesetzt sein, daß er (nur) wasserlösliches Kunstharz oder/und Polymer enthält, insbesondere solches, das in Lösungen mit pH-Werten ≤ 5 stabil ist.

Der organische Filmbildner enthält vorzugsweise (nur) Kunstharz oder/und Polymer, das Carboxyl-Gruppen aufweist. Die Carboxyl-Gruppen lassen sich u.a. durch Ammoniak, Amine - insbesondere Alkanolamine - oder/und Alkalimetallverbindungen neutralisieren und zu einer wässerigen Lösung mit einem gut wasserverdünnbaren Kunstharz umsetzen, das vorher unter Normalbedingungen nicht wasserlöslich ist. Zur Vernetzung der Carboxylgruppen-haltigen Kunstharze wird vorteilhafterweise Melamin-Formaldehyd zur chemischen Vernetzung zugegeben.

Bei dem erfindungsgemäßen Verfahren kann es bevorzugt sein, daß die wässerige Zusammensetzung mindestens ein teilhydrolysiertes oder gänzlich hydrolysiertes Silan bzw. mindestens ein Siloxan enthält. Das bietet dann den Vorteil, daß Haftbrücken zwischen dem Substrat und dem getrockneten Schutzfilm sowie zu möglicherweise nachträglich aufgetragenen Lackschichten oder/und Kunststoffbeschichtungen entstehen, wodurch auch eine verbesserte Lackhaftung erzielt wird. Ein weiterer Vorteil ist, daß geeignete Silane/Siloxane haftbrückenähnliche Vernetzungen innerhalb des getrockneten Schutzfilmes erzeugen, die die Festigkeit oder/und die Flexibilität des Beschichtungsverbundes sowie die Haftung zum Substrat wesentlich verbessern, wodurch bei vielen Lacksystemen eine verbesserte Haftung erzielt wird. Bei dem erfindungsgemäßen Verfahren kann es bevorzugt sein, daß die wässerige Zusammensetzung mindestens ein teilhydrolysiertes oder gänzlich hydrolysiertes Silan enthält. Das bietet dann den Vorteil, daß bei vielen Lacksystemen eine verbesserte Haftung erzielt wird. Das Silan kann ein Acyloxysilan, ein Alkylsilan, ein Alkyltrialkoxysilan, ein Aminosilan, ein Aminoalkylsilan, ein Aminopropyltrialkoxysilan, ein Bis-Silyl-Silan, ein Epoxysilan, ein Fluoroalkylsilan, ein Glycidoxysilan wie z.B. ein Glycidoxyalkyltrialkoxysilan, ein Isocyanato-Silan, ein Mercapto-Silan, ein (Meth)acrylato-Silan, ein Mono-Silyl-Silan, ein Multi-Silyl-Silan, ein Bis-(trialkoxysilyl-propyl)amin, ein Bis-(trialkoxysilyl)ethan, ein Schwefel enthaltendes Silan, ein Bis-(trialkoxysilyl)propyltetrasulphan, ein Ureidosilan wie z.B. ein (Ureidopropyltrialkoxy)silan oder/und ein Vinylsilan, insbesondere ein Vinyltrialkoxysilan oder/und ein Vinyltriacetoxysilan, sein. Es kann z.B. mindestens ein Silan im Gemisch mit einem Gehalt an mindestens einem Alkohol wie Äthanol, Methanol oder/und Propanol von bis zu 8 Gew.-% bezogen auf den Silan-Gehalt sein, vorzugsweise bis zu 5 Gew.-%, besonders bevorzugt bis zu 1 Gew.-%, ganz besonders bevorzugt bis zu 0,5 Gew.-%, ggf. mit einem Gehalt an anorganischen Partikeln, insbesondere in einem Gemisch aus mindestens einem Amino-Silan wie z.B. Bis-Amino-Silan mit mindestens einem Alkoxy-Silan wie z.B. Trialkoxy-Silyl-Propyl-Tetrasulfan oder ein Vinylsilan und ein Bis-Silyl-Aminosilan oder ein Bis-Silyl-Polyschwefelsilan und/oder ein Bis-Silyl-Aminosilan oder ein Aminosilan und ein Multi-Silyl-funktionelles Silan. Die wässerige Zusammensetzung kann dann auch alternativ oder ergänzend mindestens ein den o.g. Silanen entsprechendes Siloxan enthalten. Bevorzugt sind solche Silane/Siloxane, die eine Kettenlänge im Bereich von 2 bis 5 C-Atomen aufweisen und eine funktionelle Gruppe aufweisen, die zur Reaktion mit Polymeren geeignet ist. Ein Zusatz von mindestens einem Silan oder/und Siloxan kann dazu günstig sein, Haftbrücken auszubilden oder die Vernetzung zu fördern.

Bei dem erfindungsgemäßen Verfahren wird als anorganische Verbindung in Partikelform ein feinverteiltes Pulver, eine Dispersion oder eine Suspension zugesetzt, wie z.B. ein Carbonat, ein Oxid, ein Silicat oder ein Sulfat, insbesondere kolloidale oder/und amorphe Partikel. Als anorganische Verbindung in Partikelform sind Partikel auf Basis von mindestens einer Verbindung des Aluminiums, Bariums, Cers, Kalziums, Lanthans, Siliciums, Titans, Yttriums, Zinks oder/und Zirkoniums besonders bevorzugt, insbesondere Partikel auf Basis von Aluminiumoxid, Bariumsulfat, Cerdioxid, Siliciumdioxid, Silicat, Titanoxid, Yttriumoxid, Zinkoxid oder/und Zirkonoxid. Vorzugsweise werden als anorganische Verbindung in Partikelform Partikel mit einer mittleren Partikelgröße im Bereich von 6 nm bis 200 nm verwendet, besonders bevorzugt im Bereich von 7 bis 150 nm, ganz besonders bevorzugt im Bereich von 8 bis 90 nm, noch stärker bevorzugt im Bereich von 8 bis 60 nm, vor allem bevorzugt im Bereich von 10 bis 25 nm. Diese Partikel können auch in Form von Gel oder Sol vorliegen. Die Partikel können z.B. alkalisch stabilisiert sein, um eine bessere Dispergierung zu erzielen. Ein Zusatz von Bor zur Dispergierung der anorganischen Verbindung in Partikelform war nicht erforderlich und ist auch bei den Beispielen nicht verwendet worden. Es ist bevorzugt, daß größere Partikel eine eher plättchenförmige oder längliche Kornform aufweisen.

Bei dem erfindungsgemäßen Verfahren kann auch mindestens ein organisches Lösemittel zugesetzt werden. Als organisches Lösemittel für die organischen Polymere kann mindestens ein wassermischbarer oder/und wasserlöslicher Alkohol, ein Glykolether bzw. N-Methylpyrrolidon oder/und Wasser verwendet werden, im Falle der Verwendung eines Lösemittelgemisches insbesondere eine Mischung aus mindestens einem langkettigen Alkohol, wie z.B. Propylenglykol, ein Esteralkohol, ein Glykolether oder/und Butandiol mit Wasser. Vorzugsweise wird jedoch in vielen Fällen nur Wasser ohne jegliches organisches Lösemittel zugegeben. Der Gehalt an organischem Lösemittel beträgt vorzugsweise 0,1 bis 10 Gew.-%, insbesondere 0,25 bis 5 Gew.-%, ganz besonders bevorzugt 0,4 bis 3 Gew.-%. Für die Bandherstellung ist es bevorzugt, eher nur Wasser und keine organischen Lösemittel einzusetzen, evtl. außer geringen Mengen an Alkohol.

Bei dem erfindungsgemäßen Verfahren kann als Gleitmittel, das auch als Umformmittel dienen kann, mindestens ein Wachs ausgewählt aus der Gruppe der Paraffine, Polyethylene und Polypropylene zugesetzt werden, insbesondere ein oxidiertes Wachs. Es ist besonders vorteilhaft, das Wachs als wässerige bzw. als kationisch, anionisch oder/und sterisch stabilisierte Dispersion einzusetzen, weil es dann in der wässerigen Zusammensetzung leicht homogen verteilt gehalten werden kann. Der Schmelzpunkt des als Gleitmittel eingesetzten Wachses liegt bevorzugt im Bereich von 40 bis 165 °C, besonders bevorzugt im Bereich von 50 bis 160 °C, insbesondere im Bereich von 120 bis 150 °C. Besonders vorteilhaft ist es, zusätzlich zu einem Gleitmittel mit einem Schmelzpunkt im Bereich von 120 bis 165 °C ein Gleitmittel mit einem Schmelzpunkt im Bereich von 45 bis 95 °C oder mit einer Glasübergangstemperatur im Bereich von - 20 bis + 60 °C zuzusetzen, insbesondere in Mengen von 2 bis 30 Gew.-%, vorzugsweise von 5 bis 20 Gew.-%, des Gesamtfeststoffgehalts. Letzteres kann auch allein vorteilhaft eingesetzt werden. Vorzugsweise ist das mindestens eine Gleitmittel, das auch gleichzeitig ein Umformmittel sein kann, in einem Gehalt im Bereich von 0,1 bis 25 g/L und besonders bevorzugt in einem Gehalt im Bereich von 1 bis 15 g/L in der wässerigen Zusammensetzung enthalten. Ein Wachsgehalt ist jedoch nur vorteilhaft, wenn die erfindungsgemäße Beschichtung eine Behandlungsschicht ist, da der Wachsgehalt in einer Vorbehandlungsschicht bei der Lackierung nachteilig sein kann. Es kann ein Gleit- oder/und Umformmittel zugesetzt werden zur Verringerung des Reibungskoeffizienten der Beschichtung, insbesondere beim Umformen. Hierzu empfehlen sich u.a. Paraffin, Polyethylen bzw. oxidiertes Polyethylen.

Die Säuregruppen des Kunstharzes oder/und des Polymers können mit Ammonik, mit Aminen - insbesondere Alkanolaminen - wie z.B. Morpholin, Dimethylethanolamin, Diethylethanolamin oder Triethanolamin oder/und mit Alkalimetallverbindungen wie z.B. Natriumhydroxid neutralisiert sein.

Die erfindungsgemäße Lösung bzw. Dispersion zum Beschichten kann mindestens einen Korrosionsinhibitor, insbesondere auf Basis von Amin(en), enthalten. Der Korrosionsinhibitor kann mindestens eine organische Gruppe oder/und mindestens eine Amino-Gruppe aufweisen. Er kann eine organische Verbindung bzw. eine Ammonium-Verbindung, insbesondere ein Amin bzw. eine Amino-Verbindung, sein wie z.B. ein TPA-Amin-Komplex, ein Phosphonat, eine Polyasparaginsäure, ein Thioharnstoff, ein Zr-Ammonium-carbonat, Benzotriazol, ein Tannin, ein elektrisch leitfähiges Polymer wie z.B. ein Polyanilin oder/und deren Derivate enthalten. Dieser Inhibitor kann mindestens ein Alkanolamin, vorzugsweise ein langkettiges Alkanolamin, oder/und mindestens ein Thiol sein. Er ist vorzugsweise bei Raumtemperatur nicht leichtflüchtig. Ferner kann es vorteilhaft sein, wenn er in Wasser gut löslich oder/und in Wasser gut dispergierbar ist, insbesondere mit mehr als 20 g/L. Besonders bevorzugt sind u.a. Alkylaminoethanole wie Dimethylaminoethanol bzw. Komplexe auf Basis von einem TPA-Amin wie N-Ethylmorpholin-Komplex mit 4-Methyl-γ-oxo-benzinbutansäure. Dieser Korrosionsinhibitor kann zugesetzt werden, um eine stärkere Korrosionsinhibition zu bewirken oder noch weiter zu verstärken. Er ist besonders vorteilhaft, wenn unverzinkte Stahloberflächen, insbesondere kaltgewalzter Stahl (CRS), beschichtet werden sollen. Er ist vorzugsweise in einem Gehalt im Bereich von 0,1 bis 50 g/L und besonders bevorzugt in einem Gehalt im Bereich von 1 bis 20 g/L in der wässerigen Zusammensetzung enthalten bzw. vorzugsweise in einem Gehalt im Bereich von 0,01 bis 5 Gew.-Teilen, besonders bevorzugt im Bereich von 0,03 bis 2 Gew.-Teilen, ganz besonders bevorzugt im Bereich von 0,05 bis 1,2 Gew.-Teilen, bezogen auf 100 Gew.-Teile Wasser.

Das Verhältnis der Gehalte an organischem Filmbildner zu Gehalten an Gleitmittel in der wässerigen Zusammensetzung (Badlösung) kann in weiten Bereichen schwanken; insbesondere kann es bei ³ 2 : 1 liegen. Vorzugsweise liegt dieses Verhältnis in einem Bereich von 3 : 1 bis 50 : 1, besonders bevorzugt in einem Bereich von 10 : 1 bis 20 : 1.

Das Verhältnis der Gehalte an organischem Filmbildner zu Gehalten an mindestens einem Korrosionsinhibitor in der wässerigen Zusammensetzung (Badlösung) kann in weiten Bereichen schwanken; insbesondere kann es bei ² 500 : 1 liegen. Vorzugsweise liegt dieses Verhältnis in einem Bereich von 5 **:** 1 bis 400 : 1, besonders bevorzugt in einem Bereich von 10 : 1 bis 100 : 1.

Die erfindungsgemäße wässerige Zusammensetzung ist vorzugsweise frei von Zusätzen an freiem Fluorid, an Komplexfluorid wie z.B. Hexafluorotitansäure oder Hexafluorozirkonsäure oder/und an anderweitig gebundenem Fluorid.

Besonders vorteilhafte erfindungsgemäße Zusammensetzungen enthalten u.a. mindestens ein Mischpolymerisat z.B. auf Basis von Acryl-Polyester-Polyurethan, Styrol oder/und Ethylen-Acryl als Filmbildner, mindestens eine anorganische Verbindung in Partikelform insbesondere auf Basis von Aluminiumoxid, Aluminiumphosphid, Eisenoxid, Eisenphosphid, Glimmer, Lanthanidoxid(en) z.B. auf Basis Ceroxid, Molybdänsulfid, Graphit, Ruß, Silicat, Siliciumdioxid, kolloidalem Siliciumdioxid, Zinkoxid oder/und Zirkoniumoxid, mindestens ein Vernetzungsmittel, mindestens einen Korrosionsinhibitor und ggf. weitere Zusätze wie u.a. mindestens ein Silan/Polysiloxan. Die Partikel mit einer höheren oder hohen elektrischen Leitfähigkeit können für die Anwendung zum Schweißen auch so ausgewählt werden, daß sie eine solche mittlere Partikelgröße aufweisen, daß sie ggf. aus der erfindungsgemäßen Schicht etwas stärker herausragen.

Die erfindungsgemäße Lösung bzw. Dispersion zum Beschichten kann mindestens ein Vernetzungsmittel insbesondere auf Basis einer basischen Verbindung enthalten, um die Resistenz gegen angreifende Medien wie Chemikalien und Witterungseinflüsse sowie gegen mechanische Beanspruchungen zu bewirken und um die Farbstabilität insbesondere bei Aluminium und Aluminium-haltigen Oberflächen bei hoher Luftfeuchtigkeit bzw. Feuchtraumbeanspruchung zu sichern und das Darkening zu vermeiden. Vorteilhaft sind vor allem Vernetzungsmittel auf Basis von Titan, Hafnium oder/und Zirkonium bzw. solche auf Basis von Carbonat oder Ammoniumcarbonat, vor allem auf Basis von Titan oder/und Zirkonium. Es ist vorzugsweise in einem Gehalt im Bereich von 0,1 bis 30 g/L und besonders bevorzugt in einem Gehalt im Bereich von 1 bis 10 g/L in der wässerigen Zusammensetzung enthalten bzw. vorzugsweise in einem Gehalt im Bereich von 0,01 bis 3 Gew.-Teilen, besonders bevorzugt im Bereich von 0,1 bis 1 Gew.-Teilen, ganz besonders bevorzugt im Bereich von 0,2 bis 0,6 Gew.-Teilen, bezogen auf 100 Gew.-Teile Wasser.

Außerdem ist es vorteilhaft, mindestens ein Netzmittel zuzusetzen, um den Naßfilm gleichmäßig in der flächigen Ausbreitung und in der Schichtdicke sowie dicht und ohne Fehlstellen aufbringen zu können. Grundsätzlich sind viele Netzmittel hierfür geeignet, vorzugsweise Acrylate, Silane, Polysiloxane, langkettige Alkohole, die die Oberflächenspannung der wässerigen Zusammensetzung herabsetzen. In vielen Fällen wird der Zusatz eines Entschäumers notwendig sein. Zur besseren Verfilmung der polymeren Partikel der wässerigen Zusammensetzung während der Trocknung kann, insbesondere als temporärer Weichmacher der Polymerpartikel, ein langkettiger Alkohol, vorzugsweise ein Butandiol, insbesondere auf Basis von Triäthylenglykol oder Tripropylenglykol, dienen. Grundsätzlich sind die hierbei zusetzbaren und hilfreichen Additive dem Fachmann bekannt.

Die wässerige Zusammensetzung kann gegebenenfalls jeweils mindestens ein Biozid, einen Entschäumer, ein Netzmittel oder/und mindestens einen weiteren Zusatz wie er für Lacke oder lackähnliche Zusammensetzungen typisch ist, enthalten.

### Metallische Substrate bzw. metallisch beschichtete Substrate, ihre Behandlung/Vorbehandlung, ihre Beschichtung mit der lackähnlichen Beschichtung und der weitere Verfahrensablauf:

Der Begriff "saubere metallische Oberfläche" bedeutet hierbei eine ungereinigte metallische, z.B. frisch verzinkte Oberfläche, bei der keine Reinigung notwendig ist, bzw. eine frisch gereinigte Oberfläche.

Bei dem erfindungsgemäßen Verfahren kann die wässerige Zusammensetzung durch Aufwalzen, Fluten, Aufrakeln, Spritzen, Sprühen, Streichen oder Tauchen, auch Tauchen bei erhöhter Temperatur der wässerigen Zusammensetzung, und ggf. durch nachfolgendes Abquetschen z.B. mit einer Rolle aufgetragen werden.

Die wässerige Zusammensetzung kann einen pH-Wert im Bereich von 0,5 bis 12, vorzugsweise im Bereich von 1 bis 6 bzw. 7 bis 9, besonders bevorzugt im Bereich von 1,5 bis 4 bzw. 6 bis 10,5 aufweisen, je nachdem, ob im sauren oder eher basischen Bereich gearbeitet wird.

Die wässerige Zusammensetzung kann insbesondere bei einer Temperatur im Bereich von 5 bis 50 °C auf die metallische Oberfläche aufgebracht werden, vorzugsweise im Bereich von 10 bis 40 °C, besonders bevorzugt im Bereich von 18 bis 25 °C, bzw. bei 30 bis 95 °C.

Bei dem erfindungsgemäßen Verfahren kann die metallische Oberfläche bei der Applikation der Beschichtung auf Temperaturen im Bereich von 5 bis 120 °C, vorzugsweise im Bereich von 10 bis 60 °C, ganz bevorzugt von 18 bis 25 °C gehalten werden, bzw. bei 50 bis 120 °C.

Das Endtrocknen kann bei derartigen Filmen viele Tage andauern, während die wesentliche Trocknung bereits in wenigen Sekunden vollzogen werden kann. Das Aushärten kann dabei u.U. über mehrere Wochen dauern, bis der Endtrocknungs- und Aushärtungszustand erreicht ist, wobei eine Verfilmung oder/und eine Vernetzung auftreten kann. Bei Bedarf kann der Aushärtungszustand zusätzlich durch Beschleunigung der Vernetzung durch Erwärmen beschleunigt bzw. verstärkt werden oder/und auch durch Zusatz von und Reaktion mit z.B. freie

NCO-Gruppen-haltigen Verbindungen mit den Carboxylgruppen der Carboxylgruppen-haltigen Polymere.

Weiterhin kann die beschichtete metallische Oberfläche bei einer Temperatur im Bereich von 20 bis 400 °C, vorzugsweise im Bereich von 40 bis 120 °C bzw. im Bereich von 140 bis 350 °C, ganz besonders bevorzugt bei 60 bis 100 °C bzw. bei 160 bis 300 °C PMT (peak-metal-temperature) getrocknet werden - je nach chemischer Zusammensetzung der organischen Filmbildner. Die notwendige Verweilzeit beim Trocknen ist im wesentlichen umgekehrt proportional zur Trockentemperatur: Z.B. bei bandförmigem Material 1 bis 3 s bei 100 °C bzw. 1 bis 20 s bei 250 °C je nach der chemischen Zusammensetzung der Kunstharze bzw. Polymere oder 30 min bei 20 °C, während Polyesterharze mit freien Carboxylgruppen in Kombination mit Melamin-Formaldehydharzen nicht bei Temperaturen unter 120 °C getrocknet werden können. Andererseits müssen beschichtete Formteile u.a. je nach Wanddicke deutlich länger getrocknet werden. Zum Trocknen eignen sich insbesondere Trockeneinrichtungen auf Basis von Umluft, Induktion, Infrarot oder/und Mikrowellen.

Die Schichtdicke der erfindungsgemäßen Beschichtung liegt bevorzugt im Bereich von 0,1 bis 6 µm, besonders bevorzugt im Bereich von 0,2 bis 5 µm, ganz besonders bevorzugt im Bereich von 0,4 bis 4 µm, insbesondere im Bereich von 0,7 bis 2 µm.

Vorzugsweise liegen die Flächenanteile der enthafteten Fläche bei dem T-Bend-Test an mit Coil Coating-Lack beschichteten Formteilen (Blechen) bei bis zu 8 %, besonders bevorzugt bei bis zu 5 %, ganz besonders bevorzugt bei bis zu 2 %, wobei jedoch die besten Werte bei näherungsweise 0 % liegen, so daß dann üblicherweise nur Risse auftreten. Hierfür kann vorzugsweise ein Coil-Coating-Lack auf Basis von Silicon-Polyester eingesetzt werden, insbesondere für vergleichende Tests in für beschichtete Coils typischen Prüfungen. Die Rißfreiheit bzw. die Größe der Risse ist hierbei jedoch auch wesentlich von der Beschaffenheit des eingesetzten Lackes abhängig.

Bei der Beschichtung von Bändern können die beschichteten Bänder zu einem Coil (Bandspule) aufgewickelt werden, ggf. nach einer Abkühlung auf eine Temperatur im Bereich von 40 bis 70 °C.

Auf den teilweise oder gänzlich getrockneten bzw. ausgehärteten Film kann jeweils mindestens eine Beschichtung aus Lack, lackähnlicher Beschichtung, Polymer, Lackfarbe, funktionelle Kunststoffbeschichtungen, Klebstoff oder/und Klebstoffträger wie z.B. eine Selbstklebefolie aufgebracht werden, insbesondere ein Naßlack, ein Pulverlack, eine Kunststoffbeschichtung, ein Klebstoff u.a. zur Folienbeschichtung.

Die erfindungsgemäß mit der wässerigen Zusammensetzung beschichteten Metallteile, insbesondere Bänder oder Bandabschnitte, können umgeformt, lackiert, mit Polymeren wie z.B. PVC beschichtet, bedruckt, beklebt, heißgelötet, geschweißt oder/und durch Clinchen oder andere Fügetechniken miteinander oder mit anderen Elementen verbunden werden. Diese Verfahren sind für die Beschichtung von metallischem Band für Architekturanwendungen grundsätzlich bekannt. In der Regel wird zuerst lackiert oder anderweitig beschichtet und danach umgeformt. Wenn die erfindungsgemäße Beschichtung lackiert oder mit Kunststoff beschichtet ist können Löt- bzw. Schweißverbindungen nicht hergestellt werden, ohne daß die Beschichtungen wenigstens lokal entfernt werden.

Das mit der wässerigen Zusammensetzung erfindungsgemäß beschichtete Teil mit einer metallischen Oberfläche kann ein Draht, eine Drahtwicklung, ein Drahtgeflecht, ein Stahlband, ein Blech, eine Verkleidung, eine Abschirmung, eine Karosserie oder ein Teil einer Karosserie, ein Teil eines Fahrzeugs, Anhängers, Wohnmobils oder Flugkörpers, eine Abdeckung, ein Gehäuse, eine Lampe, eine Leuchte, ein Ampelelement, ein Möbelstück oder Möbelelement, ein Element eines Haushaltsgeräts, ein Gestell, ein Profil, ein Formteil komplizierter Geometrie, ein Leitplanken-, Heizkörperoder Zaunelement, eine Stoßstange, ein Teil aus oder mit mindestens einem Rohr oder/und einem Profil, ein Fenster-, Tür- oder Fahrradrahmen oder ein Kleinteil wie z.B. eine Schraube, Mutter, Flansch, Feder oder ein Brillengestell sein. Die erfindungsgemäß beschichteten Substrate können insbesondere in der Fahrzeug-, Luftfahrt- oder Raumfahrtindustrie, im Bauwesen oder im Gerätebau, vor allem für Haushaltsgeräte, eingesetzt werden.

Das erfindungsgemäße Verfahren stellt eine Alternative zu den genannten Chromat-reichen sowie Säure-freien bzw. Säure-haltigen Verfahren dar, insbesondere im Bereich der Oberflächenvorbehandlung von Metallband vor der Lackierung, und liefert im Vergleich zu ihnen ähnlich gute Ergebnisse hinsichtlich Korrosionsschutz und Lackhaftung. Die erfindungsgemäßen Beschichtungen können weitgehend oder gänzlich frei sein nicht nur von Chrom(VI)-Verbindungen, sondern auch von Chrom(III)-Verbindungen, ohne dadurch an Qualität zu verlieren.

Das erfindungsgemäße Verfahren kann jedoch auch vorteilhaft mit einem Gehalt an mindestens einer chromhaltigen Verbindung eingesetzt werden, wenn der Korrosionsschutz in großer Breite und mit hoher Sicherheit erhalten bleiben soll, besonders an Beschädigungen der Schutzschicht, die durch mechanische Beanspruchungen während Transport, Lagerung und Montage der mit der erfindungsgemäßen Behandlungsflüssigkeit auf der Substrat-oberfläche behandelten Substrate verursacht werden können. Dann können beispielsweise Natriumbichromat, Kaliumbichromat oder/und Ammoniumbichromat zugesetzt werden. Der Gehalt an Chrom(VI)-Verbindungen beträgt dann vorzugsweise 0,01 bis 100 g/l, besonders bevorzugt, 0,1 bis 30 g/l.

Darüberhinaus ist es möglich, das erfindungsgemäße Verfahren zur Behandlung der in herkömmlicher Weise gereinigten Metalloberfläche ohne eine darauf folgende Nachbehandlung wie dem Spülen mit Wasser oder einer geeigneten Nachspüllösung einzusetzen. Das erfindungsgemäße Verfahren ist insbesondere für die Applikation der Behandlungslösung mittels Abquetschwalzen bzw. mittels eines sog. Rollcoaters geeignet, wobei die Behandlungslösung unmittelbar nach der Applikation ohne weitere, zwischengeschaltete Verfahrensschritte eingetrocknet werden kann (Dry-In-Place-Technologie). Dadurch wird das Verfahren z.B. gegenüber herkömmlichen Spritz- bzw. Tauchverfahren, insbesondere solchen mit anschließenden Spülgängen wie z.B. einer Chromatierung oder Zinkphosphatierung, erheblich vereinfacht, und es fallen nur geringste Mengen an Spülwasser zur Anlagenreinigung nach dem Arbeitsende an, weil kein Spülprozeß nach der Applikation notwendig ist, was auch gegenüber den bereits etablierten, im Spritzverfahren mit Nachspüllösungen arbeitenden chromfreien Verfahren einen Vorteil darstellt. Diese Spülwässer können einem neuen Ansatz der Badlösung wieder zugesetzt werden.

Dabei ist es gut möglich, die erfindungsgemäße polymere, ggf. chromatfreie, Beschichtung ohne vorhergehenden Auftrag einer zusätzlichen Vorbehandlungsschicht einzusetzen, so daß ein hervorragender dauerhafter Schutz der metallischen Oberflächen und insbesondere auf AlSi-, ZnAl- wie Galfan^{®}, AlZn- wie Galvalume^{®}, ZnFe-, ZnNi- wie Galvanneal^{®} und anderen Zn-Legierungen als metallische Beschichtungen bzw. Al- und Zn-Beschichtungen möglich ist, der durch Auftrag einer Polymer-haltigen Beschichtung erzielt werden kann. Darüber hinaus hat sich die erfindungsgemäße Beschichtung auch bei stärker korrosionsanfälligen metallischen Oberflächen wie solchen aus Eisen- und Stahl-Legierungen, insbesondere bei kaltgewalztem Stahl, gut bewährt, wobei es dann vorteilhaft ist, mindestens einen Korrosionsinhibitor der wässerigen Zusammensetzung zuzusetzen. Hierdurch kann die Flash-Rust-Bildung während der Trocknung der Behandlungsflüssigkeit auf kaltgewalztem Stahl (CRS) unterbunden werden.

Somit ist ein kostengünstiger und umweltfreundlicher Korrosionsschutz erzielbar, der auch nicht einer kostspieligen UV-Aushärtung bedarf, sondern allein mit der Trocknung und Verfilmung bzw. mit der "gewöhnlichen chemischen" Aushärtung, die oft als "thermische Vernetzung" bezeichnet wird, ausreichend aushärtbar ist. In manchen Fällen kann es jedoch von Interesse sein, in einem bestimmten Prozeßschritt schnell eine härtere Beschichtung zu erhalten. Das kann insbesondere beim Applizieren auf schnell laufenden Bandanlagen bzw. für die erste Vernetzung (= Aushärtung) von Bedeutung sein.

Die erfindungsgemäße polymere und weitgehend oder gänzlich chromatfreie Beschichtung hat weiterhin den Vorteil, daß sie - insbesondere bei einer Schichtdicke im Bereich von 0,5 bis 3 µm - transparent und hell ist, so daß durch die Beschichtung hindurch der metallische Charakter und die typische Struktur z.B. einer verzinkten bzw. einer Galvalume^{®}-Oberfläche genau und unverändert oder nahezu unverändert erkennbar bleibt. Außerdem sind derartig dünne Beschichtungen noch problemlos schweißbar.

Die erfindungsgemäße polymere Beschichtung ist darüber hinaus sehr gut verformbar, da sie so eingestellt werden kann, daß sie sich nach dem Beschichten, Trocknen und Aushärten sowie ggf. auch auf Dauer in einem relativ plastischen und nicht in einem harten, spröden Zustand befindet.

Die erfindungsgemäße Polymer-haltige Beschichtung läßt sich mit den meisten Lacken bzw. Kunststoffen gut überlackieren. Die erfindungsgemäße Polymer-haltige Beschichtung kann nachlackiert werden oder mit Kunststoff wie PVC beschichtet werden durch Auftragsverfahren wie z.B. Pulverlackieren, Naßlackieren, Fluten, Rollen, Streichen oder Tauchen. Meistens weisen die dadurch erzeugten ausgehärteten Beschichtungen, die auf die erfindungsgemäße Polymer-haltige Beschichtung aufgetragen werden, wobei oft auch zwei oder drei Lack- oder Kunststoffschichten aufgebracht werden können, eine Gesamtschichtdicke im Bereich von 5 bis zu 1500 µm auf.

Die erfindungsgemäße polymere Beschichtung ist auch z.B. mit Polyurethan-Isolierschaum problemlos hinterschäumbar für die Herstellung von 2-Blech-Sandwichelementen oder mit den üblichen Konstruktionsklebstoffen, wie sie z.B. im Fahrzeugbau eingesetzt werden, gut verklebbar.

Die erfindungsgemäßen Beschichtungen können vor allem als Primerschichten eingesetzt werden. Sie eignen sich hervorragend ohne, aber auch mit mindestens einer vorher aufgebrachten Vorbehandlungsschicht. Diese Vorbehandlungsschicht kann dann u.a. eine Beschichtung auf Basis von Phosphat, insbesondere ZnMnNi-Phosphat, oder auf Basis von Phosphonat, Silan oder/und einem Gemisch auf Basis von Fluoridkomplex, Korrosionsinhibitor, Phosphat, Polymer oder/und fein verteilten Partikeln sein.

Mit den erfindungsgemäßen Beschichtungen werden Vorbehandlungsschichten bzw. Primerschichten erzielt, die zusammen mit dem nachfolgend aufgebrachten Lack ein Beschichtungssystem ergaben, das den besten chromhaltigen Beschichtungssystemen gleichwertig ist.

Die erfindungsgemäßen Beschichtungen sind sehr preiswert, umweltfreundlich und gut großtechnisch einsetzbar.

Es war überraschend, daß mit einer erfindungsgemäßen Kunstharzbeschichtung trotz einer Schichtdicke von nur ca. 0,5 bis 1,5 µm ein außerordentlich hochwertiger chromfreier Film hergestellt werden konnte, der die Substratoberflächen nicht verfärbt und einen außerordentlich guten Korrosionsschutz ergibt. Weiterhin war es überraschend, daß allein der Zusatz feinteiliger Partikel eine signifikante Verbesserung der Korrosionsbeständigkeit ergab. Erstaunlicherweise hat das basische Vernetzungsmittel - insbesondere zusammen mit einem Korrosionsinhibitor - den Korrosionsschutz noch einmal deutlich verbessert.

Das erfindungsgemäße Verfahren hat gegenüber den bisher beschriebenen oder/und praktizierten Verfahren weiterhin den Vorteil, daß es auf Aluminium-reichen bzw. auf einem mit einer Aluminium-haltigen Legierung beschichteten Substrat - insbesondere bei einem Substrat aus Stahl - keine Dunkelfärbung der Substratoberfläche und auch keine milchig-weiße Mattierung der Substratoberfläche verursacht und somit zur dekorativen Gestaltung von Gebäuden oder/und Gebäudeteilen ohne zusätzliche farbgebende Lackierung einsetzbar ist. Die Ästhetik der Metalloberfläche bleibt unverändert.

### Einsatz von Korrosionsschutzschichten bzw. von lackähnlichen bzw. Lackschichten:

Wenn bei dem erfindungsgemäßen Verfahren Korrosionsschutzschichten aufgebracht werden, können das ein bis vier Schichten sein, die u.U. alle direkt eine nach der anderen aufeinander aufgebracht werden. Vorzugsweise werden mindestens zwei oder drei Korrosionsschutzschichten nacheinander aufgebracht. Jede dieser Schichten ist vorzugsweise eine Korrosionsschutzschicht ausgewählt aus der Gruppe von Beschichtungen auf der Basis von jeweils Eisen-Kobalt, Nickel-Kobalt, mindestens einem Fluorid, mindestens einem komplexen Fluorid, insbesondere Tetrafluorid bzw. Hexafluorid, einer organischen Hydroxyverbindung, einem Phosphat, einem Phosphonat, einem Polymer, einer Seltenerdverbindung aus mindestens einem Seltenerdelement einschließlich Lanthan und Yttrium, einem Silan/Siloxan, einem Silicat, Kationen von Aluminium, Magnesium oder/und mindestens einem Übergangsmetall ausgewählt aus der Gruppe von Chrom, Eisen, Hafnium, Kobalt, Mangan, Molybdän, Nickel, Titan, Wolfram und Zirkon bzw. einer Beschichtung auf Basis von Nanopartikeln ist, aber ggf. noch mindestens eine weitere Korrosionsschutzschicht aufgebracht werden kann. Hierbei kann die mindestens eine weitere Korrosionsschutzschicht beliebig vor oder/und nach der ersten, zweiten bzw. dritten Korrosionsschutzschicht aufgebracht werden. Es kann bedeutsam sein, mehr als eine Korrosionsschutzschicht (Vorbehandlungsschicht) aufzubringen, weil die nachfolgenden lackähnlichen bzw. Lack-Schichten oft derart dünn im Vergleich zu den Lacksystemen nach dem Stand der Technik gehalten werden, daß die Anforderungen an den Korrosionsschutz entsprechend zu steigern sind.

Bei dem erfindungsgemäßen Verfahren kann beispielsweise die erste Korrosionsschutzschicht in einem Auftrockenverfahren und die zweite Korrosionsschutzschicht in einem Auftrockenverfahren oder rinse-Verfahren aufgebracht werden.

Als Auftrockenverfahren wird ein no-rinse-Verfahren bezeichnet, bei dem ein Flüssigkeitsfilm auf dem ggf. vorbeschichteten Band aufgetrocknet wird. Als rinse-Verfahrein wird ein Beschichtungsverfahren bezeichnet, bei dem eine Beschichtung durch Reaktion insbesondere beim Spritzen oder Tauchen entsteht, bei dem die Beschichtung anschließend gespült wird, um überschüssige Chemikalien zu entfernen, und bei dem die Beschichtung zum Schluß getrocknet wird. Vorzugsweise werden Beschichtungen z.B. auf Basis von Zink- oder/und Mangan-Phosphat und meistens mit geringem Nickel-Gehalt im no-rinse-Verfahren aufgebracht. Es können aber auch viele andere Arten von Beschichtungszusammenaufgetrocknet werden.

Bei diesem Verfahren kann beispielsweise die erste Korrosionsschutzschicht in einem rinse-Verfahren und die zweite Korrosionsschutzschicht in einem Auftrockenverfahren oder rinse-Verfahren aufgebracht werden.

Hierbei kann die zweite Korrosionsschutzschicht in einem Nachspülschritt aufgebracht werden, insbesondere nachdem zuvor die erste Korrosionsschutzschicht auf einer Verzinkungslinie aufgebracht wurde.

Auf der Verzinkungslinie kann vorzugsweise elektrolytisch verzinkt, elektrolytisch legierungsverzinkt, feuerverzinkt, schmelztauchverzinkt oder/und schmelztauchlegierungsverzinkt werden. Als Beschichtungen können hierbei u.a. Reinzink, Zink von einer Reinheit im Bereich von 98 bis 99,9 %, Aluminium-Zink-Legierungen, Zink-Aluminium-Legierungen und Zink-Nickel-Legierungen aufgebracht werden.

Hierbei kann die zweite Korrosionsschutzschicht in einem Auftrockenverfahren aufgebracht werden, insbesondere nachdem zuvor die erste Korrosionsschutzschicht auf einer Verzinkungslinie aufgebracht wurde. Auf der Verzinkungslinie kann vorzugsweise elektrolytisch verzinkt, feuerverzinkt, schmelztauchverzinkt oder/und schmelztauchlegierungsverzinkt werden.

Bei dem erfindungsgemäßen Verfahren können Oberflächen von Aluminium, Eisen, Kobalt, Kupfer, Magnesium, Nickel, Titan, Zinn, Zink oder Aluminium, Eisen, Kobalt, Kupfer, Magnesium, Nickel, Titan, Zinn oder/und Zink enthaltende Legierungen beschichtet werden, insbesondere elektrolytisch verzinkte oder feuerverzinkte Oberflächen, beschichtet werden. Als metallische Beschichtungen auf den metallischen Bändern sind bevorzugt: Elektrolytisch verzinkter Stahl, schmelztauchverzinkter Stahl, schmelztauchlegierungsverzinkter Stahl, mit Reinaluminium beschichtete Aluminiumlegierung.

Die Vorbehandlung vor dem Lackieren erfolgt vorzugsweise chromfrei oder weitgehend chromfrei, insbesondere insoweit chromfrei, daß kein Chrom absichtlich zugesetzt wird. Vorzugsweise sind die Vorbehandlungslösungen auch arm oder frei jeweils an Kobalt, Kupfer, Nickel oder/und anderen Schwermetallen.

Bei dem erfindungsgemäßen Verfahren kann mit mindestens einer weitgehend oder gänzlich von Chrom-Verbindungen freien Flüssigkeit, Lösung oder Suspension vor dem Beschichten mit mindestens einem Lack oder/und mit mindestens einer lackähnlichen Polymer-haltigen Schicht, die Polymere, Copolymere, Oligomere, Phosphonate, Silane oder/und Siloxane enthält, beschichtet werden. Weitgehend frei von Chrom kann hierbei ohne absichtliche Zugabe einer Chrom-Verbindung bedeuten. Der Begriff Flüssigkeit umfaßt auch lösemittelfreie, flüssig vorliegende Verbindungen bzw. Gemische.

Dieses Verfahren kann sich dadurch auszeichnen, daß kein Blei, Cadmium, Chrom, Kobalt, Kupfer oder/und Nickel der Flüssigkeit, Lösung bzw. Suspension für die erste oder/und zweite Korrosionsschutzschicht zugegeben wird. Schwermetalle, die zugegeben werden wie Blei, Cadmium, Chrom, Kobalt, Kupfer oder/und Nickel werden meistens nur in möglichst geringen Mengen zugesetzt.

Bei dem erfindungsgemäßen Verfahren kann aufgrund der mindestens einen Korrosionsschutzschicht - im Vergleich zum Stand der Technik am Prioritätstag - mindestens eine der sonst üblichen Vorbehandlungsschichten, Lackschichten oder/und lackähnlichen Polymer-haltigen Schichten eingespart werden, insbesondere eine Vorbehandlungs- und eine Lackschicht (siehe Tabellen 2A-J zu den Varianten A ff).

Hierbei kann die Flüssigkeit, Lösung bzw. Suspension für mindestens eine der Korrosionsschutzschichten oder/und lackähnlichen Polymer-haltigen Schichten neben Wasser mindestens einen organischen Filmbildner enthalten mit mindestens einem wasserlöslichen oder wasserdispergierten Polymer, Copolymer, Blockcopolymer, Monomer, Oligomer, deren Derivat(e), Mischung(en) oder/und Mischpolymerisat(e). Der Anteil dieser organischen Verbindungen liegt vorzugsweise in einer Schicht im Bereich von 60 bis 99,8 Gew.-%, bezogen auf den Feststoffgehalt.

Hierbei kann die Flüssigkeit, Lösung bzw. Suspension für mindestens eine der Korrosionsschutzschichten oder/und lackähnlichen Polymer-haltigen Schichten neben Wasser einen Gesamtgehalt an Kationen, Tetrafluorokomplexen oder/und Hexafluorokomplexen von Kationen aufweisen ausgewählt aus der Gruppe von Titan, Zirkonium, Hafnium, Silicium, Aluminium und Bor oder/und freies oder anderweitig gebundenes Fluor, insbesondere 0,1 bis 15 g/L Komplexfluorid bezogen auf F₆, vorzugsweise 0,5 bis 8 g/L Komplexfluorid bezogen auf F₆ bzw. 0,1 bis 1000 mg/L freies Fluor. Der Anteil dieser Verbindungen liegt vorzugsweise in einer Schicht im Bereich von 5 bis 99,9 Gew.-%.

Hierbei kann die Flüssigkeit, Lösung bzw. Suspension für mindestens eine der Korrosionsschutzschichten oder/und lackähnlichen Polymer-haltigen Schichten neben Wasser einen Gesamtgehalt an freiem oder nicht an Tetra- bzw. Hexafluorokomplexe gebundenem Fluor aufweisen, insbesondere 0,1 bis 1000 mg/L berechnet als freies Fluor, vorzugsweise 0,5 bis 200 mg/L, besonders bevorzugt 1 bis 150 mg/L.

Bei dem erfindungsgemäßen Verfahren kann die Flüssigkeit, Lösung bzw. Suspension für mindestens eine der Korrosionsschutzschichten, Lackschichten oder/und lackähnlichen Polymer-haltigen Schichten neben Wasser mindestens eine anorganische Verbindung in Partikelform mit einem mittleren Partikeldurchmesser gemessen an einem Rasterelektronenmikroskop im Bereich von 0,003 bis zu 1 µm Durchmesser aufweisen, vorzugsweise im Bereich von 0,005 bis zu 0,2 µm Durchmesser, insbesondere auf Basis von Al₂O₃, BaSO₄, Seltenerdoxid(en), mindestens einer anderen Seltenerdverbindung, SiO₂, Silicat, TiO₂, Y₂O₃, Zn, ZnO oder/und ZrO₂, vorzugsweise in einem Gehalt im Bereich von 0,1 bis 80 g/L, besonders bevorzugt in einem Gehalt im Bereich von 1 bis 50 g/L, ganz besonders bevorzugt in einem Gehalt im Bereich von 2 bis 30 g/L. Der Anteil dieser Verbindungen in Partikelform liegt vorzugsweise in einer Schicht im Bereich von 5 bis 90 Gew.-%, besonders bevorzugt im Bereich von 10 bis 50 Gew.-%. Auch elektrisch leitfähige Partikel können wie z.B. Eisenoxid, Eisenphosphid, Molybdänverbindungen wie Molybdänsulfid, Graphit oder/und Ruß oder/und auch ein Zusatz an leitfähigen Polymeren verwendet werden, wenn die Bleche ggf. durch Schweißen gefügt werden sollen. Vorzugsweise sind diese Korrosionsschutzschichten frei von elementarem Zink.

Bei dem erfindungsgemäßen Verfahren kann die Flüssigkeit, Lösung bzw. Suspension für mindestens eine der Korrosionsschutzschichten, Lackschichten bzw. lackähnlichen Polymer-haltigen Schichten mindestens einen Korrosionsinhibitor aufweisen. Der Korrosionsinhibitor kann mindestens eine organische Gruppe oder/und mindestens eine Amino-Gruppe aufweisen. Er kann eine organische Verbindung bzw. eine Ammonium-Verbindung, insbesondere ein Amin bzw. eine Amino-Verbindung, sein wie z.B. ein Alkanolamin, ein TPA-Amin-Komplex, ein Phosphonat, eine Polyasparaginsäure, ein Thioharnstoff, ein Zr-Ammoniumcarbonat, Benzotriazol, ein Tannin, ein elektrisch leitfähiges Polymer wie z.B. ein Polyanilin oder/und deren Derivate enthalten. Insbesondere ist er ausgewählt aus der Gruppe von organischen Phosphatverbindungen, Phosphonatverbindungen, organischen Morpholinund Thioverbindungen, Aluminaten, Manganaten, Titanaten und Zirkonaten, vorzugsweise von Alkylmorpholin-Komplexen, organischen Al-, Mn-, Ti-oder/und Zr-Verbindungen insbesondere der olefinisch ungesättigten Carbonsäuren, beispielsweise Ammoniumsalz von Carboxylsäuren wie chelatisiertem Milchsäuretitanat, Triethanolamintitanat bzw. -zirkonat, Zr-4-Methyl-γ-oxo-Benzin-Butansäure, Aluminium-Zirkonium-Carboxylat, Alkoxypropenolatotitanat bzw. -zirkonat, Titan- oder/und Zirkonacetat oder/und deren Derivate, Ti-/Zr-Ammonium-Carbonat. Der Anteil dieser Verbindungen liegt vorzugsweise in einer Schicht im Bereich von 5 bis 40 Gew.-%.

Hierbei kann die Flüssigkeit, Lösung bzw. Suspension für mindestens eine der Korrosionsschutzschichten, Lackschichten bzw. lackähnlichen Polymer-haltigen Schichten mindestens eine Verbindung zur insbesondere langsamen Neutralisierung vergleichsweise saurer Gemische oder/und zum Korrosionsschutz ungeschützter bzw. beschädigter Partien der metallischen Oberfläche enthalten, vorzugsweise auf Basis von Carbonat oder Hydroxycarbonat oder leitfähigen Polymeren, besonders bevorzugt mindestens eine basische Verbindung mit Schichtstruktur wie z.B. Al-haltiges Hydroxy-Carbonat-Hydrat (Hydrotalcit). Der Anteil dieser Verbindungen liegt vorzugsweise in einer Schicht im Bereich von 3 bis 30 Gew.-%.

Hierbei kann die Flüssigkeit, Lösung bzw. Suspension für mindestens eine der Korrosionsschutzschichten, Lackschichten oder/und lackähnlichen Polymer-haltigen Schichten neben Wasser mindestens ein Silan oder/und Siloxan enthalten berechnet als Silan, insbesondere in einem Gehalt im Bereich von 0,1 bis 50 g/L, vorzugsweise in einem Gehalt im Bereich von 1 bis 30 g/L.

Hierbei kann die Flüssigkeit, Lösung bzw. Suspension für mindestens eine der Korrosionsschutzschichten, Lackschichten oder/und lackähnlichen Polymer-haltigen Schichten neben Wasser oder/und mindestens einem organischen Lösemittel mindestens ein Silan oder/und Siloxan berechnet als Silan enthalten, insbesondere in einem Gehalt im Bereich von 51 bis 1300 g/L.

Hierbei kann die Flüssigkeit, Lösung bzw. Suspension für mindestens eine der Korrosionsschutzschichten, Lackschichten oder/und lackähnlichen Polymer-haltigen Schichten, ggf. neben Wasser oder/und mindestens einem organischen Lösemittel, mindestens ein Silan oder/und Siloxan berechnet als Silan enthalten, insbesondere in einem Gehalt im Bereich von 0,1 bis 1600 g/L, vorzugsweise in einem Gehalt im Bereich von 100 bis 1500 g/L.

Das Silan kann ein Acyloxysilan, ein Alkylsilan, ein Alkyltrialkoxysilan, ein Aminosilan, ein Aminoalkylsilan, ein Aminopropyltrialkoxysilan, ein Bis-Silyl-Silan, ein Epoxysilan, ein Fluoroalkylsilan, ein Glycidoxysilan wie z.B. ein Glycidoxyalkyltrialkoxysilan, ein Isocyanato-Silan, ein Mercapto-Silan, ein (Meth)acrylato-Silan, ein Mono-Silyl-Silan, ein Multi-Silyl-Silan, ein Bis-(trialkoxysilyl-propyl)amin, ein Bis-(trialkoxysilyl)ethan, ein Schwefel enthaltendes Silan, ein Bis-(trialkoxysilyl)propyltetrasulphan, ein Ureidosilan wie z.B. ein (Ureidopropyltrialkoxy)silan oder/und ein Vinylsilan, insbesondere ein Vinyltrialkoxysilan oder/und ein Vinyltriacetoxysilan, sein. Es kann z.B. mindestens ein Silan im Gemisch mit einem Gehalt an mindestens einem Alkohol wie Äthanol, Methanol oder/und Propanol von bis zu 8 Gew.-% bezogen auf den Silan-Gehalt sein, vorzugsweise bis zu 5 Gew.-%, besonders bevorzugt bis zu 1 Gew.-%, ganz besonders bevorzugt bis zu 0,5 Gew.-%, ggf. mit einem Gehalt an anorganischen Partikeln, insbesondere in einem Gemisch aus mindestens einem Amino-Silan wie z.B. Bis-Amino-Silan mit mindestens einem Alkoxy-Silan wie z.B. Trialkoxy-Silyl-Propyl-Tetrasulfan oder ein Vinylsilan und ein Bis-Silyl-Aminosilan oder ein Bis-Silyl-Polyschwefelsilan und/oder ein Bis-Silyl-Aminosilan oder ein Aminosilan und ein Multi-Silyl-funktionelles Silan.

Bei dem erfindungsgemäßen Verfahren kann die Flüssigkeit, Lösung bzw. Suspension für mindestens eine der Korrosionsschutzschichten, Lackschichten oder/und lackähnlichen Polymer-haltigen Schichten einen organischen Filmbildner in der Form einer Lösung, Dispersion, Emulsion, Mikroemulsion oder/und Suspension enthalten.

Hierbei kann die Flüssigkeit, Lösung bzw. Suspension für mindestens eine der Korrosionsschutzschichten, Lackschichten oder/und lackähnlichen Polymer-haltigen Schichten als organischen Filmbildner mindestens ein Kunstharz enthalten, insbesondere mindestens ein Kunstharz auf Basis Acrylat, Ethylen, Polyester, Polyurethan, Siliconpolyester, Epoxid, Phenol, Styrol, Styrolbutadien, Harnstoff-Formaldehyd, deren Derivate, Copolymere, Blockcopolymere, Monomere, Oligomere, Polymere, Mischungen oder/und Mischpolymerisate. Als Oberbegriff für alle diese Varianten an Kunstharzen und deren Derivaten, Copolymeren, Blockcopolymeren, Monomeren, Oligomeren, Polymeren, Mischungen und Mischpolymerisaten wird der Begriff "Polymer" hier - insbesondere auch für die lackähnlichen Schichten - verwendet.

Hierbei kann die Flüssigkeit, Lösung bzw. Suspension für mindestens eine der Korrosionsschutzschichten, Lackschichten oder/und lackähnlichen Polymer-haltigen Schichten als organischen Filmbildner ein Kunstharzgemisch oder/und Mischpolymerisat enthalten, das einen Gehalt an Kunstharz auf Basis Acrylat, Ethylen, Harnstoff-Formaldehyd, Polyester, Polyurethan, Styrol oder/und Styrolbutadien bzw. deren Derivate, Copolymere, Crosspolyme, Oligomere, Polymere, Mischungen oder/und Mischpolymerisate enthält, aus dem während bzw. nach der Abgabe von Wasser und anderen flüchtigen Bestandteilen ein organischer Film ausbildet wird.

Hierbei kann die Flüssigkeit, Lösung bzw. Suspension für mindestens eine der Korrosionsschutzschichten, Lackschichten oder/und lackähnlichen Polymer-haltigen Schichten als organischen Filmbildner Kunstharze oder/und Polymere, Copolymere, Blockcopolymere, Monomere, Oligomere, Polymere, Mischungen oder/und Mischpolymerisate bzw. deren Derivate auf der Basis von Acrylat, Polyethylenimin, Polyurethan, Polyvinylalkohol, Polyvinylphenol, Polyvinylpyrrolidon oder/und Polyasparaginsäure enthalten, insbesondere Copolymere mit einer Phosphor enthaltenden Vinylverbindung.

Hierbei kann die Flüssigkeit, Lösung bzw. Suspension für mindestens eine der Korrosionsschutzschichten, Lackschichten oder/und lackähnlichen Polymer-haltigen Schichten Kunstharz enthalten, dessen Säurezahl im Bereich von 5 bis 250 liegt. Vorzugsweise liegt die Säurezahl im Bereich von 10 bis 140, besonders bevorzugt im Bereich von 15 bis 100.

Hierbei kann die Flüssigkeit, Lösung bzw. Suspension für mindestens eine der Korrosionsschutzschichten, Lackschichten oder/und lackähnlichen Polymer-haltigen Schichten Kunstharze oder/und Polymere, Copolymere, Blockcopolymere, Monomere, Oligomere, Polymere, Mischungen oder/und Mischpolymerisate bzw. deren Derivate enthalten, deren Molekulargewichte im Bereich von mindestens 1.000 u, vorzugsweise von mindestens 5.000 u bzw. von bis zu 500.000 u, besonders bevorzugt im Bereich von 20.000 bis 200.000 u liegen.

Hierbei kann die Flüssigkeit, Lösung bzw. Suspension für mindestens eine der Korrosionsschutzschichten, Lackschichten oder/und lackähnlichen

Polymer-haltigen Schichten Kunstharze oder/und Polymere, Blockcopolymere, Copolymere, Monomere, Oligomere, Polymere, Mischungen oder/und Mischpolymerisate bzw. deren Derivate enthalten, insbesondere auch auf Basis Pyrrolidon(en), insbesondere 0,1 bis 500 g/L, vorzugsweise 0,5 bis 30 oder 80 bis 250 g/L.

Hierbei kann die Flüssigkeit, Lösung bzw. Suspension für mindestens eine der Korrosionsschutzschichten, Lackschichten oder/und lackähnlichen Polymer-haltigen Schichten einen organischen Filmbildner enthalten, dessen pH-Wert in einer wässerigen Zubereitung ohne Zugabe weiterer Verbindungen im Bereich von 1 bis 12 liegt, vorzugsweise im Bereich von 2 bis 10, besonders bevorzugt im Bereich von 2,5 bis 9.

Hierbei kann die Flüssigkeit, Lösung bzw. Suspension für mindestens eine der Korrosionsschutzschichten, Lackschichten oder/und lackähnlichen Polymer-haltigen Schichten einen organischen Filmbildner enthalten, der nur wasserlösliche Kunstharze oder/und Polymere, Copolymere, Blockcopolymere, Monomere, Oligomere, Polymere, Mischungen oder/und Mischpolymerisate bzw. deren Derivate enthält, insbesondere solche, die in Lösungen mit pH-Werten ≤ 5 stabil sind.

Hierbei kann die Flüssigkeit, Lösung bzw. Suspension für mindestens eine der Korrosionsschutzschichten, Lackschichten oder/und lackähnlichen Polymer-haltigen Schichten einen organischen Filmbildner enthalten, dessen Kunstharze oder/und Polymere, Copolymere, Blockcopolymere, Monomere, Oligomere, Polymere, Mischungen oder/und Mischpolymerisate bzw. deren Derivate Carboxyl-Gruppen aufweisen.

Hierbei kann die Flüssigkeit, Lösung bzw. Suspension für mindestens eine der Korrosionsschutzschichten, Lackschichten oder/und lackähnlichen Polymer-haltigen Schichten einen organischen Filmbildner enthalten, bei dem die Säuregruppen der Kunstharze oder/und Polymere, Copolymere, Blockcopolymere, Monomere, Oligomere, Polymere,

Mischungen oder/und Mischpolymerisate bzw. deren Derivate mit Ammoniak, mit Aminen wie z.B. Morpholin, Dimethylethanolamin, Diethylethanolamin oder Triethanolamin oder/und mit Alkalimetallverbindungen wie z.B. Natriumhydroxid stabilisiert sind.

Bei dem erfindungsgemäßen Verfahren die Flüssigkeit, Lösung bzw. Suspension für mindestens eine der Korrosionsschutzschichten, Lackschichten oder/und lackähnlichen Polymer-haltigen Schichten 0,1 bis 200 g/L und bevorzugt 0,3 bis 50 g/L des organischen Filmbildners enthalten, insbesondere 0,6 bis 20 g/L.

Hierbei kann die Flüssigkeit, Lösung bzw. Suspension für mindestens eine der Korrosionsschutzschichten, Lackschichten oder/und lackähnlichen Polymer-haltigen Schichten 100 bis 2000 g/L und bevorzugt 300 bis 1800 g/L des organischen Filmbildners enthalten, insbesondere 800 bis 1400 g/L.

Bei dem erfindungsgemäßen Verfahren kann die Flüssigkeit, Lösung bzw. Suspension für mindestens eine der Korrosionsschutzschichten, Lackschichten oder/und lackähnlichen Polymer-haltigen Schichten einen Anteil an Monomeren, insbesondere im Bereich von mindestens 5 Gew.-%, vorzugsweise von mindestens 20 Gew.-%, besonders bevorzugt von mindestens 40 Gew.-%, enthalten. Hierbei kann insbesondere bei einem hohen Anteil an Monomeren ggf. der Anteil an Wasser bzw. organischem Lösemittel verringert sein und insbesondere kleiner 10 Gew.-% liegen; er kann unter Umständen sogar weitgehend oder gänzlich frei von Wasser oder/und organischem Lösemittel sein.

Bei dem erfindungsgemäßen Verfahren kann die Flüssigkeit, Lösung bzw. Suspension für mindestens eine der Korrosionsschutzschichten, Lackschichten oder/und lackähnlichen Polymer-haltigen Schichten 0,1 bis 50 g/L an Kationen, Tetrafluorokomplexen oder/und Hexafluorokomplexen von Kationen ausgewählt aus der Gruppe von Titan, Zirkonium, Hafnium, Silicium, Aluminium und Bor enthalten, vorzugsweise Hexafluorokomplexe von Titan, Zirkonium oder/und Silicium. vorzugsweise eine Beschichtung von 2 bis 20 g/L.

Hierbei kann die Flüssigkeit, Lösung bzw. Suspension für mindestens eine der Korrosionsschutzschichten, Lackschichten oder/und lackähnlichen Polymer-haltigen Schichten mindestens eine metallorganische Verbindung, insbesondere mit einem Gehalt an Titan oder/und Zirkonium, enthalten. Diese metallorganischen Verbindungen sind oft Korrosionsinhibitoren und oft auch gleichzeitig Haftverbesserer.

Bei dem erfindungsgemäßen Verfahren kann die Flüssigkeit, Lösung bzw. Suspension für mindestens eine der Korrosionsschutzschichten, Lackschichten oder/und lackähnlichen Polymer-haltigen Schichten einen Gehalt an mindestens einem Silan oder/und Siloxan berechnet als Silan in der wässerigen Zusammensetzung enthalten, vorzugsweise in einem Bereich von 0,2 bis 40 g/L, besonders bevorzugt in einem Bereich von 0,5 bis 10 g/L.

Hierbei kann die Flüssigkeit, Lösung bzw. Suspension für mindestens eine der Korrosionsschutzschichten, Lackschichten oder/und lackähnlichen Polymer-haltigen Schichten mindestens ein teilhydrolysiertes Silan, mindestens ein gänzlich hydrolysiertes Silan oder/und mindestens ein Siloxan enthalten. Bei der Aushärtung der Beschichtung bilden sich aus den Silanen Siloxane. Es können jedoch auch entsprechende Siloxane zugesetzt werden. Die Silane/Siloxane können entweder allein, in einem Gemisch z.B. mit mindestens einem Fluoridkomplex oder auch zusammen mit Polymeren eingesetzt werden.

Hierbei kann die Flüssigkeit, Lösung bzw. Suspension für mindestens eine der Korrosionsschutzschichten, Lackschichten oder/und lackähnlichen Polymer-haltigen Schichten mindestens ein teilhydrolysiertes oder/und nicht hydrolysiertes Silan enthalten, insbesondere bei einem Gehalt an Silan von mehr als 100 g/L, besonders bevorzugt bei einem Gehalt an Silan von mehr als 1000 g/L.

Hierbei kann die Flüssigkeit, Lösung bzw. Suspension für mindestens eine der Korrosionsschutzschichten, Lackschichten oder/und lackähnlichen Polymer-haltigen Schichten jeweils mindestens ein Acyloxysilan, ein Alkylsilan, ein Aminosilan, ein Bis-Silyl-Silan, ein Epoxysilan, ein Fluoroalkylsilan, ein Glycidoxysilan, ein Isocyanato-Silan, ein Mercapto-Silan, ein (Meth)acrylato-Silan, ein Mono-Silyl-Silan, ein Multi-Silyl-Silan, ein Schwefel enthaltendes Silan, ein Ureidosilan, ein Vinylsilan oder/und mindestens ein entsprechendes Siloxan enthalten.

Bei dem erfindungsgemäßen Verfahren kann der Flüssigkeit, Lösung bzw. Suspension für mindestens eine der Korrosionsschutzschichten, Lackschichten oder/und lackähnlichen Polymer-haltigen Schichten als anorganische Verbindung in Partikelform ein feinverteiltes Pulver, eine Dispersion oder eine Suspension wie z.B. ein Carbonat, Oxid, Silicat oder Sulfat zugesetzt werden, insbesondere kolloidale oder amorphe Partikel.

Hierbei können der Flüssigkeit, Lösung bzw. Suspension für mindestens eine der Korrosionsschutzschichten, Lackschichten oder/und lackähnlichen Polymer-haltigen Schichten als anorganische Verbindung in Partikelform Partikel mit einer mittleren Partikelgröße im Bereich von 4 nm bis 150 nm zugesetzt werden, insbesondere im Bereich von 10 bis 120 nm. Die mittlere Größe der elektrisch leitenden Partikel eines Schweißprimers kann im Bereich von 0,02 bis 15 µm liegen.

Hierbei können der Flüssigkeit, Lösung bzw. Suspension für mindestens eine der Korrosionsschutzschichten, Lackschichten oder/und lackähnlichen Polymer-haltigen Schichten als anorganische Verbindung in Partikelform Partikel auf Basis von mindestens einer Verbindung des Aluminiums, Bariums, Cers, Kalziums, Lanthans, Siliciums, Titans, Yttriums, Zinks oder/und Zirkoniums zugesetzt werden.

Hierbei können der Flüssigkeit, Lösung bzw. Suspension für mindestens eine der Korrosionsschutzschichten, Lackschichten oder/und lackähnlichen

Polymer-haltigen Schichten 0,1 bis 300 g/L, bevorzugt 0,2 bis 60 g/L, der mindestens einen anorganischen Verbindung in Partikelform enthalten.

Bei dem erfindungsgemäßen Verfahren kann die Flüssigkeit, Lösung bzw. Suspension für mindestens eine der Korrosionsschutzschichten, Lackschichten oder/und lackähnlichen Polymer-haltigen Schichten als organisches Lösemittel für die organischen Polymere mindestens einen wassermischbaren oder/und wasserlöslichen Alkohol, einen Glykolether bzw. ein Pyrrolidon wie z.B. N-Methylpyrrolidon oder/und Wasser verwendet werden, im Falle der Verwendung eines Lösemittelgemisches insbesondere eine Mischung aus mindestens einem langkettigen Alkohol, wie z.B. Propylenglykol, ein Esteralkohol, ein Glykolether oder/und Butandiol mit Wasser, vorzugsweise jedoch nur Wasser ohne organisches Lösemittel.

Bei dem erfindungsgemäßen Verfahren kann die Flüssigkeit, Lösung bzw. Suspension für mindestens eine der Korrosionsschutzschichten, Lackschichten oder/und lackähnlichen Polymer-haltigen Schichten einen Gehalt an organischem Lösemittel im Bereich von 0,1 bis 10 Gew.-% enthalten.

Bei dem erfindungsgemäßen Verfahren kann die Flüssigkeit, Lösung bzw. Suspension für mindestens eine der Korrosionsschutzschichten, Lackschichten oder/und lackähnlichen Polymer-haltigen Schichten als Gleitmittel mindestens ein Wachs ausgewählt aus der Gruppe der Paraffine, Polyethylene und Polypropylene enthalten, insbesondere ein oxidiertes Wachs. Der Gehalt an Wachsen in einer Schicht liegt vorzugsweise im Bereich von 0,1 bis 20 Gew.-%.

Hierbei kann die Flüssigkeit, Lösung bzw. Suspension für mindestens eine der Korrosionsschutzschichten, Lackschichten oder/und lackähnlichen Polymer-haltigen Schichten ein Wachs als Gleitmittel enthalten, dessen Schmelzpunkt im Bereich von 40 bis 160 °C liegt, vorzugsweise 0,1 bis 100 g/L, besonders bevorzugt 20 bis 40 g/L bzw. 0,1 bis 10 g/L, ganz besonders bevorzugt 0,4 bis 6 g/L, beispielsweise ein kristallines Polyethylenwachs. Bei dem erfindungsgemäßen Verfahren kann die Flüssigkeit, Lösung bzw. Suspension für mindestens eine der Korrosionsschutzschichten, Lackschichten oder/und lackähnlichen Polymer-haltigen Schichten mindestens eine Seltenerdelement-Verbindung enthalten, insbesondere mindestens eine Verbindung ausgewählt aus der Gruppe aus Chlorid, Nitrat, Sulfat, Sulfamat sowie Komplexen z.B. mit einem Halogen oder mit einer Aminocarboxylsäure, insbesondere Komplexen mit EDTA, NTA oder HEDTA, wobei auch Scandium, Yttrium und Lanthan als Seltenerdelemente angesehen werden.

Hierbei kann die Flüssigkeit, Lösung bzw. Suspension für mindestens eine der Korrosionsschutzschichten oder/und lackähnlichen Polymer-haltigen Schichten eine Seltenerdelement-Verbindung von oder/und mit Cer enthalten, insbesondere in einer Mischung mit anderen Seltenerdelementen, z.B. mindestens teilweise auf der Basis von Mischmetall. Der Gehalt an Cer-Verbindungen in einer Schicht liegt vorzugsweise im Bereich von 0,1 bis 99 Gew.-%, besonders bevorzugt im Bereich von 25 bis 95 Gew.-%. Vorzugsweise wird die mindestens eine Seltenerdelement-Verbindung in der wässerigen Lösung in einem Gehalt von 1 bis 80 g/L zusammen mit einem Gehalt im Bereich von mindestens 10 mg/L Chlorid, mit einem Gehalt an Peroxid im Bereich von 1 bis 50 g/L berechnet als H₂O₂ und mit einem Gehalt an mindestens einem Kation ausgewählt aus der 5. oder 6. Hauptgruppe des Periodensystems der Elemente, insbesondere an Wismutionen, im Bereich von 0,001 bis 1 g/L eingesetzt. Vorzugsweise beträgt der Gehalt der mindestens einen Seltenerdelement-Verbindung in der wässerigen Lösung 5 bis 25 g/L zusammen mit einem Gehalt im Bereich von maximal 500 mg/L Chlorid, mit einem Gehalt an Peroxid im Bereich von 5 bis 25 g/L berechnet als H₂O₂ und mit einem Gehalt an mindestens einem Kation ausgewählt aus der 5. oder 6. Hauptgruppe des Periodensystems der Elemente, insbesondere an Wismutionen, im Bereich von 0,01 bis 0,3 g/L.

Bei dem erfindungsgemäßen Verfahren kann die Flüssigkeit, Lösung bzw. Suspension für mindestens eine der Korrosionsschutzschichten, Lackschichten oder/und lackähnlichen Polymer-haltigen Schichten mindestens ein Oxidationsmittel, insbesondere ein Peroxid, mindestens einen Beschleuniger oder/und mindestens einen Katalysator, vorzugsweise eine Verbindung bzw. Ionen von Bi, Cu oder/und Zn, enthalten.

Bei dem erfindungsgemäßen Verfahren kann die Flüssigkeit, Lösung bzw. Suspension für mindestens eine der Korrosionsschutzschichten, Lackschichten oder/und lackähnlichen Polymer-haltigen Schichten mindestens eine Verbindung ausgewählt aus der Gruppe der Mono-, Bis- und Multi-Silanen enthalten, insbesondere:
- Mono-Silane der allgemeinen Formel SiXₘY₄₋ₘ mit m = 1 bis 3, vorzugsweise m = 2 bis 3,
   mit X = Alkoxy, insbesondere Methoxy, Ethoxy oder/und Propoxy, und mit Y als einer funktionellen organischen Gruppe ausgewählt aus der Gruppe von Acyloxy, Alkyl, Acrylat, Amino, Epoxy, Fluoroalkyl, Glycidoxy, Harnstoff, Isocyanat, Mercapto, Methacrylat oder/und Vinyl bzw. deren Derivate,
- Bis-Silane der allgemeinen Formel Y₃₋ₚXₚ-Si-Z-Si-XₙY₃₋ₙ mit p und n = 1 bis 3 gleich oder verschieden,
   mit X = Alkoxy, insbesondere Methoxy, Ethoxy oder/und Propoxy, mit Y als funktionellen organischen Gruppen ausgewählt aus der Gruppe von Acyloxy, Alkyl, Acrylat, Amino, Epoxy, Fluoroalkyl, Glycidoxy, Harnstoff, Isocyanat, Mercapto, Methacrylat und Vinyl bzw. deren Derivate,
   mit Z ausgewählt aus der Gruppe von CₙH₂ₙ mit n = 2 bis 20 jeweils verzweigt oder unverzweigt, von einfach ungesättigte Alkylketten der allgemeinen Formel CₙH₂ₙ₋₂ mit n = 2 bis 20 jeweils verzweigt oder unverzweigt, von zweifach oder/und mehrfach ungesättigten Alkyl-Verbindungen der allgemeinen Formeln CₙH₂ₙ₋₄ mit n = 4 bis 20 jeweils verzweigt oder unverzweigt, CₙH₂ₙ₋₆ mit n = 6 bis 20 jeweils verzweigt oder unverzweigt bzw. CₙH₂ₙ₋₈ mit n = 8 bis 20 jeweils verzweigt oder
   unverzweigt, von Ketonen, Monoalkylaminen, NH und Schwefel Sq mit q = 1 bis 20,
- Multi-Silane der allgemeinen Formel Y₃₋ₚXₚ-Si-Z'-Si-XₙY₃₋ₙ mit p und n = 1 bis 3 gleich oder verschieden,
   mit X = Alkoxy, insbesondere Methoxy, Ethoxy oder/und Propoxy,
   mit Y als funktionellen organischen Gruppen ausgewählt aus der Gruppe von Acyloxy, Alkyl, Acrylat, Amino, Epoxy, Fluoroalkyl, Glycidoxy, Harnstoff, Isocyanat, Mercapto, Methacrylat, Mono/Bis/Multi-Silyl und Vinyl bzw. deren Derivate
   und mit Z' = N-Si-XᵣY₃₋ᵣ mit r = 1 bis 3 bzw. Schwefel Sq mit q = 1 bis 20,
- Multi-Silane der allgemeinen Formel Y₃₋ₚXₚ-S i-Z"-Si-XₙY₃₋ₙ mit p und n = 1 bis 3 gleich oder verschieden,
   mit X = Alkoxy, insbesondere Methoxy, Ethoxy oder/und Propoxy, mit Y als funktionellen organischen Gruppen ausgewählt aus der Gruppe von Acyloxy, Alkyl, Acrylat, Amino, Epoxy, Fluoroalkyl, Glycidoxy, Harnstoff, Isocyanat, Mercapto, Methacrylat, Mono/Bis/Multi-Silyl und Vinyl bzw. deren Derivate
   und mit Z" = - R - C [(Si Xₛ Y₃₋ₛ)(Si Xₜ Y₃₋ₜ)] - R' - bzw. Schwefel S_{q} mit q = 1 bis 20,
   mit s und t = 1 bis 3 gleich oder verschieden,
   mit R und R' gleich oder verschieden ausgewählt aus der Gruppe von CₙH₂ₙ mit n = 2 bis 20 jeweils verzweigt oder unverzweigt, von einfach ungesättigte Alkylketten der allgemeinen Formel CₙH₂ₙ₋₂ mit n = 2 bis 20 jeweils verzweigt oder unverzweigt, von zweifach oder/und mehrfach ungesättigten Alkyl-Verbindungen der allgemeinen Formeln CₙH₂ₙ₋₄ mit n = 4 bis 20 jeweils verzweigt oder unverzweigt, CₙH₂ₙ₋₆ mit n = 6 bis 20 jeweils verzweigt oder unverzweigt bzw. CₙH₂ₙ₋₈ mit n = 8 bis 20 jeweils verzweigt oder unverzweigt, von Ketonen, Monoalkylaminen und NH,
   wobei die Silane jeweils hydrolysiert, teilhydrolysiert oder/und nicht hydrolysiert in einer Lösung, Emulsion oder/und Suspension vorliegen können.

Hierbei kann der Gesamtgehalt an Silanen bzw. Siloxanen je Schicht vorzugsweise einerseits im Bereich von 0,01 bis 20 Gew.-%, andererseits vorzugsweise im Bereich von 60 bis 99,9 Gew.-% liegen.

Bei dem erfindungsgemäßen Verfahren kann die Flüssigkeit, Lösung bzw. Suspension für mindestens eine der Korrosionsschutzschichten mindestens eine Verbindung des Typs XYZ, X*Y*Z* oder/und X*Y*Z*Y*X* enthalten,
wobei Y eine organische Gruppe mit 2 bis 50 C-Atomen ist, wobei X und Z gleich oder verschieden eine OH-, SH-, NH₂-, NHR'-, CN-, CH=CH₂-, OCN-, CONHOH-, COOR'-, Acrylsäureamid-, Epoxy-, CH₂=CR"-COO-, COOH-, HSO₃-, HSO₄-, (OH)₂PO-, (OH)₂PO₂-, (OH)(OR')PO-, (OH)(OR')PO₂-, SiH₃- oder/und eine Si(OH)₃-Gruppe sind, wobei R' eine Alkylgruppe mit 1 bis 4 C-Atomen ist, wobei R" ein H-Atom oder eine Alkylgruppe mit 1 bis 4 C-Atomen ist und wobei die Gruppen X und Z jeweils an die Gruppe Y in ihrer Endstellung gebunden sind,
wobei Y* eine organische Gruppe mit 1 bis 30 C-Atomen ist, wobei X* und Z* gleich oder verschieden eine OH-, SH-, NH₂-, NHR'-, CN-, CH=CH₂-, OCN-, CONHOH-, COOR'-, Acrylsäureamid-, Epoxy-, CH₂=CR"-COO-, COOH-, HSO₃-, HSO₄-, (OH)₂PO-, (OH)₂PO₂-, (OH)(OR')PO-, (OH)(OR')PO₂-, SiH₃-, Si(OH)₃, >N-CH₂-PO(OH)₂- oder/und eine -N-[CH₂-PO(OH)₂]₂-Gruppe sind,
wobei R' eine Alkylgruppe mit 1 bis 4 C-Atomen ist und wobei R" ein H-Atom oder eine Alkylgruppe mit 1 bis 4 C-Atomen ist.

Hierbei kann die Flüssigkeit, Lösung bzw. Suspension für mindestens eine der Korrosionsschutzschichten mindestens eine Verbindung des Typs XYZ enthalten, wobei X eine COOH-, HSO₃-, HSO₄-, (OH)₂PO-, (OH)₂PO₂-, (OH)(OR')PO- oder (OH)(OR')PO₂-Gruppe ist, wobei Y eine organische Gruppe R ist, die 2 bis 50 C-Atome enthält, von denen mindestens 60 % dieser C-Atome als CH₂-Gruppen vorliegen,
wobei Z eine OH-, SH-, NH₂-, NHR'-, CN-, CH=CH₂-, OCN-, Epoxy-, CH=CR"-COOH-, Acrylsäureamid-, COOH-, (OH)₂PO-, (OH)₂PO₂-, (OH)(OR')PO- oder (OH)(OR')PO₂-Gruppe ist,
wobei R' eine Alkylgruppe mit 1 bis 4 C-Atomen ist
und wobei R" ein H-Atom oder eine Alkylgruppe mit 1 bis 4 C-Atomen ist, vorzugsweise insgesamt 0,01 bis 10 g/L, vorzugsweise 0,05 bis 5 g/L, ganz besonders bevorzugt 0,08 bis 2 g/L.

Hierbei kann die Verbindung des Typs XYZ, X*Y*Z* oder/und X*Y*Z*Y*X* geeignet sein, selbst anordnende Moleküle auszubilden, die eine Schicht dieser selbst anordnenden Moleküle insbesondere auf der metallischen Oberfläche formen können, vorzugsweise eine monomolekulare Schicht.

Hierbei kann die Flüssigkeit, Lösung bzw. Suspension für mindestens eine der Korrosionsschutzschichten mindestens eine der folgenden Verbindungen des Typs XYZ, X*Y*Z* oder/und X*Y*Z*Y*X* enthalten:
1-Phosphonsäure-12-mercaptododecan,
1 -Phosphonsäure-1 2-(N-ethylamino)dodecan,
1-Phosphonsäure-12-dodecen,
p-Xylylen-diphosphonsäure,
1,10-Decandiphosphonsäure,
1,12-Dodecandiphosphonsäure,
1,14-Tetradecandiphosphonsäure,
1-Phosphorsäure-12-hydroxydodecan,
1-Phosphorsäure-12-(N-ethylamino)dodecan,
1-Phosphorsäure-12-dodecen,
1-Phosphorsäure-12-mercaptododecan,
1,10-Decandiphosphorsäure,
1,12-Dodecandiphosphorsäure,
1,14-Tetradecandiphosphorsäure,
p,p'-Biphenyldiphosphorsäure,
1 -Phosphorsäure-1 2-Acryloyldodecan,
1,8-Octandiphosphonsäure,
1,6-Hexandiphosphonsäure,
1,4-Butandiphosphonsäure,
1,8-Octandiphosphorsäure,
1,6-Hexandiphosphorsäure,
1,4-Butandiphosphorsäure,
Aminotrimethylenphosphonsäure,
Ethylendiamintetramethylenphosphonsäure,
Hexamethylendiamintetramethylenphosphonsäure,
Diethylentriaminpentamethylenphosphonsäure,
2-Phosphonbutan-1,2,4-tricarboxylsäure.

Der Gehalt an Verbindungen dieser Typen in einer Schicht liegt vorzugsweise im Bereich von 50 bis 100 Gew.-%.

Bei dem erfindungsgemäßen Verfahren kann mindestens eine der Flüssigkeiten, Lösungen bzw. Suspensionen für mindestens eine der Korrosionsschutzschichten oder/und lackähnlichen Polymer-haltigen Schichten Phosphat und Zink, ggf. auch Mangan, Nickel oder/und Kupfer, enthalten. Der Gehalt an Phosphaten in einer Schicht liegt vorzugsweise im Bereich von 8 bis 100 Gew.-%, besonders bevorzugt im Bereich von 20 bis 95 Gew.-%, ganz besonders bevorzugt im Bereich von 60 bis 90 Gew.-%.

Bei dem erfindungsgemäßen Verfahren kann mindestens eine der Flüssigkeiten, Lösungen bzw. Suspensionen für mindestens eine der Korrosionsschutzschichten oder/und lackähnlichen Polymer-haltigen Schichten 0,1 bis kleiner 100 g/L Zinkionen, 0,4 bis 80 g/L Manganionen, bis zu 12 g/L Nickelionen, bis zu 100 g/L Peroxid berechnet als H₂O₂ und 1 bis 500 g/L Phosphationen, gerechnet als P₂O₅ sowie vorzugsweise 0,2 bis kleiner 50 g/L Zinkionen, 0,5 bis 45 g/L Manganionen und 2 bis 300 g/L Phosphationen, gerechnet als P₂O₅, enthalten.

Bei dem erfindungsgemäßen Verfahren kann mindestens eine der Flüssigkeiten, Lösungen bzw. Suspensionen für mindestens eine der Korrosionsschutzschichten oder/und lackähnlichen Polymer-haltigen Schichten Phosphat enthalten, vorzugsweise auf Basis Zn oder ZnMn, ggf. mit Nickelgehalt.

Bei dem erfindungsgemäßen Verfahren kann mindestens eine der Flüssigkeiten, Lösungen bzw. Suspensionen für mindestens eine der Korrosionsschutzschichten, Lackschichten oder/und lackähnlichen Polymer-haltigen Schichten Phosphat, Fluorid, Tetrafluorid oder/und Hexafluorid enthalten. Vorzugsweise werden jedoch Phosphonat(e), die sich wenigstens teilweise als selbst anordnende Moleküle auf der metallischen Oberfläche ausrichten, und Fluoridkomplexe mit getrennten Lösungen in weitgehend getrennten Schichten ausgebildet.

Bei dem erfindungsgemäßen Verfahren kann mindestens eine der Flüssigkeiten, Lösungen bzw. Suspensionen für mindestens eine der Korrosionsschutzschichten, Lackschichten oder/und lackähnlichen Polymer-haltigen Schichten Phosphonat, Tetrafluorid oder/und Hexafluorid enthalten.

Bei dem erfindungsgemäßen Verfahren kann mindestens eine der Flüssigkeiten, Lösungen bzw. Suspensionen für mindestens eine der Korrosionsschutzschichten, Lackschichten oder/und lackähnlichen Polymer-haltigen Schichten einen organischen Filmbildner, Fluorid, Tetrafluorid, Hexafluorid oder/und mindestens eine anorganische Verbindung in Partikelform und ggf. mindestens ein Silan enthalten.

Bei dem erfindungsgemäßen Verfahren kann mindestens eine der Flüssigkeiten, Lösungen bzw. Suspensionen für mindestens eine der Korrosionsschutzschichten, Lackschichten oder/und lackähnlichen Polymer-haltigen Schichten einen Zusatzstoff ausgewählt aus der Gruppe von organischen Bindemitteln, Bioziden, Entschäumern, Korrosionsinhibitoren, Haftvermittlern, Netzmitteln und Polymerisationsinhibitoren enthalten.

Bei dem erfindungsgemäßen Verfahren kann mindestens eine der Flüssigkeiten, Lösungen bzw. Suspensionen für mindestens eine der Korrosionsschutzschichten, Lackschichten oder/und lackähnlichen Polymer-haltigen Schichten mindestens einen Füllstoff oder/und ein Pigment, insbesondere mindestens ein elektrisch leitfähiges Pigment, ausgewählt aus der Gruppe von Farbstoffen, Farbpigmenten, Graphit, Graphit-Glimmerpigmenten, Oxiden wie Eisenoxiden, Molybdänverbindungen, Phosphaten, Phosphiden wie Eisenphosphiden, Ruß und Zink enthalten. Der Gehalt an derartigen Verbindungen in einer Schicht liegt vorzugsweise im Bereich von 0,1 bis 60 Gew.-%, besonders bevorzugt im Bereich von 5 bis 35 Gew.-%.

Bei dem erfindungsgemäßen Verfahren kann vor dem Auftrag einer Korrosionsschutzschicht, Lackschicht oder lackähnlichen Polymer-haltigen Schicht eine aktivierende Behandlung aufgebracht werden, vorzugsweise eine Aktivierung auf Basis von Titan.

Bei dem erfindungsgemäßen Verfahren kann nach dem Auftrag einer Korrosionsschutzschicht, Lackschicht oder lackähnlichen Polymer-haltigen Schicht eine Nachspülung oder/und Passivierung aufgebracht werden, vorzugsweise eine Nachspüllösung auf Basis von Seltenerdverbindungen, komplexen Fluoriden, Silanen, Titanverbindungen oder/und Zirkoniumverbindungen bzw. eine Passivierungslösung auf Basis von Seltenerdverbindungen, komplexen Fluoriden, Silanen, Titanverbindungen oder/und Zirkoniumverbindungen.

Bei dem erfindungsgemäßen Verfahren kann mindestens eine der Flüssigkeiten, Lösungen bzw. Suspensionen für mindestens eine der Korrosionsschutzschichten, Lackschichten oder/und lackähnlichen Polymer-haltigen Schichten einen organischen Filmbildner enthalten, der nach dem Aufbringen auf dem metallischen Substrat durch Wärme ausgehärtet wird.

Bei dem erfindungsgemäßen Verfahren kann mindestens eine der Korrosionsschutzschichten, Lackschichten oder/und lackähnlichen Polymer-haltigen Schichten vor dem Kleben, Schweißen oder/und Umformen nur teilweise ausgehärtet werden und erst nach dem Kleben, Schweißen oder/und Umformen gänzlich ausgehärtet werden.

Bei dem erfindungsgemäßen Verfahren kann die Flüssigkeit, Lösung bzw. Suspension für mindestens eine der Korrosionsschutzschichten, Lackschichten oder/und lackähnlichen Polymer-haltigen Schichten einen pH-Wert im Bereich von 0,5 bis 12 aufweisen, vorzugsweise im Bereich von 1 bis 11, besonders bevorzugt im Bereich von 2 bis 10.

Bei dem erfindungsgemäßen Verfahren kann die Flüssigkeit, Lösung bzw. Suspension für mindestens eine der Korrosionsschutzschichten, Lackschichten oder/und lackähnlichen Polymer-haltigen Schichten bei einer Temperatur im Bereich von 5 bis 95 °C, vorzugsweise im Bereich von 5 bis 50 °C, auf die jeweilige Oberfläche aufgebracht werden, ganz besonders bevorzugt im Bereich von 10 bis 40 °C.

Hierbei kann das Substrat oder/und die jeweilige Oberfläche bei der Applikation der Korrosionsschutzschicht(en) auf Temperaturen im Bereich von 5 bis 120 °C gehalten werden. Das kann bei der ersten Beschichtung die metallische Oberfläche sein. Die erste bzw. zweite Korrosionsschutzschicht bzw. der Base Coat kann vorzugsweise in einem Temperaturbereich von 10 bis 50 °C aufgebracht werden.

Hierbei kann die beschichtete metallische Oberfläche bei einer Temperatur im Bereich von 20 bis 400 °C PMT (peak-metal-temperature) getrocknet werden. Die erste und zweite Korrosionsschutzschicht kann vorzugsweise in einem Temperaturbereich von 15 bis 100 °C aufgebracht werden, der Base Coat insbesondere in einem Temperaturbereich von 15 bis 270 °C.

Bei dem erfindungsgemäßen Verfahren können die beschichteten Bänder zerschnitten oder zu einem Coil aufgewickelt werden, ggf. nach einer Abkühlung auf eine Temperatur im Bereich von 10 bis 70 °C.

Verfahren nach einem der vorstehenden Ansprüche, dadurch gekennzeichnet, daß die zerteilten Bänder im Randbereich nach dem Pressen, Schneiden oder/und Stanzen mit einem vorübergehend aufgebrachten, wieder zu entfernenden oder mit einem permanent schützenden Überzug beschichtet werden, z.B. mindestens eine Beschichtung auf Basis von Trockenschmierstoff, Phosphat, Hexafluorid, lackähnlicher Beschichtung oder/und Lack.

Bei dem erfindungsgemäßen Verfahren kann die Flüssigkeit, Lösung bzw. Suspension für mindestens eine der Korrosionsschutzschichten, Lackschichten oder/und lackähnlichen Polymer-haltigen Schichten durch Aufwalzen, Fluten, Aufrakeln, Spritzen, Sprühen, Streichen oder Tauchen und ggf. durch nachfolgendes Abquetschen mit einer Rolle aufgetragen werden.

Bei dem erfindungsgemäßen Verfahren kann die mit der Flüssigkeit, Lösung bzw. Suspension für mindestens eine der Korrosionsschutzschichten, Lackschichten oder/und lackähnlichen Polymer-haltigen Schichten jeweils aufgebrachte Beschichtung auf ein Schichtgewicht im Bereich von 0,0005 mg/m² bis 150 g/m² eingestellt werden, vorzugsweise im Bereich von 0,0008 mg/m² bis 30 g/m², besonders bevorzugt im Bereich von 0,001 mg/m² bis 10 g/m², insbesonders im Bereich von 1 bis 6 g/m².

Bei dem erfindungsgemäßen Verfahren kann auf den teilweise oder gänzlich ausgehärteten Film jeweils mindestens eine Beschichtung aus Lack bzw. aus einer lackähnlichen, Polymer-haltigen Beschichtung aufgebracht werden, wobei die erste Lackschicht bzw. lackähnliche Polymer-haltige Schicht eine Beschichtung im wesentlichen aus einem Primer, einem dünn - im Bereich von 0,1 bis 10 µm, vorzugsweise im Bereich von 0,15 bis 6 µm, besonders bevorzugt im Bereich von 0,2 bis 4 µm - organisch aufgetragenem, Polymere enthaltenden Material (sog. Permanent Coating), einem Reaktionsprimer, einem Shop Primer oder einem Wash Primer bestehen kann. Als Reaktionsprimer wird im Sinne dieser Anmeldung ein Primer wie z.B. ein Coil-Coating-Primer, ein Primer als Ersatz des kathodischen Tauchlacks, ein Schweißprimer verstanden.

Bei dem erfindungsgemäßen Verfahren kann auf das zumindest teilweise lackierte bzw. lackähnlich mit einer Polymer-haltigen Schicht beschichtete Band oder auf den zumindest teilweise lackierten bzw. lackähnlich mit einer Polymer-haltigen Schicht beschichteten Bandabschnitt jeweils mindestens eine Beschichtung aus Lack, einem Gemisch aus oder mit Polymeren, Farbe, Klebstoff oder/und Klebstoffträger aufgebracht werden.

Bei dem erfindungsgemäßen Verfahren kann die saubere oder gereinigte und ggf. aktivierte metallische Oberfläche mit der Flüssigkeit, Lösung bzw. Suspension für eine der Korrosionsschutzschichten in Kontakt gebracht und mindestens ein ggf. auch Partikel enthaltender Film auf der metallischen Oberfläche ausgebildet werden, der anschließend getrocknet wird und ggf. zusätzlich ausgehärtet wird, wobei der getrocknete und ggf. auch ausgehärtete Film jeweils eine Schichtdicke im Bereich von 0,01 bis 100 µm aufweisen kann, insbesondere einen Film mit einer Schichtdicke im Bereich von 5 bis zu 50 µm, besonders bevorzugt im Bereich von 8 bis zu 30 µm. Als Partikel können Pigmente, insbesondere Farbpigmente oder Weißpigmente, Metallpartikel wie z.B. Zinkpartikel, Füllstoffe aller Art wie z.B. Kreide, Oxide wie Aluminiumoxid, Talkum oder Silicate, Kohlenstoffpartikel, Nanopartikel eingesetzt werden.

Hierbei kann mindestens eine Lackschicht als Grundierung oder eine lackähnliche Polymer-haltige Schicht als Pretreatment-Primer, Primer, Primer als Ersatz des kathodischen Tauchlacks, Gleitprimer, Reaktionsprimer, Schweißprimer oder/und Wash Primer, ggf. anstelle einer Grundierung, aufgebracht werden. Der Gesamtlackaufbau kann u.U. bis zu 300 µm, meist bis zu 120 µm, oft bis zu 90 µm, gelegentlich bis zu nur 70 µm betragen, wenn mehr als eine Lack- oder/und lackähnliche Schicht verwendet wird.

Hierbei kann mindestens eine der Lackschichten oder/und lackähnlichen Polymer-haltigen Schichten durch Wärme ausgehärtet werden.

Bei dem erfindungsgemäßen Verfahren können die beschichteten Bänder oder Bandabschnitte umgeformt, lackiert, mit Polymeren wie z.B. PVC beschichtet, bedruckt, beklebt, heißgelötet, geschweißt oder/und durch Clinchen oder andere Fügetechniken miteinander oder mit anderen Elementen verbunden werden.

Bei der Beschichtung von metallischem Band kann sich nachfolgend genannter Fertigungsablauf ergeben, wobei hier beispielhaft die Abfolge für zu verzinkende Stahlbleche angegeben wird. Dieser Fertigungsablauf kann - ggf. unter Weglassen des Beschichtens mit einem Metall bzw. mit einer Legierung wie beim Verzinken - auch auf andere metallische Substrate übertragen werden und gleichartig eingesetzt werden.

**Tabelle 1: Fertigungsablaufvarianten bei der Beschichtung von zu verzinkendem Stahlblech**

| |
|---|
| 1. Elektrolytische Reinigung mit einem starken alkalischen Reiniger, um die Oberfläche gänzlich von organischen Verunreinigungen wie z.B. Fett und Öl sowie von sonstigem Schmutz zu säubern. |
| |
| 2. Spülen mit Wasser in einer Spülkaskade, letzte Zone mit voll entsalztem Wasser. |
| |
| 3. Nur im Falle der elektrolytischen Verzinkung: Saure Dekapierung: Mit schwefelsaurem Wasser von pH-Wert 1 bis 2 kurz besprühen. |
| |
| 4. Verzinkung: Feuerverzinkung durch Eintauchen in Schmelzbad oder elektrolytische Verzinkung durch Eintauchen in ein Bad mit einer wässerigen Zinklösung: Beschichten mit technisch reinem Zink, das ggf. gewisse Verunreinigungen insbesonders von Aluminium und Blei enthält (HDG); Beschichten mit einer Eisen- oder Aluminium-reicheren Zinklegierung wie Galvanneal^{®}, Galfan^{®} oder Galvalume^{®}. |
| |
| 5. Bei elektrolytischer Verzinkung: Nach dem Abscheiden der Verzinkungsschicht saures Beizen zum Entfernen von Unebenheiten der Verzinkungsschicht. |
| |
| 6. Insbesondere wenn Phosphatschichten aufgebracht werden sollen: Beschichten mit einer Aktivierungslösung insbesondere auf Basis von Titan. |
| |
| 7. Ggf. Aufbringen einer ersten Korrosionsschutzschicht, z.B. als Vorphosphatieren. |
| 8. Ggf. Spülen mit Wasser oder ggf. Nachspüllösung; nach dem Vorphosphatieren nur Wasser. |
| |
| 9. Ggf. Aufbringen einer zweiten Korrosionsschutzschicht, z.B. einer alkalischen Fe-Co-Oxidschicht. |
| |
| 10. Ggf. Spülen mit Wasser. |
| |
| 11. Ggf. Aufbringen einer dritten Korrosionsschutzschicht, z.B. auf Basis von Hexafluorid. |
| |
| 12. Ggf. Spülen mit Wasser. |
| |
| 13. Ggf. Aufbringen einer ersten lackähnlichen Beschichtung. |
| |
| 14. Ggf. Erhitzen auf Temperaturen im Bereich von 50 bis 160 °C zum thermischen Vernetzen der lackähnlichen Beschichtung. |
| |
| 15. Ggf. Aufbringen einer zweiten lackähnlichen Beschichtung, der sog. Lackzwischenschicht. |
| |
| 16. Ggf. Erhitzen auf Temperaturen im Bereich von 50 bis 160 °C zum thermischen Vernetzen der zweiten lackähnlichen Beschichtung. |
| |
| 17. Ggf. Aufbringen einer ersten Lackschicht als Füller oder Top Coat, ggf. modifiziert mit einem Gehalt an Nanopartikeln. |
| |
| 18. Ggf. Aufbringen einer zweiten Lackschicht als Füller oder Top Coat, ggf. modifiziert mit einem Gehalt an Nanopartikeln. |
| |
| 19. Ggf. Aufbringen einer dritten Lackschicht als Top Coat, ggf. modifiziert mit einem Gehalt an Nanopartikeln. |
| |
| 20. Ggf. Erhitzen auf Temperaturen im Bereich von 50 bis 160 °C zum thermischen Vernetzen (Aushärten) der Lackschicht(en). |

In der folgenden Tabelle werden die o.g. Verfahrensschritte, beispielhaft für zu verzinkendes Stahlblech, den möglichen Fertigungslinien, den spezifischen Abfolgen und hierbei ggf. einzusetzenden Mitteln zugeordnet. Die Zuordnung bestimmter Verfahrensschritte zu den Fertigungslinie ist jedoch jeweils nur eine von mehreren Möglichkeiten. Fertigungslinie Zn = Verzinkungslinie. Fertigungslinie CC = Coil-Coating. Fertigungslinie Karosserie-Teilefertigung oder Karosseriefertigung oder entsprechende Fertigungslinie im Flugzeugbau oder Raumfahrtindustrie = Kar. Z = Zahl der Verfahrensschritte ohne alle möglichen Zwischenschritte, die ggf. notwendig sind wie z.B. Beizen, Reinigen, Aktivieren, Spülen oder Nachspülen bzw. Trocknen. Diese Verfahrensvarianten gelten weitestgehend in gleicher Weise auch für andere metallische Materialien, ggf. ohne Verzinken.

**Tabellen 2A-J: Varianten der Zuordnung von Verfahrensschritten und Fertigungslinien bei zu verzinkendem Stahlblech, wobei Zwischenschritte weggelassen wurden**

| **Varianten A** | | | |
|---|---|---|---|
| Linie | Z | Verfahrensschritt | Basis der wichtigsten Mittel |
| Zn | 1 | Verzinken | Zink, ZnFe, ZnAl |
| | 2 | Vorbehandlung, rinse oder no-rinse, ggf. danach Nachspülung | Chromat, Fe/Co/Ni-Oxid, freies Fluorid, Komplexfluorid, Phosphat, Phosphonat, Seltene Erden, Silan, Silicat oder/und Polymer |
| CC | 3 | ggf. mildalkalische Reinigung | |
| | 4 | chromhaltige oder chromfreie Vorbehandlung | Chromat, Fe/Co/Ni-Oxid, freies Fluorid, Komplexfluorid, Phosphat, Phosphonat, Seltene Erden, Silan, Silicat oder/und Polymer |
| | 5 | Base Coat | Coil-Coating-Primer, Gleit-oder Schweißprimer: thermisch härtend |
| CC oder Kar | 6 | ggf. Lackzwischenschicht | |
| | 7 | Farblack | |
| | 8 | Klarlack, ggf. zwei Schichten | |
| Kar | 9 | Schneiden, Pressen oder/und Stanzen | |
| | 10 | ggf. (weiteres) Umformen | |
| | 11 | ggf. Fügen wie z.B. Clinchen, Kleben | |
| | 12 | ggf. Klarlack | |

| **Varianten B** | | | |
|---|---|---|---|
| Linie | Z | Verfahrensschritt | wichtigste Mittel |
| Zn | 1 | Verzinken | Zink, ZnFe, ZnAl |
| | 2 | Vorbehandlung, rinse oder no-rinse, ggf. Nachspüllösung | Chromat, Fe/Co/Ni-Oxid, freies Fluorid, Komplexfluorid, Phosphat, Phosphonat, Seltene Erden, Silan, Silicat oder/und Polymer |
| CC | 3 | ggf. mildalkalische Reinigung | |
| | 4 | Base Coat, ggf. mit Vorbehand-lungseigenschaften | Coil-Coating-, Gleit- oder Schweißprimer: thermisch härtend; Chromat, freies Fluorid, Komplexfluorid, Phosphat, Phosphonat, Seltene Erden, Silan, Silicat, Korrosionsinhibitor, Pigment, Polymer oder/und Wachs |
| CC oder Kar | 5 | ggf. Lackzwischenschicht | |
| | 6 | Farblack | |
| | 7 | Klarlack, ggf. zwei Schichten | |
| Kar | 8 | Schneiden, Pressen oder/und Stanzen | |
| | 9 | ggf. (weiteres) Umformen | |
| | 10 | ggf. Fügen wie z.B. Clinchen, Kleben | |
| | 11 | ggf. Klarlack | |

| **Varianten C** | | | |
|---|---|---|---|
| Linie | Z | Verfahrensschritt | wichtigste Mittel |
| Zn | 1 | Verzinken | Zink, ZnFe, ZnAl |
| | 2 | Vorbehandlung, rinse oder no-rinse, ggf. Nachspüllösung | Chromat, Fe/Co/Ni-Oxid, freies Fluorid, Komplexfluorid, Phosphat, Phosphonat, Seltene Erden, Silan, Silicat oder/und Polymer |
| | 3 | Base Coat, ggf. mit Vorbehand-lungseigenschaften | Coil-Coating-, Gleit- oder Schweißprimer: thermisch härtend; Chromat, freies Fluorid, Komplexfluorid, Phosphat, Phosphonat, Seltene Erden, Silan, Silicat, Korrosionsinhibitor, Pigment, Polymer oder/und Wachs |
| Zn * | 4 | ggf. Lackzwischenschicht | |
| CC oder Kar | 5 | Farblack | |
| | 6 | Klarlack, ggf. zwei Schichten | |
| Kar | 7 | Schneiden, Pressen oder/und Stanzen | |
| | 8 | ggf. (weiteres) Umformen | |
| | 9 | ggf. Fügen wie z.B. Clinchen, Kleben | |
| | 10 | ggf. Klarlack | |

| **Varianten D** | | | |
|---|---|---|---|
| Linie | Z | Verfahrensschritt | wichtigste Mittel |
| Zn | 1 | Verzinken | Zink, ZnFe, ZnAl |
| | 2 | Vorbehandlung, rinse oder no-rinse, ggf. Nachspüllösung | Chromat, Fe/Co/Ni-Oxid, freies Fluorid, Komplexfluorid, Phosphat, Phosphonat, Seltene Erden, Silan, Silicat oder/und Polymer |
| Zn oder CC | 3 | Base Coat, ggf. mit Vorbehand-lungseigenschaften | Coil-Coating-, Gleit- oder Schweißprimer: thermisch härtend; Chromat, freies Fluorid, Komplexfluorid, Phosphat, Phosphonat, Seltene Erden, Silan, Silicat, Korrosionsinhibitor, Pigment, Polymer oder/und Wachs |
| CC oder Kar | 4 | ggf. Lackzwischenschicht | |
| | 5 | Farblack | |
| | 6 | Klarlack, ggf. zwei Schichten | |
| Kar | 7 | Schneiden, Pressen oder/und Stanzen | |
| | 8 | ggf. (weiteres) Umformen | |
| | 9 | ggf. Fügen wie z.B. Clinchen, Kleben | |
| | 10 | ggf. Klarlack | |

| **Varianten E** | | | |
|---|---|---|---|
| Linie | Z | Verfahrensschritt | wichtigste Mittel |
| Zn | 1 | Verzinken | Zink, ZnFe, ZnAl |
| | 2 | Base Coat mit Vorbehandlungs-eigenschaften | Coil-Coating-, Gleit- oder Schweißprimer: thermisch härtend; Chromat, freies Fluorid, Komplexfluorid, Phosphat, Phosphonat, Seltene Erden, Silan, Silicat, Korrosionsinhibitor, Pigment, Polymer oder/und Wachs |
| Zn * | 3 | ggf. Lackzwischenschicht | |
| CC oder Kar | 4 | Farblack | |
| | 5 | Klarlack, ggf. zwei Schichten | |
| Kar | 6 | Schneiden, Pressen oder/und Stanzen | |
| | 7 | ggf. (weiteres) Umformen | |
| | 8 | ggf. Fügen wie z.B. Clinchen, Kleben | |
| | 9 | ggf. Klarlack | |

| **Varianten F** | | | |
|---|---|---|---|
| Linie | Z | Verfahrensschritt | wichtigste Mittel |
| Zn | 1 | Verzinken | Zink, ZnFe, ZnAl |
| | 2 | Base Coat mit Vorbehandlungseigenschaften, bevorzugt UV-härtend | Coil-Coating-, Gleit- oder Schweißprimer: thermisch härtend; Chromat, freies Fluorid, Komplexfluorid, Phosphat, Phosphonat, Seltene Erden, Silan, Silicat, Korrosionsinhibitor, Pigment, Polymer oder/und Wachs |
| Zn * | 3 | ggf. Lackzwischenschicht | |
| CC oder Kar | 4 | Farblack | |
| | 5 | Klarlack | |
| Kar | 6 | Schneiden, Pressen oder/und Stanzen | |
| | 7 | ggf. (weiteres) Umformen | |
| | 8 | ggf. Fügen wie z.B. Clinchen, Kleben | |
| | 9 | ggf. Klarlack | |

| **Varianten G** | | | |
|---|---|---|---|
| Linie | Z | Verfahrensschritt | wichtigste Mittel |
| Zn | 1 | Verzinken | Zink, ZnFe, ZnAl |
| | 2 | Vorbehandlung, rinse oder no-rinse, ggf. Nachspüllösung | Chromat, Fe/Co/Ni-Oxid, freies Fluorid, Komplexfluorid, Phosphat, Phosphonat, Seltene Erden, Silan, Silicat oder/und Polymer |
| | 3 | Base Coat, ggf. auch mit Vorbehandlungseigenschaften | Coil-Coating-, Gleit- oder Schweißprimer: thermisch härtend; Chromat, freies Fluorid, Komplexfluorid, Phosphat, Phosphonat, Seltene Erden, Silan, Silicat, Korrosionsinhibitor, Pigment, Polymer oder/und Wachs |
| Zn * | 4 | ggf. Lackzwischenschicht | |
| Kar | 5 | Schneiden, Pressen oder/und Stanzen | |
| | 6 | ggf. (weiteres) Umformen | |
| | 7 | ggf. Fügen wie z.B. Clinchen, Kleben, Schweißen | |
| | 8 | Farblack | |
| | 9 | Klarlack, ggf. zwei Schichten | |

| **Varianten H** | | | |
|---|---|---|---|
| Linie | Z | Verfahrensschritt | wichtigste Mittel |
| Zn | 1 | Verzinken | Zink, ZnFe, ZnAl |
| | 2 | Base Coat mit Vorbehandlungseigenschaften | Coil-Coating-, Gleit- oder Schweißprimer: thermisch härtend; Chromat, freies Fluorid, Komplexfluorid, Phosphat, Phosphonat, Seltene Erden, Silan, Silicat, Korrosionsinhibitor, Pigment, Polymer oder/und Wachs |
| Zn * | 3 | ggf. Lackzwischenschicht | |
| Kar | 4 | Schneiden, Pressen oder/und Stanzen | |
| | 5 | ggf. (weiteres) Umformen | |
| | 6 | ggf. Fügen wie z.B. Clinchen, Kleben, Schweißen | |
| | 7 | Farblack | |
| | 8 | Klarlack, ggf. zwei Schichten | |

| **Varianten J** | | | |
|---|---|---|---|
| Linie | Z | Verfahrensschritt | wichtigste Mittel |
| Zn | 1 | Verzinken | Zink, ZnFe, ZnAl |
| | 2 | Base Coat mit Vorbehandlungseigenschaften | Coil-Coating-, Gleit- oder Schweißprimer: thermisch härtend; Chromat, freies Fluorid, Komplexfluorid, Phosphat, Phosphonat, Seltene Erden, Silan, Silicat, Korrosionsinhibitor, Pigment, Polymer oder/und Wachs |
| CC * | 3 | ggf. Lackzwischenschicht | |
| | 4 | Farblack | |
| Kar | 5 | Schneiden, Pressen oder/und Stanzen | |
| | 6 | ggf. (weiteres) Umformen | |
| | 7 | ggf. Fügen wie z.B. Clinchen, Kleben, Schweißen | |
| | 8 | Klarlack, ggf. zwei Schichten | |

| | | | |
|---|---|---|---|
| * ggf. alternativ auf CC oder Kar * ggf. alternativ auf CC oder Kar * ggf. alternativ auf CC oder Kar * ggf. alternativ auf CC oder Kar * ggf. alternativ auf CC oder Kar * könnte auch auf anderen Fertigungslinien laufen wie Zn oder Kar | | | |

Die nachfolgende Tabelle verdeutlicht, welche metallischen Substrate bzw. metallischen Beschichtungen auf Substraten mit mindestens einer Korrosionsschutzschicht oder/und mit mindestens einer lackähnlichen Beschichtung beschichtet werden und welche Zusammensetzung die Korrosionsschutzschicht vorzugsweise dabei aufweist.

**Tabelle 3: Zusammenhang der bevorzugten chemischen Basis von Korrosionsschutzschichten bzw. entsprechenden Vorbehandlungslösungenje nach metallischem Substrat bzw. metallischer Beschichtung auf einem Substrat: geht sehr gut: ⊕, gut: x, u.U.: ●. 1., 2. und 3. geben verschiedene aufeinander folgende Beschichtungen wieder.**

| Chem. Basis einzelner Korrosionsschutzschich-ten bzw. von deren Bädern | Al/Al-Leg. | Mg-Leg. | Eisen/ Stahl | Edelst ahl | Zn | Zn-Leg., AlZn-Leg. |
|---|---|---|---|---|---|---|
| Oxalat | • | • | • | ⊕ | • | • |
| 1. Oxalat, 2. Chromat | • | • | • | ⊕ | • | • |
| 1. Oxalat, 2. Polymer- Nachspüllösung | • | • | • | ⊕ | • | • |
| 1. Fe/Co-Oxid, 2. AlZrF₆ | | • | | | ⊕ | ⊕ |
| Ti- oder/und Zr-Hexafluorid | • | × | ⊕ | × | ⊕ | ⊕ |
| Ti- oder/und Zr-Hexa-fluorid mit SiO₂ | ⊕ | • | ⊕ | × | ⊕ | ⊕ |
| 1. Ti- oder/und Zr-Hexa-fluorid, 2. Silan(e) | ⊕ | × | ⊕ | • | ⊕ | ⊕ |
| 1. Ti- oder/und Zr-Hexa-fluorid, 2. Mn-Phosphat | ⊕ | • | ⊕ | • | ⊕ | ⊕ |
| 1. Ti- oder/und Zr-Hexa-fluorid, 2. Phosphonat(e) | ⊕ | ⊕ | • | • | • | • |
| 1. Ti- oder/und Zr-Hexa-fluorid, 2. Phosphonat(e), 3. Silan(e) | ⊕ | ⊕ | ⊕ | • | × | × |
| Seltenerdelement(e) als Nitrat(e) | ⊕ | • | | | | |
| Seltenerdelement(e) mit Bi, Peroxid und Chlorid | ⊕ | • | • | | • | • |
| Al-Phosphat | × | • | × | × | × | × |
| Fe-Phosphat | × | × | × | × | × | × |
| Mn-Phosphat | ⊕ | • | ⊕ | • | ⊕ | ⊕ |
| Zn-Phosphat | ⊕ | • | ⊕ | • | ⊕ | ⊕ |
| ZnMn-Phosphat | ⊕ | • | ⊕ | • | ⊕ | ⊕ |
| MnZn-Phosphat | ⊕ | • | ⊕ | × | ⊕ | ⊕ |
| 1. Phosphat, 2. Chromat-Nachspüllösung | ⊕ | × | ⊕ | • | ⊕ | ⊕ |
| 1. Phosphat, 2. Ti/ZrF₆-Nachspüllösung | ⊕ | × | ⊕ | • | ⊕ | ⊕ |
| 1. Phosphat, 2. Polymer-Nachspüllösung | ⊕ | • | ⊕ | • | ⊕ | ⊕ |
| Zn/Mn-Phosphat mit Polymer und Ti/ZrF₆ | × | • | ⊕ | • | ⊕ | ⊕ |
| Zn/Mn-Phosphat mit Polymer, Ti/ZrF₆ und Nanopartikel | × | • | ⊕ | • | ⊕ | ⊕ |
| Polymer | • | • | • | • | • | • |
| Polymer mit Gleitmittel | × | • | × | × | × | × |
| Polymer mit Nanopartikel * | ⊕ - • | ⊕ - • | ⊕ - • | ⊕ - • | ⊕ - • | ⊕ - • |
| Polymer mit Gleitmittel und Nanopartikel * | ⊕ | ⊕ | ⊕ | ⊕ - × | ⊕ | ⊕ |
| Polymer mit Gleitmittel, Korrosionsinhibitor und Nanopartikel | ⊕ | ⊕ | ⊕ | ⊕ - × | ⊕ | ⊕ |
| Polymer mit Gleitmittel, Komplexfluorid, Korrosionsinhibitor und Nanopartikel | ⊕ | ⊕ - • | ⊕ | ⊕ - × | ⊕ | ⊕ |
| Polymer mit Gleitmittel, Komplexfluorid, Korrosionsinhibitor, Nanopartikel und Phosphat | ⊕ | ⊕ - • | ⊕ | ⊕ - × | ⊕ | ⊕ |
| Phosphonat | ⊕ | × | | | × | × |
| Silan(en)/Siloxan(en) | ⊕ | × | ⊕ | • | ⊕ | ⊕ |
| Silan mit Ti/ZrF₆ | ⊕ | × | ⊕ | | ⊕ | ⊕ |

| | | | | | | |
|---|---|---|---|---|---|---|
| bei Phosphatgehalten: ggf. mit Nickel-Zusatz * je nach Polymergehalt und Nanopartikelgehalt, sehr gut insbesondere bei Gehalten an mindestens einem Korrosionsinhibitor oder/und Vernetzungsmittel | | | | | | |

Das erfindungsgemäße Verfahren ist besonders vorteilhaft, weil kurzfristig mindestens ein Teil und mittelfristig sämtliche chemischen und lacktechnischen Prozeßschritte vom Automobilwerk in das Stahlwerk bzw. Aluminium-/Magnesiumwalzwerk verlagert werden können. Dort können diese Verfahrensabschnitte auf schnell laufenden Fertigungslinien, insbesondere auf Bandanlagen, laufen und somit Zeit-sparender, viel gleichmäßiger, Umwelt-schonender, Chemikalien-sparender, Wassersparender, Platz-sparender, Energie-sparender, Kosten-sparender und mit höherer Qualität genutzt werden. Entsprechend sind die Kosten der vorbehandelten, lackierten und ggf. umgeformten Teile deutlich geringer je gefertigtem Quadratmeter der beschichteten Oberfläche. Es fallen hierbei geringere Schlamm-Mengen als bei der bisherigen Fertigungsweise insbesondere beim Vorbehandeln und Lackieren an. Denn es sind deutlich geringere Volumina der jeweiligen Bäder. Anstelle von etwa 20 bis 250 m³ sind es dann für ein typisches Badvolumen nur noch 5 bis 15 m³. Während die Vorbehandlung und Lackierung heute in einem großen Automobilwerk üblicherweise mit 3000 bis 5000 m²/h abläuft, kann auf Bandlinien ein Durchsatz von etwa 8000 bis 30000 m²/h erzielt werden. Die Gesamtzeit für die Reinigung und Vorbehandlung kann von 20 bis 40 Minuten auf 15 bis 30 Sekunden abgesenkt werden. Das Schichtgewicht der Vorbehandlungsbeschichtung kann u.U. von 1,5 bis 4 g/m² auf etwa 0,01 bis 2 g/m² abgesenkt werden. Der Chemikalienverbrauch bei der Vorbehandlung kann von 20 bis 40 g/m² auf 1 bis 10 g/m² gesenkt werden. Statt 15 bis 40 g Schlamm je m² beschichteter Oberfläche fallen nur noch 0 bis 6 g je m² an. Die Lackier- und Einbrennzeit kann von 120 bis 180 Minuten auf 0,1 bis 2 Minuten - für je 2 Lackschichten berechnet - verringert werden. Der Lackverbrauch sinkt für 3 Lackschichten mit 200 bis 300 g/m² auf 80 bis 120 g/m² für 2 Lackschichten. Die Gesamtkosten könnten etwa auf 5 bis 20 % der heutigen Gesamtkosten pro m² beschichteter Oberfläche sinken.

Es war überraschend, daß mit einer erfindungsgemäßen Kunstharzbeschichtung trotz einer Schichtdicke von nur ca. 0,2 µm ein außerordentlich hochwertiger chromfreier Film hergestellt werden konnte, der eine außerordentlich gute Lackhaftungsfestigkeit auf der erfindungsgemäßen Beschichtung ergibt. Weiterhin war es überraschend, daß der Zusatz feinteiliger Partikel eine signifikante Verbesserung der Lackhaftungsfestigkeit ergab, wobei eine Verbesserung der Korrosionsbeständigkeit durch Einlagerung der anorganischen Partikel erhofft werden konnte, aber eine Verbesserung der Lackhaftungsfestigkeit nicht absehbar war.

Wenn Lack- oder lackähnliche Schichten auf dem Band und nicht in der Teile- oder Karosseriefertigung aufgebracht werden, können die Kosten gegenüber der Teile- oder Karosseriefertigung deutlich gesenkt werden. Daher ist die Fertigung auf einem Band wie z.B. auf einer Coil-Coating-Linie der Teile- oder Karosseriefertigung vorzuziehen.

### Beispiele:

Die im folgenden beschriebenen Beispiele sollen den Gegenstand der Erfindung näher erläutern. Die angegebenen Konzentrationen und Zusammensetzungen beziehen sich auf die Behandlungslösung selbst und nicht auf ggf. verwendete Ansatzlösungen höherer Konzentration. Alle Konzentrationsanangaben sind als Festkörperanteile zu verstehen, d.h., die Konzentrationen beziehen sich auf die Gewichtsanteile der wirksamen Komponenten unabhängig davon, ob die eingesetzten Rohstoffe in verdünnter Form z.B. als wäßrige Lösungen vorlagen. Zusätzlich zu den im folgenden aufgeführten Zusammensetzungen kann es in der kommerziellen Praxis erforderlich oder erwünscht sein, weitere Additive zuzusetzen oder die Mengen entsprechend anzupassen, beispielsweise entweder die Gesamtmenge an Zusätzen heraufzusetzen oder z.B. die Menge des Entschäumers oder/und des Verlaufmittels wie z.B. ein Polysiloxan heraufzusetzen.

Als Kunstharze wurde ein Styrolacrylat mit einer Glasübergangstemperatur im Bereich von 15 bis 25 °C und mit einer mittleren Partikelgröße im Bereich von 120 bis 180 nm, ein Acryl-Polyester-Polyurethan-Mischpolymerisat mit einem Blockpunkt im Bereich von 140 bis 180 °C und einer Glasübergangstemperatur im Bereich von 20 bis 60 °C, ein Ethylen-Acryl-Mischpolymerisat mit einem Schmelzpunkt im Bereich von 70 bis 90 °C, und ein Acryl-modifizierter Carboxyl-Gruppen-haltiger Polyester insbesondere mit einer Zahl an OH-Gruppen im Bereich von 80 bis 120 und mit einer Säurezahl im Bereich von 50 bis 90, berechnet auf das Festharz, sowie mit einer Abhärtung z.B. durch Zusatz von Hexamethoxymethylmelamin mit einer Säurezahl kleiner 5 eingesetzt. Das Styrol-Butadien-Copolymerisat weist eine Glasübergangstemperatur im Bereich von - 20 bis + 20 °C auf und eine Säurezahl im Bereich von 5 bis 30; aufgrund des Gehalts an Carboxylgruppen ist dieses Copolymerisat z.B. mit Melaminharzen oder mit Isocyanat-haltigen Polymeren zusätzlich vernetzbar. Das Mischpolymerisat auf der Basis von Epoxid-Acrylat hat eine Säurezahl im Bereich von 10 bis 18 und eine Glasübergangstemperatur zwischen 25 und 40 °C. Dieses Mischpolymerisat für die Beschichtung insbesondere von Stahl gibt dem erfindungsgemäßen Überzug eine höhere chemische Beständigkeit, insbesondere im basischen Bereich, und verbessert die Hafteigenschaften zum metallischen Untergrund.

Die pyrogene Kieselsäure weist einen BET-Wert im Bereich von 90 bis 130 m²/g auf, das kolloidale Siliciumdioxid eine mittlere Partikelgröße im Bereich von 10 bis 20 nm. Das Melamin-Formaldehyd diente als Vernetzungspartner für das carboxylgruppenhaltige Polyesterharz. Das oxidierte Polyethylen diente als Gleit- und Umformmittel (Wachs) und wies einen Schmelzpunkt im Bereich von 125 bis 165 °C auf. Das eingesetzte Polysiloxan war ein polyethermodifiziertes Dimethylpolysiloxan und diente als Benetzungs- und Verlaufsmittel des Naßfilms während der Applikation. Als Kombination von Silanen mit funktionellem und nichtfunktionellem Charakter wurde ein Gemisch von hydrolysierten Silanen auf Basis von Bis-1,2-(triethoxysilyl)ethan und Aminopropyltriethoxysilan eingesetzt. Der Entschäumer war ein Gemisch aus Kohlenwasserstoffen, hydrophober Kieselsäure, oxalierten Verbindungen und nichtionogenen Emulgatoren. Als langkettiger Alkohol wurde ein Tripropylenglykol-mono-n-Butylether zur Filmbildung verwendet. Das Ammonium-Zirkonium-Carbonat dient als Vernetzungsmittel. Als Korrosionsinhibitor wurde einer auf der Basis eines TPA-Amin-Komplexes verwendet. Als Chromatzusatz wurde in einzelnen Fällen Ammoniumbichromat gewählt.

### A) Behandlung bzw. Vorbehandlung von Galvalume^{®}-Stahlblechen:

### Erfindungsgemäßes Beispiel 1:

Stahlbleche, die aus handelsüblichem kaltgewalzten und anschließend legierungsverzinktem Stahlband mit 55 % AIZn (Galvalume^{®}) erhalten wurden, die zum Zwecke des Schutzes bei der Lagerung beölt waren, wurden zunächst in einem alkalischen Spritzreiniger entfettet, mit Wasser gespült, bei erhöhter Temperatur getrocknet und anschließend mit der erfindungsgemäßen wässerigen Zusammensetzung behandelt. Dabei wurde eine definierte Menge der wässerigen Zusammensetzung (Badlösung) mit Hilfe eines Rollcoaters so aufgetragen, daß sich eine Naßfilmdicke von ca. 10 ml/m² ergab. Anschließend wurde der Naßfilm bei Temperaturen im Bereich von 80 bis 100 °C PMT aufgetrocknet, verfilmt und ausgehärtet. Die Zusammensetzung der Badlösung wird in Tabelle 4 aufgeführt.

Die Bestandteile wurden in der angegebenen Reihenfolge gemischt, und der pH-Wert der Lösung wurde anschließend mit einer Ammoniaklösung auf 8,2 eingestellt. Die Lösung wurde nach dem Auftrag in einem Umluftofen bei ca. 90 °C PMT (peak-metal-temperature) getrocknet. Die in dieser Weise behandelten Stahlbleche wurden danach auf ihren Korrosionsschutz und ihre mechanischen Eigenschaften geprüft.

### Erfindungsgemäße Beispiele 2 bis 13, 15 bis 20 und 30 sowie Vergleichsbeispiele 14, 1, 2 und 4:

Legierungsverzinkte Stahlbleche wurden wie im Beispiel 1 beschrieben mit der in Tabelle 4 aufgeführten wässerigen Zusammensetzung behandelt, getrocknet und geprüft. Bei Beispiel 9 wurde jedoch bei 180° C PMT getrocknet. Bei Vergleichsbeispiel 14 wurde keine anorganische Verbindung in Partikelform zugesetzt. Beim erfindungsgemäßen Beispiel 30 entspricht die Zusammensetzung der vom erfindungsgemäßen Beispiel 11, wenn von dem fehlenden Gehalt an Wachs abgesehen wird. Beim Vergleichsbeispiel 4 wurden auf Basis Galvalume^{®} legierungsverzinkte Stahlbleche ohne nachfolgende Behandlung zum Vergleich mit den erfindungsgemäßen Beispielen 1 bis 20 eingesetzt.

**Tabelle 4: Zusammensetzung der Badflüssigkeiten aller Beispiele und Vergleichsbeispiele:**

| Gehalt in Gew.-Teilen / Beispiel | B 1 | B 2 | B 3 | B 4 | B 5 | B 6 | B 7 | B 8 | B 9 | B 10 | B 11 |
|---|---|---|---|---|---|---|---|---|---|---|---|
| Wasser | 100 | 100 | 100 | 100 | 100 | 100 | 100 | 100 | 100 | 100 | 100 |
| Styrolacrylat | 6,40 | 6,40 | | | | 1,00 | 1,00 | 1,00 | | 2,00 | 1,80 |
| Acryl-Polyester-Polyurethan-Mischpolymerisat | | | 6,40 | 3,40 | 3,00 | 2,40 | 3,70 | 3,90 | | 2,70 | 2,60 |
| | | | | | | | | | | | |
| Ethylen-Acryl-Mischpolymerisat | | | | 3,00 | 3,00 | 3,00 | 3,00 | 1,50 | 1,00 | 2,70 | 2,60 |
| carboxylgruppenhaltiger Polyester | | | | | | | | | 5,70 | | |
| Melamin-Formaldehyd | | | | | | | | | 0,60 | | |
| kolloidales SiO₂10 - 20 nm | | 2,50 | 2,50 | 2,50 | 2,50 | 2,50 | 1,25 | 2,50 | 1,60 | 1,50 | 1,40 |
| pyrogene Kieselsäure | 2,50 | | | | | | | | | | |
| oxidiertes Polyethylen | 0,50 | 0,50 | 0,50 | 0,50 | 0,50 | 0,50 | 0,50 | 0,50 | 0,50 | 0,50 | 0,50 |
| Polysiloxan | 0,10 | 0,10 | 0,10 | 0,10 | 0,10 | 0,10 | 0,10 | 0,10 | 0,10 | 0,10 | 0,10 |
| Kombination aus Silanen | | | | | 0,40 | | | | | | |
| Entschäumer | 0,10 | 0,10 | 0,10 | 0,10 | 0,10 | 0,10 | 0,10 | 0,10 | 0,10 | 0,10 | 0,10 |
| langkettiger Alkohol | 0,40 | 0,40 | 0,40 | 0,40 | 0,40 | 0,40 | 0,40 | 0,40 | 0,40 | 0,40 | 0,40 |
| Ammonium-Zr-Carbonat | | | | | | | | | | | 0,40 |
| TPA-Amin-Komplex | | | | | | | | | | | 0,10 |

| Gehalt in Gew.-Teilen / Beispiel | B 12 | B 13 | VB 14 | B 15 | B 16 | B 17 | B 18 | B 19 | B 20 | VB 1 | VB 2 |
|---|---|---|---|---|---|---|---|---|---|---|---|
| Wasser | 100 | 100 | 100 | 100 | 100 | 100 | 100 | 100 | 100 | 100 | 100 |
| Styrolacrylat | 4,40 | | 2,22 | 2,00 | 1,82 | 1,68 | 1,56 | 1,70 | 1,70 | 4,50 | 4,38 |
| Acryl-Polyester-Polyurethan-Mischpolymerisat | | 4,40 | 3,09 | 2,80 | 2,56 | 2,35 | 2,18 | 2,60 | 2,53 | 4,40 | 4,28 |
| | | | | | | | | | | | |
| Ethylen-Acryl-Mischpolymerisat | 2,60 | 2,60 | 3,09 | 2,80 | 2,56 | 2,35 | 2,18 | 2,60 | 2,53 | | |
| carboxylgruppenhaltiger Polyester | | | | | | | | | | | |
| Melamin-Formaldehyd | | | | | | | | | | | |
| kolloidales SiO₂10 - 20 nm | 1,40 | 1,40 | | 0,80 | 1,46 | 2,02 | 2,48 | 1,40 | 1,40 | | |
| pyrogene Kieselsäure | | | | | | | | | | | |
| oxidiertes Polyethylen | 0,50 | 0,50 | 0,50 | 0,50 | 0,50 | 0,50 | 0,50 | 0,50 | 0,50 | 0,50 | 0,50 |
| Polysiloxan | 0,10 | 0,10 | 0,10 | 0,10 | 0,10 | 0,10 | 0,10 | 0,10 | 0,10 | 0,10 | 0,10 |
| Kombination aus Silanen | | | | | | | | | | | |
| Entschäumer | 0,10 | 0,10 | 0,10 | 0,10 | 0,10 | 0,10 | 0,10 | 0,10 | 0,10 | 0,10 | 0,10 |
| langkettiger Alkohol | 0,40 | 0,40 | 0,40 | 0,40 | 0,40 | 0,40 | 0,40 | 0,40 | 0,40 | 0,40 | 0,40 |
| Ammonium-Zr-Carbonat | 0,40 | 0,40 | 0,40 | 0,40 | 0,40 | 0,40 | 0,40 | 0,40 | 0,40 | | |
| TPA-Amin-Komplex | 0,10 | 0,10 | 0,10 | 0,10 | 0,10 | 0,10 | 0,10 | 0,10 | 0,10 | | |
| Ammoniumbichromat | | | | | | | | 0,10 | 0,24 | | 0,24 |

| Gehalt in Gew.-Teilen / Beispiel | B 30 | B 21 | B 22 | B 23 | B 24 | B 25 | B 26 | B 27 | B 28 | B 29 | VB 9 |
|---|---|---|---|---|---|---|---|---|---|---|---|
| Wasser | 100 | 100 | 100 | 100 | 100 | 100 | 100 | 100 | 100 | 100 | 100 |
| Styrolacrylat | 1,89 | 2,00 | 1,90 | 1,60 | 1,45 | 1,70 | | | | 1,80 | 4,38 |
| Acryl-Polyester-Polyurethan-Mischpolymerisat | 2,74 | 2,70 | 2,70 | 2,65 | 2,45 | 2,55 | | | | 2,60 | 4,28 |
| | | | | | | | | | | | |
| Ethylen-Acryl-Mischpolymerisat | 2,74 | 2,70 | 2,65 | 2,65 | 2,45 | 2,55 | 2,65 | 2,65 | 2,65 | 2,60 | |
| carboxylgruppenhaltiges Styrol-Butadien-Copolymerisat | | | | | | | 4,25 | | 2,15 | | |
| | | | | | | | | | | | |
| carboxylgruppenhaltiger Polyester | | | | | | | | | | | |
| Melamin-Formaldehyd | | | | | | | | | | | |
| Epoxid-Acrylat-Mischpolymerisat | | | | | | | | 4,25 | 2,10 | | |
| kolloidales SiO₂ 10 - 20 nm | 1,47 | 1,40 | 1,37 | 1,32 | 1,27 | 1,28 | 1,32 | 1,321 | 1,32 | 1,40 | |
| pyrogene Kieselsäure | | | | | | | | | | | |
| oxidiertes Polyethylen | 0,50 | 0,50 | 0,50 | 0,50 | 0,50 | 0,50 | 0,50 | 0,50 | 0,50 | 0,50 | 0,50 |
| Polysiloxan | 0,11 | 0,10 | 0,10 | 0,10 | 0,10 | 0,10 | 0,10 | 0,10 | 0,10 | 0,10 | 0,10 |
| Kombination aus Silanen | | | | | | | | | | | |
| Entschäumer | 0,11 | 0,10 | 0,10 | 0,10 | 0,10 | 0,10 | 0,10 | 0,10 | 0,10 | 0,10 | 0,10 |
| langkettiger Alkohol | 0,42 | 0,40 | 0,40 | 0,40 | 0,40 | 0,40 | 0,40 | 0,40 | 0,40 | 0,40 | 0,40 |
| Ammonium-Zr-Carbonat | 0,42 | | | | 0,40 | | | | | 0,40 | |
| TPA-Amin-Komplex | 0,11 | 0,10 | 0,28 | 0,48 | 0,68 | 0,88 | 0,48 | 0,48 | 0,48 | 0,10 | |
| Ammoniumbichromat | | | | | | | | | | | 0,24 |

### Ergebnisse der Prüfungen an Galvalume^{®}-Blechen:

Die Trockenschichtauflage der getrockneten, verfilmten, ausgehärteten und ggf. auch thermisch ausgehärteten Polymer-haltigen Beschichtungen ergab bei allen Versuchen - außer bei Vergleichsbeispiel 4 - jeweils Werte im Bereich von 900 bis 1100 mg/m². Die getrockneten Filme wiesen eine Schichtdicke im Bereich von 0,8 bis 1 µm auf. Alle erfindungsgemäßen Beschichtungen mit Ausnahme des Beispiels 1 waren durchsichtig, farblos und zeigten einen leichten Seidenglanz, so daß der optische Charakter der metallischen Oberfläche praktisch unverändert erkennbar blieb. Beim Beispiel 1 war die Beschichtung milchig-weiß mit einem stärkeren Mattierungseffekt.

**Tabelle 5: Ergebnisse der Korrosionsschutzprüfungen**

| | Salzsprühtest ASTM B117-73 Flächenkorrosion nach 480 h in % | Salzsprühtest ASTM B117-73 Kanten-korrosion nach 480 h in mm | Schwitzwasser-Konstant-klima-Test DIN 50 017 KK Flächen-korrosion nach > 1680 h in % | Stapeltest Flächen-korrosion nach 28 Tagen in % | Stapeltest Kanten-korrosion nach 28 Tagen in mm |
|---|---|---|---|---|---|
| B 1 | <50 | 30 | 20 | 100 | vollständig korrodiert |
| B 2 | 40 | 30 | 20 | 100 | vollständig korrodiert |
| B 3 | 40 | 30 | 20 | 100 | vollständig korrodiert |
| B 4 | 20 | 20 | 0 | 50 | vollständig korrodiert |
| B 5 | 20 | 20 | 0 | 40 | 20 |
| B 6 | 20 | 20 | 0 | 40 | 20 |
| B 7 | 20 | 20 | 0 | 40 | 20 |
| B 8 | 15 | 20 | 0 | 30 | 20 |
| B 9 | 5 | 30 | 0 | 0 | 5 |
| B 10 | 20 | 20 | 0 | 30 | 5 |
| B 11 | 0 | 12 | 0 | 0 | 2 |
| B 12 | 0 | 12 | 0 | 0 | 2 |
| B 13 | 0 | 12 | 0 | 0 | 2 |
| VB 14 | 100 | vollständig korrodiert | 0 | 30 | vollständig korrodiert |
| B 15 | 5 | 16 | 0 | 30 | 5 |
| B 16 | 0 | 12 | 0 | 0 | 2 |
| B 17 | 5 | 16 | 0 | 10 | 5 |
| B 18 | 20 | 16 | 0 | 20 | 5 |
| B 19 | 0 | 12 | 0 | 0 | 0 |
| B 20 | 0 | 12 | 0 | 0 | 0 |
| VB 1 | 90 | 30 | 20 | 100 | vollständig korrodiert |
| VB 2 | 0 | 20 | 0 | 0 | 0 |
| B 30 | 0 | 12 | 0 | 0 | 2 |
| VB 4 | 100 | vollständig korrodiert | 100 | 100 | vollständig korrodiert |

Bei Vergleichsbeispiel 14 und den erfindungsgemäßen Beispielen 15 bis 18 wurde der Gehalt an kolloidalem Siliciumdioxid von Null kontinuierlich gesteigert. Es zeigte sich bei den Korrosionstests, daß ein Gehalt von etwa 1,46 Gew. Teilen an kolloidalem Siliciumdioxid bei Beispiel 16 für diese Testserie den besten Korrosionsschutz ergab (Tabelle 5).

Mit der Zusammensetzung des Beispiels 16 wurden Galvalume^{®}-Bleche mit einer Schichtdicke der getrockneten erfindungsgemäßen Beschichtung von etwa 1 g/m² beschichtet und bei unterschiedlichen Temperaturen getrocknet. Diese Bleche wurden dann einem Salzsprühtest nach ASTM B 117-73 unterworfen (Tabelle 6).

**Tabelle 6: Ergebnisse zu Beispiel 16 an bei unterschiedlicher Temperatur getrockneten Galvalume^{®}-Blechen**

| Trockentemperatur | Salzsprühtest ASTM B 117-73 Flächenkorrosion nach 72 h in % | Salzsprühtest ASTM B 117-73 Flächenkorrosion nach 240 h in % | Salzsprühtest ASTM B 117-73 Flächenkorrosion nach 480 h in % | Salzsprühtest ASTM B 117-73 Flächenkorrosion nach 720 h in % |
|---|---|---|---|---|
| 20 °C | 0,5 | 10 | 10 | 10 |
| 40 °C | 0,5 | 10 | 10 | 10 |
| 60 °C | 0 | 2,5 | 5 | 5 |
| 80 °C | 0 | 0 | 0 | 5 |
| 100 °C | 0 | 0 | 0 | 2,5 |
| 120 °C | 0 | 0 | 0 | 2,5 |

Für Verfahrensvarianten beim besonders guten Beispiel 16 ergab sich, daß die Temperatur zum Trocknen der wässerigen Zusammensetzung auf dem Galvalume^{®}-Blech mindestens etwa 60 °C betragen sollte, um besonders gute Ergebnisse des Korrosionsschutzes zu erbringen. Mit erhöhter Temperatur wird eine bessere Filmbildung und Vernetzung erzielt.

**Tabelle 7: Ergebnisse der mechanischen Prüfungen**

| | Pendelhärte nach König, nach DIN 53 157 | Dornbiegetest mit konischem Dorn von 3,2 mm bis 38 mm Durchmesser, nach DIN ISO 6860 | Näpfchenzugtest nach Erichsen |
|---|---|---|---|
| B 1 | 60 | Risse < 1,5 mm | unbeeinträchtigt |
| B 2 | 80 | Risse < 1,5 mm | unbeeinträchtigt |
| B 3 | 60 | keine Risse | unbeeinträchtigt |
| B 4 | 60 | keine Risse | unbeeinträchtigt |
| B 5 | 60 | keine Risse | unbeeinträchtigt |
| B 6 | 60 | keine Risse | unbeeinträchtigt |
| B 7 | 70 | keine Risse | unbeeinträchtigt |
| B 8 | 80 | keine Risse | unbeeinträchtigt |
| B 9 | 120 | keine Risse | unbeeinträchtigt |
| B 10 | 60 | keine Risse | unbeeinträchtigt |
| B 11 | 60 | keine Risse | unbeeinträchtigt |
| B 12 | 60 | keine Risse | unbeeinträchtigt |
| B 13 | 80 | keine Risse | unbeeinträchtigt |
| VB14 | 40 | keine Risse | unbeeinträchtigt |
| B 15 | 50 | keine Risse | unbeeinträchtigt |
| B 16 | 60 | keine Risse | unbeeinträchtigt |
| B 17 | 60 | keine Risse | unbeeinträchtigt |
| B 18 | 60 | keine Risse | unbeeinträchtigt |
| B 19 | 60 | keine Risse | unbeeinträchtigt |
| B 20 | 60 | keine Risse | unbeeinträchtigt |
| VB 1 | 60 | keine Risse | unbeeinträchtigt |
| VB 2 | 60 | keine Risse | unbeeinträchtigt |
| B 30 | 60 | keine Risse | gerissen, Abrieb |
| VB 4 | nicht anwendbar | nicht anwendbar | gerissen, Abrieb: schlechter als VB 3 |

Die kleinsten Werte der Korrosionstests der Tabellen 5 und 6 geben die besten Resultate wieder. Auch die Ergebnisse der Tests der Tabelle 7 zeigen zwischen den verschiedenen polymeren Beschichtungen deutliche Unterschiede, vor allem beim Stapeltest. Die besten erfindungsgemäßen Beschichtungen sind bezüglich der Korrosionsbeständigkeit auf Flächen den chromathaltigen Beschichtungen zumindest ebenbürtig. Falls jedoch den erfindungsgemäßen Beschichtungen auch Chromat zugesetzt werden sollte, kann auch die Kantenkorrosion den bisher bekannten chromathaltigen Produkten als mindestens ebenbürtig angesehen werden.

Der sog. Stapeltest kann u.a. der Prüfung auf Rostbildung dienen. Mit diesem Kurzzeit-Test läßt sich der Korrosionsschutz z.B. von behandelten Bandoberflächen bezüglich des Einflusses von feuchtwarmer Atmosphäre beurteilen, wie sie z.B. bei Lagerung oder Transport durch verschiedene Klimazonen eines aufgewickelten Bandes (= Coil) auftreten kann. Hierfür werden jeweils 8 oder 10 beidseitig mit der Behandlungsflüssigkeit behandelte und getrocknete Prüfbleche z.B. im Format 80 x 80 mm mit einer Schlagschere geschnitten. Die Schnittkanten bleiben ungeschützt und unbehandelt. Die Bleche müssen plan sein und werden horizontal und so gestapelt, daß der Grat der Schnittkanten in eine Richtung zeigt. Zwischen die Bleche wird mittels einer Bürette 1 ml VE-Wasser je 100 cm² Oberfläche auf die jeweilige Substratoberfläche aufgebracht. Der Blechstapel wird dann in PE-Folie wasserdicht verpackt und verschweißt, so daß das VE-Wasser während der Prüfung nicht verdunsten bzw. entweichen kann. Der derart verpackte Blechstapel wird in eine Prüfkammer nach DIN 50 017 KK über eine Prüfzeit von 4 Wochen eingelagert. Danach wird beurteilt, welche Art von Rost (Rotrost, Schwarzrost, Weißrost) sich im Kantenbereich entwickelt hat und welcher prozentuale Flächenanteil her hiervon betroffen ist. Außerdem wird beurteilt, welche Art von Rost sich über die gesamte Oberfläche entwickelt hat und wie groß der prozentuale korrodierte Flächenanteil auf der behandelten Blechoberfläche ist. Galvalume^{®}-Bleche korrodieren hierbei zunächst weiß bzw. schwarz und - wenn die Aluminium-Zink-Legierungs-beschichtung aufgebraucht bzw. bis auf das Stahlblech beschädigt ist - vergleichbar mit Stahl rot.

Die Pendelhärte wurde über jeweils 5 Meßwerte gemittelt, wobei die Werte entsprechend auf- bzw. abgerundet wurden. Je niedriger die Pendelhärte ist, desto weicher ist der Film und üblicherweise ist dann auch die Haftung des Films auf der metallischen Oberfläche besser. Andererseits sind Gitterschnittergebnisse, die die Adhäsion charakterisieren könnten, bei derart dünnen Filmen nicht besonders aussagekräftig. Beim Vergleichsbeispiel 14 in Zusammenhang mit den Beispielen 15 bis 18 zeigt sich eine Härtezunahme aufgrund einer Zugabe von SiO₂-Partikeln.

Die zähelastischen Eigenschaften der erfindungsgemäßen Beschichtung wurden so eingestellt, daß die Beschichtung weder zu weich, noch zu hart für den mechanischen Angriff der Werkzeuge während der Umformung ist. Dadurch bleibt eine weitgehend unbeschädigte Beschichtung nach der Umformung erhalten. Außerdem werden die Schnittkanten durch diese zähelastischen Eigenschaften relativ gut geschützt, da die Beschichtung an den Schnittkanten nicht splittert und teilweise sogar auf die Schnittkante aufgezogen wird und dadurch einen erhöhten Kantenschutz erzielt. Ein Splittern der erfindungsgemäßen Beschichtung während der Herstellung von Blechabschnitten würde eine Verschmutzung der Formwerkzeuge verursachen, die zu unerwünschten Markierungen während der auf die Formgebung folgenden Prozeßschritte auf den Blechoberflächen führen kann. Aufgrund des optimierten zähelastischen Verhaltens ist überraschenderweise ein Gleit- und ein Reibverhalten erzielt worden, das keine anfänglich sehr niedrigen Werte und dann einen sehr schnellen Anstieg der Gleit- und Reibwerte ergibt, sondern außerordentlich lange niedrige Werte des Gleitens und Reibens während unterschiedlicher Umform-Folgeprozesse ermöglicht.

Der Dornbiegetest belegt die gute Flexibilität und die gute Haftung der Beschichtung zum metallischen Untergrund sowie ihre hervorragende Umformbarkeit.

Das Umformen erfolgte mit einer Näpfchenzugmaschine der Fa. Erichsen, Modell 142-20, mit einer Niederhaltekraft von 2500 kp und mit einer Ziehkraft von 2 Mp. Aus den erfindungsgemäß behandelten Blechabschnitten aus Galvalume^{®} wurden Ronden von 60 mm Durchmesser ausgestanzt, die zu hutförmigen Näpfchen mit Krempe meistens ca. 15 bis 17 mm tief und mit einem Näpfchendurchmesser von ca. 35 mm gezogen wurden. In den Bereichen der Innenradien der Näpfchen trat ohne Zusatz eines Gleitoder/und Umformmittels wie Wachs eine Beschädigung der Aluminium-Zink-Blume auf, teilweise mit einem extrem starken metallischen Abrieb. Durch einen ggf. auch nur geringen Zusatz eines Gleit- oder/und Umformmittels wurde diese Oberflächenbeschädigung vermieden und die Krempe (Ronde) auf Durchmesser im Bereich von etwa 48 mm zusammengezogen. Ohne den Zusatz eines Gleit- oder/und Umformmittels wurde das Umformen beeinträchtigt, indem die Krempe (Ronde) in geringerer Weise als mit diesem Zusatz ihren Durchmesser verringerte, etwa auf Durchmesser nur im Bereich von etwa 58 mm. Dieser Durchmesser ist teilweise auch vom Zeitpunkt des Auftretens eines Risses und der damit verbundenen Maschinenabschaltung abhängig. Die Näpfchen waren dann meistens nur 5 bis 10 mm tief gezogen worden. Zusätzlich trat ohne Zusatz eines Gleitoder/und Umformmittels immer ein meist längerer Riß im Bereich des Außenradius des Näpfchens auf, wodurch sich die mittlere tiefgezogene Fläche des Näpfchens wie bei einer teilweise geöffneten Dose steil stehend nach einer Seite hin abhob. Beim Vergleichsbeispiel 14 in Zusammenhang mit den Beispielen 15 bis 18 zeigte sich kein Unterschied in der visuellen Ausprägung der gezogenen Näpfchen bezüglich des großen Außendurchmessers, der Formausbildung und der Oberflächenausbildung. Auch ein Benetzen der Oberfläche mit einer Kupfersulfatlösung, so daß sich auf Fehlstellen in der organischen Beschichtung aufgrund der Reaktion der Zinkbeschichtung mit dem Kupfersulfat ein rotbraun bis schwarz gefärbte Reaktionsoberfläche ausbilden konnte, zeigte keine Unterschiede zwischen Näpfchen mit unterschiedlichem SiO₂-Partikelgehalt an. Die guten Umformeigenschaften scheinen daher von dem Gehalt an organischer Substanz, insbesondere vom oxidierten Polyethylen, zu stammen und werden durch den Gehalt an anorganischen Partikeln positiv beeinflußt.

Bleche, wie sie in dem erfindungsgemäßen Beispiel 11 beschichtet wurden, wurden bei unterschiedlicher Temperatur PMT, nämlich bei Raumtemperatur über 72 Stunden, bei 40 °C, 60 °C, 80 °C, 100 °C oder 120 °C über jeweils 5 Minuten und danach über mindestens 70 Stunden bei Raumtemperatur weitergetrocknet. Es zeigte sich kein Unterschied in der visuellen Ausprägung der gezogenen Näpfchen bezüglich des großen Außendurchmessers, der Formausbildung und der Oberflächenausbildung, auch nicht nach Benetzen mit Kupfersulfat. Allerdings zeigte sich beim Salzsprühtest, daß bei den entsprechend dem erfindungsgemäßen Beispiel 11 behandelten Substratabschnitten, die bei einer Temperatur von 20 °C, 40 °C oder 60 °C getrocknet wurden, nur ein befriedigender, aber mit steigender Temperatur besserer Korrosionsschutz erreichbar war. Die mit dem erfindungsgemäßen Beispiel 11 behandelten Substratabschitte, die bei einer von Temperatur 80 °C, 100 °C oder 120 °C getrocknet wurden, zeigten einen guten, mit steigender Temperatur sogar einen sehr guten Korrosionsschutz.

Es wird erwartet, daß die an Galvalume^{®}-Blechen ausgeführten Versuche und ermittelten Ergebnisse auf Bleche, die mit AlSi-, ZnAl-, ZnFe-, ZnNi-, Al und Zn-Beschichtungen versehen sind, ohne Änderung der Verfahrensparameter übertragbar sind und zu nahezu gleichartigen Ergebnissen führen.

### B) Behandlung von kaltgewalztem Stahl (CRS):

Bei den erfindungsgemäßen Beispielen 21 bis 28 und unter Bezug auf die Vergleichsbeispiele 5 bis 8 wird im folgenden eingegangen auf
1. den steigenden Anteil des Korrosionsinhibitors (Beispiele 21 bis 25),
2. die Beispiele 26 und 28 für Styrol-Butadien-Mischpolymerisate als Filmbildner,
3. die Beispiele 27 und 28 für Epoxid-Mischpolymerisate als Filmbildner,
4. die Vergleichsbeispiele 5 bis 8 für Stahl im unbehandelten, beölten, alkaliphosphatierten oder zinkphosphatierten Zustand.

Die nachfolgenden Beispiele 21 bis 28 sind im Vergleich zu den Beispielen 1 bis 20 an Galvalume^{®}-Blechen speziell zur Vorbehandlung vor dem Lackieren bzw. zur Behandlung jeweils von kaltgewalztem Stahl (CRS) gedacht. Ziel ist es, im Vergleich zu der bisher üblichen Beölung der Stahloberflächen als temporärem Korrosionsschutz eine korrosionsschützend vorbehandelte Stahloberfläche einzusetzen, die anders als der Ölfilm vor der nachfolgenden Lackierung nicht mehr entfernt werden muß und dadurch ggf. erhebliche Vorteile bezüglich der Umweltbelastung bringt: Die Entsorgung des Korrosionsschutzöles aus den Reinigerbädern, die üblicherweise vor der nachfolgenden Lackierung im Einsatz sind, entfällt dadurch weitgehend oder vollständig, falls nicht auch bisher schon auf diese Reinigungsprozesse vollständig verzichtet werden konnte, weil die Oberflächen während des Transports, der Lagerung oder/und der Weiterverarbeitung der metallischen Substrate nicht verschmutzt wurden oder/und nicht beölt wurden.

Das erfindungsgemäße Verfahren ist als Primer-integrierte Vorbehandlung zur Herstellung von lackierten Oberflächen aus kaltgewalztem Stahl von wirtschaftlicher Bedeutung: Erfindungsgemäß wird eine korrosionsschützende Behandlung der Stahloberfläche vorgeschlagen, die zunächst während Transport, Lagerung und Weiterverarbeitung der Stahloberfläche einen Korrosionsschutz bietet und anschließend ein Teil der Gesamtlackierung ist. Damit ist es gelungen, einen Pretreatment-Primer für Stahl zu entwickeln.

### Erfindungsgemäßes Beispiel 21:

Stahlbleche, die aus handelsüblichem kaltgewalzten Stahlband der Güteklasse ST 1405 erhalten wurden, die zum Zwecke des Schutzes bei der Lagerung beölt waren, wurden zunächst in einem alkalischen Spritzreiniger entfettet, mit Wasser gespült, bei erhöhter Temperatur getrocknet und anschließend mit der erfindungsgemäßen wässerigen Zusammensetzung behandelt. Dabei wurde eine definierte Menge der wässerigen Zusammensetzung (Badlösung) mit Hilfe eines Rollcoaters so aufgetragen, daß sich eine Naßfilmdicke von ca. 10 ml/m² ergab. Anschließend wurde der Naßfilm bei einer Temperatur im Bereich von 80 bis 100 °C PMT aufgetrocknet, verfilmt und ausgehärtet. Die Badflüssigkeit hatte die Zusammensetzung entsprechend den Angaben der Tabelle 4.

### Erfindungsgemäße Beispiele 22 bis 28:

Stahlbleche wurden wie im Beispiel 21 beschrieben mit der in Tabelle 4 aufgeführten Behandlungsflüssigkeit behandelt, getrocknet und geprüft.

### Vergleichsbeispiel 5:

Stahlbleche der Güteklasse ST 1405 ohne korrosionsschützende Behandlung wurden einem Schwitzwasser-Wechselklimatest nach DIN 50 017 KFW unterworfen (siehe Tabelle 8).

### Vergleichsbeispiel 6:

Stahlbleche der Güteklasse ST 1405 wurden mit einer handelsüblichen Walzwerkbeölung behandelt. Danach wurden sie einem Schwitzwasser-Wechselklimatest nach DIN 50 017 KFW unterworfen (siehe Tabelle 8).

### Vergleichsbeispiel 7:

Stahlbleche, die aus handelsüblichem kaltgewalzten Stahlband der Güteklasse ST 1405 erhalten wurden, die zum Zwecke des Schutzes bei der Lagerung beölt waren, wurden zunächst in einem alkalischen Spritzreiniger entfettet, mit Wasser gespült, bei erhöhter Temperatur getrocknet und anschließend mit der handelsüblichen Alkaliphosphatierung Unibond^{®} WH behandelt, wobei eine Schichtdicke von etwa 0,3 µm erzielt wurde. Danach wurden sie einem Schwitzwasser-Wechselklimatest nach DIN 50 017 KFW unterworfen (siehe Tabelle 8).

### Vergleichsbeispiel 8:

Stahlbleche, die aus handelsüblichem kaltgewalzten Stahlband z. B. der Güteklasse ST 1405 erhalten wurden, die zum Zwecke des Schutzes bei der Lagerung beölt waren, wurden zunächst in einem alkalischen Spritzreiniger entfettet, mit Wasser gespült, bei erhöhter Temperatur getrocknet und anschließend mit der handelsüblichen Trikationen-Zinkphosphatierung Gardobond^{®} 101 , wie sie in der Allgemeinindustrie im Einsatz ist, behandelt, wobei eine Schichtdicke von etwa 1,5 µm erzielt wurde. Danach wurden sie einem Schwitzwasser-Wechselklimatest nach DIN 50 017 KFW unterworfen (siehe Tabelle 8).

### Ergebnisse der Prüfungen an behandeltem, kaltgewalzten Stahl:

Die getrockneten und bei der Trocknung thermisch ausgehärteten Filme der erfindungsgemäßen Polymer-haltigen Beschichtungen zeigten eine

Schichtdicke im Bereich von 0,8 bis 1 µm. Die Beschichtung der Vergleichsbeispiele 7 und 8 wies eine Dicke von etwa 0,3 bzw. 1,5 µm auf. Alle erfindungsgemäßen Beschichtungen waren durchsichtig, farblos und zeigten einen leichten Seidenglanz, so daß der optische Charakter der metallischen Oberfläche praktisch unverändert erkennbar blieb.

**Tabelle 8: Ergebnisse der Korrosionschutzprüfungen der Beispiele 21 bis 28 und der Vergleichsbeispiele 5 bis 8**

| Schwitzwasser Wechselklimatest nach DIN 50 017 KFW | Flächen-korrosion nach 1 Cyklus in % | Flächenkorrosion nach 3 Cyklen in % | Flächen-korrosion nach 5 Cyklen in % | Flächen-korrosion nach 7 Cyklen in % | Flächen-korrosion nach 10 Cyklen in % |
|---|---|---|---|---|---|
| B 21 | 0 | 0 | 5 | 15 | 20 |
| B 22 | 0 | 0 | 2 | 10 | 15 |
| B 23 | 0 | 0 | 0 | 2 | 5 |
| B 24 | 0 | 0 | 0 | 0 | 0 |
| B 25 | 0 | 0 | 0 | 0 | 0 |
| B 26 | 0 | 0 | 0 | 0 | 0 |
| B 27 | 0 | 0 | 0 | 0 | 0 |
| B 28 | 0 | 0 | 0 | 0 | 0 |
| VB 5 | 80 | 100 | entfällt | entfällt | entfällt |
| VB 6 | 5 | 20 | 30 | 40 | 60 |
| VB 7 | 30 | 70 | 100 | entfällt | entfällt |
| VB 8 | 20 | 30 | 60 | 100 | entfällt |

**Tabelle 9: Ergebnisse der mechanischen Prüfungen**

| | Pendelhärte nach König, nach DIN 53 157 | Dornbiegetest mit konischem Dorn von 3,2 mm bis 38 mm Durchmesser, nach DIN ISO 6860 | Näpfchenzugtest nach Erichsen |
|---|---|---|---|
| B 21 | 60 | keine Risse | unbeeinträchtigt |
| B 22 | 60 | keine Risse | unbeeinträchtigt |
| B 23 | 60 | keine Risse | unbeeinträchtigt |
| B 24 | 60 | keine Risse | unbeeinträchtigt |
| B 25 | 60 | keine Risse | unbeeinträchtigt |
| B 26 | 50 | keine Risse | unbeeinträchtigt |
| B 27 | 70 | keine Risse | unbeeinträchtigt |
| B 28 | 55 | keine Risse | unbeeinträchtigt |

Die Versuchsergebnisse an den erfindungsgemäßen Beispielen 21 bis 25 zeigen, daß ein erhöhter Anteil an Korrosionsinhibitor den Korrosionsschutz spürbar verbessert. Anhand der Beispiele 26 bis 28 wird deutlich, daß durch den Zusatz von Acrylat-Epoxid-Mischpolymerisat bzw. von Styrol-Butadien-Copolymerisat anstelle von Styrolacrylat bzw. Acryl-Polyester-Polyurethan-Mischpolymerisat eine verbesserte Haftung zum Untergrund und eine erhöhte Chemikalienbeständigkeit insbesondere gegen alkalische Stoffe erzielt wird. Hierbei zeigte sich, daß die Korrosionsbeständigkeit ab einem Mindestgehalt an mindestens einem Korrosioninhibitor gute bzw. gleichmäßig gute Ergebnisse ergibt. Die Beschichtungen der erfindungsgemäßen Beispiele 21 bis 28 sind hervorragend zur Umformung von kaltgewalztem Stahl geeignet. Die Vergleichsbeispiele 5 bis 8 brauchten hierbei nicht getestet zu werden, da deren Beschichtungen für Umformungen gänzlich ungeeignet sind.

Im Vergleich zur beölten Substratoberfläche ohne klassische Korrosionsschutzschicht (VB 6) sowie im Vergleich zur sogenannten nichtschichtbil-denden Vorbehandlungsschicht bzw. schichtbildenden Vorbehandlungsschicht wie z.B. durch Alkaliphosphatieren (VB 7) oder Zinkphosphatieren (VB 8), bei der die vorbehandelten Bleche anschließend überlackiert werden, haben die erfindungsgemäßen Beschichtungen vor allem den Vorteil, daß an während der Lackierung schwer oder nur unzureichend zugänglichen Oberflächenbereichen ein durchaus ausreichender bis befriedigender Korrosionsschutz durch die erfindungsgemäße Schutzschicht sichergestellt werden kann, z.B., wenn Band erfindungsgemäß beschichtet und erst danach umgeformt wird und ggf. danach lackiert wird. Im Vergleich zur beölten Substratoberfläche ohne klassische Korrosionsschutzschicht sowie im Vergleich zur sogenannten nicht-schichtbildenden Vorbehandlungsschicht bzw. schichtbildenden Vorbehandlungsschicht wie z.B. durch Alkaliphosphatieren oder Zinkphosphatieren, die überlackiert werden müssen, hat das erfindungsgemäße Verfahren weiterhin den Vorteil, auch ohne Lackierung einen befriedigenden Korrosionsschutz zu gewährleisten, z.B. bei Architekturblechen im Innenbereich oder in geschützten Bereichen ohne höhere Luftfeuchtigkeit z.B. verbaut unter dem Dach

Die Beschichtungen entsprechend den Beispielen 21 bis 28 sind als Vorbehandlungsschicht vor dem Lackieren oder als Behandlungsschicht von kaltgewalztem Stahl (CRS) gut geeignet, der nach einer entsprechenden Lagerzeit zu Formteilen weiterverarbeitet und anschließend lackiert wird oder der zu Komponenten ohne nachfolgende Lackierung im Innenbereich verarbeitet wird und daher nicht der durch Freibewitterung üblichen Beanspruchung ausgesetzt wird.

Die Beschichtung entsprechend der erfindungsgemäßen Beispiele 26 bis 28 ist bedingt durch die Kunstharzkombination mit einem hohen Anteil an Epoxid-Acrylat-Mischpolymerisat bzw. Sytrol-Butadien-Copolymerisat im Außenbereich nur als Vorbehandlung vor einer nachfolgenden Lackierung geeignet und nicht als dauerhafter Blankkorrosionsschutz im Außenbereich, da diese Beschichtung nicht ausreichend gegen die UV-Strahlungsbelastung beständig ist, wie sie während einer Freibewitterung einwirkt. Im Innenbereich können diese Beschichtungen nur bei sehr geringer Luftfeuchtigkeit als Behandlung ohne nachfolgenden Lack eingesetzt werden.

Es ist erstaunlich, daß es für den Einsatz auf besonders korrosionsempfindlichen Oberflächen wie z.B. Stahl gelang, eine Polymer-haltige Beschichtung zu entwickeln, die auf wässeriger Basis ist, die frei von oder relativ arm an organischen Lösemitteln ist, die bei niedriger Temperatur - unter 120 °C PMT, insbesondere im Bereich von 60 bis 80 °C PMT - und schnell - bei Bandanlagen innerhalb einer Zeit von 1 bis 3 s bzw. bei Teilebeschichtung durch Tauchen wegen der Ablaufkanten in einer Zeit von 5 bis 10 Minuten, bei Sprühen von Teilen in einer Zeit bis zu 5 Minuten - trocknen, verfilmen und üblicherweise zumindest teilweise vernetzen kann und trotzdem eine gute Korrosionsbeständigkeit gewährleistet. Vorzugsweise sollen derartige erfindungsgemäße Beschichtungen auf Stahl ein Schichtgewicht von 0,8 bis 2 g/m², entsprechend einer Schichtdicke im Bereich etwa von 0,7 bis 2,5 µm, aufweisen.

### C) Behandlung bzw. Vorbehandlung von Magnesiumgußteilen:

### Erfindungsgemäßes Beispiel 29:

Gußteile in Form von ca. 5 mm dicken Platten aus den Magnesiumlegierungen AZ91D und AM50A auf Basis von MgAlZn bzw. MgAlMn wurden zunächst in einem alkalischen Spritzreiniger entfettet, mit Wasser gespült, bei erhöhter Temperatur getrocknet und anschließend mit der erfindungsgemäßen wässerigen Zusammensetzung behandelt. Dabei wurde eine Menge der wässerigen Zusammensetzung (Badlösung) durch Eintauchen in die Behandlungsflüssigkeit aufgetragen, so daß sich eine durchschnittliche Naßfilmdicke von ca. 1 bis 1,5 ml/m² ergab. Anschließend wurde der Naßfilm bei einer Temperatur im Bereich von 80 bis 100 °C PMT aufgetrocknet, verfilmt und ausgehärtet. Die Badlösung hatte die Zusammensetzung entsprechend Tabelle 4.

### Vergleichsbeispiel 9:

Im Vergleich zu Beispiel 29 wurde die Zusammensetzung von Vergleichsbeispiel 2 (siehe Tabelle 4) entsprechend dem Verfahren von Beispiel 29 auf Platten der gleichartigen Magnesiumlegierungen aufgebracht.

### Ergebnisse der Prüfungen an Magnesiumgußteilen:

**Tabelle 10: Ergebnisse der Korrosionsschutzprüfungen**

| | Salzsprühtest ASTM B117-73 Flächenkorrosion nach 120 h in % | Salzsprühtest ASTM B117-73 Flächenkorrosion nach 240 h in % | Salzsprühtest ASTM B117-73 Flächenkorrosion nach 480 h in % | Salzsprühtest ASTM B117-73 Kantenkorrosion nach 480 h in mm | Schwitzwasser-Konstant-klimaTest DIN 50 017 KK Flächen-korrosion nach 240 h in % |
|---|---|---|---|---|---|
| B 29 | 0 | 10 | 20 | 0 | 0 |
| VB 9 | 0 | 10 | 20 | 0 | 0 |

Die Pendelhärtebestimmung der erfindungsgemäßen Beschichtung ergab Werte von 60. Da Magnesiumlegierungen mit wenigen Ausnahmen nicht tiefziehfähig sind, konnte der Dornbiegetest nicht durchgeführt werden. Die getrockneten und bei der Trocknung thermisch ausgehärteten Filme der erfindungsgemäßen Polymer-haltigen Beschichtungen zeigten eine durchschnittliche Schichtdicke von etwa 1,2 µm. Die Beschichtung des Vergleichsbeispiels 9 wies eine durchschnittliche Schichtdicke von etwa 1,2 µm auf. Die erfindungsgemäße Beschichtung war durchsichtig, farblos und zeigte einen leichten Seidenglanz, so daß der optische Charakter der metallischen Oberfläche praktisch unverändert erkennbar blieb. Die chromfreie erfindungsgemäße Beschichtung war einer Chrom- und Polymer-haltigen Beschichtung bezüglich der Korrosionsbeständigkeit gleichwertig.

### D) Behandlung bzw. Vorbehandlung von Galvalume^{®}-Stahlblechen und von verzinkten Stahlblechen in chromfreien Mehrschichtsystemen:

Erfindungsgemäßes Beispiel 30:
Stahlbleche, die aus handelsüblichem kaltgewalzten Stahlband durch Beschichtung mit 55 % AlZn (Galvalume^{®}) legierungsverzinkt wurden bzw.
durch Eintauchen in Zinkschmelze feuerverzinkt wurden (HDG), die danach zum Zwecke des Schutzes bei der Lagerung beölt wurden und die geschnitten wurden, wurden zunächst in einem alkalischen Spritzreiniger entfettet, mit Wasser gespült, bei erhöhter Temperatur getrocknet und anschließend mit einer ersten wässerigen Zusammensetzung behandelt. Beide Arten von Stahlblechen wurden bei diesem Versuch und bei den verwandten Versuchen parallel untersucht. Dabei wurde eine definierte Menge der wässerigen Zusammensetzung (Badlösung) mit Hilfe eines Rollcoaters so aufgetragen, daß sich eine Naßfilmdicke von ca. 10 ml/m² ergab. Anschließend wurde der Naßfilm bei Temperaturen im Bereich von 80 bis 100 °C PMT aufgetrocknet, verfilmt und ausgehärtet. Die Zusammensetzung der ersten Badlösung wird in Tabelle 11 wiedergegeben.
Nach Abkühlung auf Raumtemperatur wurde anschließend eine zweite Behandlung mit einer zweiten, erfindungsgemäßen wässerigen Zusammensetzung durchgeführt. Dabei wurde eine definierte Menge der erfindungsgemäßen wässerigen Zusammensetzung (Badlösung) mit Hilfe eines Rollcoaters so aufgetragen, daß sich eine Naßfilmdicke von ca. 10 ml/m² ergab. Anschließend wurde der Naßfilm bei Temperaturen im Bereich von 80 bis 100 °C PMT aufgetrocknet, verfilmt und ausgehärtet. Die Zusammensetzung der zweiten Badlösung wird in Tabelle 11 wiedergegeben.

**Tabelle 11: Zusammensetzung der Badflüssigkeiten aller Beispiele und Vergleichsbeispiele:**

| Beispiel in Gew.-Teilen Gehalt in Gew.-Teilen | B 30 | B 31 | B 32 | B 33 | B 34 | B 35 |
|---|---|---|---|---|---|---|
| Zusammensetzung der Badlösung für den Behandlungsgang 1 | | | | | | |
| Wasser | 100 | 100 | 100 | 100 | 100 | 100 |
| Acryl-Polyester-Polyurethan-Mischpolymerisat | | | | 0,80 | | 0,80 |
| | | | | | | |
| Ethylen-Acryl- | 0.80 | 1,60 | 1,60 | 0,80 | 0,80 | |
| Mischpolymerisat | | | | | | |
| kolloidales SiO₂10 - 20 nm | 0.80 | 1,60 | 1,60 | 1,60 | 1,60 | 1,60 |
| Polysiloxan | 0,02 | 0,02 | 0,02 | 0,02 | 0,02 | 0,02 |
| Entschäumer | 0,02 | 0,02 | 0,02 | 0,02 | 0,02 | 0,02 |
| Ammonium-Zr-Carbonat | | | 0,40 | 0,40 | 0,40 | 0,40 |
| TPA-Amin-Komplex | 0,10 | 0,10 | 0,10 | 0,10 | 0,10 | 0,10 |
| Trockenschichtdicke, nm | 160 | 320 | 320 | 320 | 240 | 240 |
| | | | | | | |

| Zusammensetzung der Badlösung für den Behandlungsgang 2 | | | | | | |
|---|---|---|---|---|---|---|
| Wasser | 100 | 100 | 100 | 100 | 100 | 100 |
| Styrolacrylat | 1,80 | 1,80 | 1,80 | 1,80 | 1,80 | 1,80 |
| Acryl-Polyester-Polyurethan-Mischpolymerisat | 2,60 | 2,60 | 2,60 | 2,60 | 2,60 | 2,60 |
| | | | | | | |
| Ethylen-Acryl-Mischpolymerisat | 2,60 | 2,60 | 2,60 | 2,60 | 2,60 | 2,60 |
| | | | | | | |
| kolloidales SiO₂10 - 20 nm | 1,40 | 1,40 | 1,40 | 1,40 | 1,40 | 1,40 |
| oxidiertes Polyethylen | 0,50 | 0,50 | 0,50 | 0,50 | 0,50 | 0,50 |
| Polysiloxan | 0,10 | 0,10 | 0,10 | 0,10 | 0,10 | 0,10 |
| Entschäumer | 0,10 | 0,10 | 0,10 | 0,10 | 0,10 | 0,10 |
| langkettiger Alkohol | 0,40 | 0,40 | 0,40 | 0,40 | 0,40 | 0,40 |
| Ammonium-Zr-Carbonat | 0,40 | 0,40 | 0,40 | 0,40 | 0,40 | 0,40 |
| TPA-Amin-Komplex | 0,10 | 0,10 | 0,10 | 0,10 | 0,10 | 0,10 |
| Trockenschichtdicke, nm | 1000 | 1000 | 1000 | 1000 | 1000 | 1000 |

| Beispiel Gehalt in Gew.-Teilen | B 36 | B 37 | B 38 | B 39 | B 40 | |
|---|---|---|---|---|---|---|
| Zusammensetzung der Badlösung für den Behandlungsgang 1 | | | | | | |
| Wasser | 100 | 100 | 100 | 100 | 100 | |
| Silane | 0,80 | 1,60 | 2,40 | | | |
| Phosphonate | | | | 0,03 | | |
| Gemisch auf Basis von ZrF₆ und Polyacrylsäure | | | | | 0,07 | |
| | | | | | | |
| Trockenschichtdicke, nm | 80 | 160 | 240 | < 80 | 10 | |
| | | | | | | |

| Zusammensetzung der Badlösung für den Behandlungsgang 2 | | | | | | |
|---|---|---|---|---|---|---|
| Wasser | 100 | 100 | 100 | 100 | 100 | |
| Styrolacrylat | 1,80 | 1,80 | 1,80 | 1,80 | 1,80 | |
| Acryl-Polyester-Polyurethan-Mischpolymerisat | 2,60 | 2,60 | 2,60 | 2,60 | 2,60 | |
| | | | | | | |
| Ethylen-Acryl-Mischpolymerisat | 2,60 | 2,60 | 2,60 | 2,60 | 2,60 | |
| | | | | | | |
| kolloidales SiO₂10 - 20 nm | 1,40 | 1,40 | 1,40 | 1,40 | 1,40 | |
| oxidiertes Polyethylen | 0,50 | 0,50 | 0,50 | 0,50 | 0,50 | |
| Polysiloxan | 0,10 | 0,10 | 0,10 | 0,10 | 0,10 | |
| Entschäumer | 0,10 | 0,10 | 0,10 | 0,10 | 0,10 | |
| langkettiger Alkohol | 0,40 | 0,40 | 0,40 | 0,40 | 0,40 | |
| Ammonium-Zr-Carbonat | 0,40 | 0,40 | 0,40 | 0,40 | 0,40 | |
| TPA-Amin-Komplex | 0,10 | 0,10 | 0,10 | 0,10 | 0,10 | |
| Trockenschichtdicke, nm | 1000 | 1000 | 1000 | 1000 | 1000 | |

| Beispiel in Gew.-Teilen Gehalt in Gew.-Teilen | VB10 | B 41 | VB11 | VB12 | VB13 | |
|---|---|---|---|---|---|---|
| Zusammensetzung der Badlösung für den Behandlungsgang 1 | | | | | | |
| Wasser | 100 | 100 | 100 | 100 | 100 | |
| Silangemisch | | | 1,60 | | | |
| Phosphonate | | | | 0,03 | | |
| Gemisch auf Basis von ZrF₆ und Polyacrylsäure | | | | | 0,07 | |
| | | | | | | |
| Styrolacrylat | | 1,80 | | | | |
| Acryl-Polyester-Polyurethan-Mischpolymerisat | 0,80 | 2,60 | | | | |
| | | | | | | |
| Ethylen-Acryl-Mischpolymerisat | 0,80 | 2,60 | | | | |
| | | | | | | |
| kolloidales SiO₂10 - 20 nm | 1,60 | 1,40 | | | | |
| oxidiertes Polyethylen | | 0,50 | | | | |
| Polysiloxan | 0,02 | 0,10 | | | | |
| Entschäumer | 0,02 | 0,10 | | | | |
| langkettiger Alkohol | | 0,40 | | | | |
| Ammonium-Zr-Carbonat | 0,40 | 0,40 | | | | |
| TPA-Amin-Komplex | | 0,10 | | | | |
| Trockenschichtdicke, nm | 320 | 1000 | 160 | 160 | 10 | |
| | | | | | | |
| Ohne zweiten Behandlungsgang | | | | | | |

Die applizierte Trockenschichtdicke wird jeweils näherungsweise angegeben.

Erfindungsgemäßes Beispiel 31 bis 35:
Legierungsverzinkte bzw. feuerverzinkte Stahlbleche wurden wie im Beispiel 30 beschrieben mit der Behandlungsflüssigkeit entsprechend Tabelle 11 behandelt, getrocknet und geprüft.
Nach Abkühlung auf Raumtemperatur wurde anschließend eine zweite, erfindungsgemäße Behandlung mit der zweiten Badlösung entsprechend Tabelle 11 wie im Beispiel 30 beschrieben durchgeführt.

Erfindungsgemäßes Beispiel 36:
Legierungsverzinkte bzw. feuerverzinkte Stahlbleche wurden wie im Beispiel 30 beschrieben mit der nachfolgenden Behandlungsflüssigkeit behandelt, getrocknet und geprüft. Die Badlösung bestand im wesentlichen aus einem Gemisch aus 67 Gew.-% Bis-1,2-(triethoxysilyl)ethan und 33 Gew.-% Aminopropyltriethoxysilan, dem Essigsäure (Eisessig), technisch reines, vergälltes Methanol und demineralisiertes Wasser zugesetzt wurde. Der Silangehalt der eingesetzten Lösung betrug 0,8 Gew.-%. Die Essigsäure diente hierbei der Anpassung des pH-Werts, der Methanolgehalt der Erleichterung der Hydrolyse der Silane. Über die Konzentration der Lösung wurde die Trockenfilmdicke eingestellt.

Hierbei ergab sich beim Trocknen ein Trockenfilm von etwa 80 nm Dicke. Nach Abkühlung auf Raumtemperatur wurde anschließend eine zweite, erfindungsgemäße Behandlung mit der zweiten Badlösung wie im Beispiel 30 beschrieben durchgeführt.

Erfindungsgemäßes Beispiel 37:
Legierungsverzinkte bzw. feuerverzinkte Stahlbleche wurden wie im Beispiel 30 beschrieben mit der nachfolgend genannten Behandlungsflüssigkeit behandelt, getrocknet und geprüft. Die Badlösung bestand im wesentlichen aus einem Gemisch aus 67 Gew.-% Bis-1,2-(triethoxysilyl)ethan und 33 Gew.-% Aminopropyltriethoxysilan, dem Essigsäure (Eisessig), technisch reines, vergälltes Methanol und demineralisiertes Wasser zugesetzt wurde. Der Silangehalt der eingesetzten Lösung betrug 1,6 Gew.-%. Die Essigsäure diente hierbei der Anpassung des pH-Werts, der Methanolgehalt der Erleichterung der Hydrolyse der Silane. Über die Konzentration der Lösung wurde die Trockenfilmdicke eingestellt.

Hierbei ergab sich beim Trocknen ein Trockenfilm von etwa 160 nm Dicke. Nach Abkühlung auf Raumtemperatur wurde anschließend eine zweite, erfindungsgemäße Behandlung mit der zweiten Badlösung entsprechend Tabelle 11 wie im Beispiel 30 beschrieben durchgeführt.

Erfindungsgemäßes Beispiel 38:
Legierungsverzinkte bzw. feuerverzinkte Stahlbleche wurden wie im Beispiel 30 beschrieben mit der nachfolgend genannten Behandlungsflüssigkeit behandelt, getrocknet und geprüft. Die Badlösung bestand im wesentlichen aus einem Gemisch aus 67 Gew.-% Bis-1,2-(triethoxysilyl)ethan und 33 Gew.-% Aminopropyltriethoxysilan, dem Essigsäure (Eisessig), technisch reines, vergälltes Methanol und demineralisiertes Wasser zugesetzt wurde. Der Silangehalt der eingesetzten Lösung betrug 2,4 Gew.-%. Die Essigsäure diente hierbei der Anpassung des pH-Werts, der Methanolgehalt der Erleichterung der Hydrolyse der Silane. Über die Konzentration der Lösung wurde die Trockenfilmdicke eingestellt.

Hierbei ergab sich beim Trocknen ein Trockenfilm von etwa 240 nm Dicke. Nach Abkühlung auf Raumtemperatur wurde anschließend eine zweite, erfindungsgemäße Behandlung mit der zweiten Badlösung entsprechend Tabelle 11 wie im Beispiel 30 beschrieben durchgeführt.

Erfindungsgemäßes Beispiel 39:
Legierungsverzinkte bzw. feuerverzinkte Stahlbleche wurden wie im Beispiel 30 beschrieben mit der nachfolgend genannten Behandlungsflüssigkeit behandelt, getrocknet und geprüft. Die Badlösung bestand neben vollentsalztem Wasser aus Phosphon-Verbindungen, wobei ein sehr hoher Gehalt an Verbindungen auf Basis von 1,12-Dodecandiphosphonsäure enthalten war.

Hierbei ergab sich beim Trocknen ein Trockenfilm von durchschnittlich weniger als 80 nm Dicke, insbesondere von ein oder wenigen Moleküllagen, wobei sich die Phosphonverbindungen vorwiegend senkrecht zur Oberfläche ausrichteten. Nach Abkühlung auf Raumtemperatur wurde anschließend eine zweite, erfindungsgemäße Behandlung mit der zweiten Badlösung entsprechend Tabelle 11 wie im Beispiel 30 beschrieben durchgeführt.

Erfindungsgemäßes Beispiel 40:
Legierungsverzinkte bzw. feuerverzinkte Stahlbleche wurden wie im Beispiel 30 beschrieben mit der nachfolgend genannten Behandlungsflüssigkeit behandelt, getrocknet und geprüft. Die Badlösung bestand aus:

| | |
|---|---|
| 2 g/L | Hexafluorozirkonsäure, |
| 0,3 g/L | Al(OH)₃, |
| 1,8 g/L | Polyacrylsäure (Molekulargewicht: ca. 100.000), |
| 2 g/L | SiO₂ (als kolloidale Silica-Dispersion) und |
| 1 g/L | MnCO₃. |

Nach Abkühlung auf Raumtemperatur wurde anschließend eine zweite, erfindungsgemäße Behandlung mit der zweiten Badlösung entsprechend Tabelle 11 wie im Beispiel 30 beschrieben durchgeführt.

Bei Beispiel 41 und bei den Vergleichsbeispielen 11 bis 13 wurde nur der erste Behandlungsgang durchgeführt.

Erfindungsgemäßes Beispiel 41:
Legierungsverzinkte bzw. feuerverzinkte Stahlbleche wurden wie im Beispiel 30 beschrieben mit der Behandlungsflüssigkeit entsprechend Tabelle 11 behandelt, getrocknet und geprüft.

Vergleichsbeispiel 10:
Stahlbleche, die aus handelsüblichem kaltgewalzten Stahlband durch Beschichtung mit 55 % AlZn (Galvalume^{®}) legierungsverzinkt wurden bzw. durch Eintauchen in Zinkschmelze feuerverzinkt wurden (HDG), die danach zum Zwecke des Schutzes bei der Lagerung beölt wurden und die geschnitten wurden, wurden zunächst in einem alkalischen Spritzreiniger entfettet, mit Wasser gespült, bei erhöhter Temperatur getrocknet und anschließend mit der wässerigen Zusammensetzung behandelt. Dabei wurde eine definierte Menge der wässerigen Zusammensetzung (Badlösung) mit Hilfe eines Rollcoaters so aufgetragen, daß sich eine Naßfilmdicke von ca. 10 ml/m² ergab. Anschließend wurde der Naßfilm bei Temperaturen im Bereich von 80 bis 100 °C PMT aufgetrocknet, verfilmt und ausgehärtet. Die Badlösung zeigte eine Zusammensetzung entsprechend Tabelle 11.

Vergleichsbeispiel 11:
Legierungsverzinkte bzw. feuerverzinkte Stahlbleche wurden wie im Beispiel 30 beschrieben mit der nachfolgend genannten Behandlungsflüssigkeit behandelt, getrocknet und geprüft. Die Badlösung bestand im wesentlichen aus einem Gemisch aus 67 Gew.-% Bis-1,2-(triethoxysilyl)ethan und 33 Gew.-% Aminopropyltriethoxysilan, dem Essigsäure (Eisessig), technisch reines, vergälltes Methanol und demineralisiertes Wasser zugesetzt wurde. Der Silangehalt der eingesetzten Lösung betrug 1,6 Gew.-%. Die Essigsäure diente hierbei der Anpassung des pH-Werts, der Methanolgehalt der Erleichterung der Hydrolyse der Silane. Über die Konzentration der Lösung wurde die Trockenfilmdicke eingestellt. Hierbei ergab sich beim Trocknen ein Trockenfilm von etwa 160 nm Dicke.

Vergleichsbeispiel 12:
Legierungsverzinkte bzw. feuerverzinkte Stahlbleche wurden wie im Beispiel 30 beschrieben mit der nachfolgend genannten Behandlungsflüssigkeit behandelt, getrocknet und geprüft. Die Badlösung bestand neben vollentsalztem Wasser aus Phosphon-Verbindungen, wobei ein sehr hoher Gehalt an Verbindungen auf Basis von 1,12-Dodecandiphosphonsäure enthalten war. Hierbei ergab sich beim Trocknen ein Trockenfilm von durchschnittlich weniger als 80 nm Dicke, insbesondere von ein oder wenigen Moleküllagen, wobei sich die Phosphonverbindungen vorwiegend senkrecht zur Oberfläche ausrichteten.

Vergleichsbeispiel 13:
Legierungsverzinkte bzw. feuerverzinkte Stahlbleche wurden wie im Vergleichsbeispiel 10 beschrieben mit der nachfolgenden Behandlungsflüssigkeit behandelt, getrocknet und geprüft. Die Badlösung bestand aus:

| | |
|---|---|
| 2 g/L | Hexafluorozirkonsäure, |
| 0,3 g/L | Al(OH)₃, |
| 1,8 g/L | Polyacrylsäure (Molekulargewicht: ca. 100.000), |
| 2 g/L | SiO₂ (als kolloidale Silica-Dispersion) und |
| 1 | g/L MnCO₃. |

### Ergebnisse der Prüfungen an Galvalume^{®}-Blechen bzw. an feuerverzinkten Blechen (HDG)

Die Trockenschichtauflage der getrockneten, verfilmten, ausgehärteten und ggf. auch thermisch ausgehärteten Polymer-haltigen Beschichtungen ist näherungsweise aus Tabelle 11 ersichtlich. Alle erfindungsgemäßen Beschichtungen waren durchsichtig und farblos und zeigten einen leichten Seidenglanz, so daß der optische Charakter der metallischen Oberfläche praktisch unverändert erkennbar blieb.

**Tabelle 12: Ergebnisse der Korrosionsschutzprüfungen auf Galvalume^{®} im Salzsprühtest nach ASTM B 117-73**

| | Flächen-korrosion nach 24 h in % | Flächen-korrosion nach 48 h in % | Flächen-korrosion nach 120 h in % | Flächen-korrosion nach 240 h in % | Flächen-korrosion nach 480 h in % |
|---|---|---|---|---|---|
| B 30 | 0 | 0 | 0 | 0 | 2 |
| B 31 | 0 | 0 | 0 | 0 | 0 |
| B 32 | 0 | 0 | 0 | 0 | 0 |
| B 33 | 0 | 0 | 0 | 0 | 0 |
| B 34 | 0 | 0 | 0 | 0 | 0 |
| B 35 | 0 | 0 | 0 | 0 | 0 |
| B 36 | 0 | 0 | 0 | 0 | 2 |
| B 37 | 0 | 0 | 0 | 0 | 0 |
| B 38 | 0 | 0 | 0 | 0 | 0 |
| B 39 | 0 | 0 | 0 | 0 | 0 |
| B 40 | 0 | 0 | 0 | 0 | 0 |
| VB 10 | 2 | 5 | 10 | 15 | 20 |
| B 41 | 0 | 0 | 2 | 2 | 5 |
| VB 11 | 5 | 5 | 10 | 10 | 15 |
| VB 12 | 10 | 30 | 50 | 100 | entfällt |
| VB 13 | 10 | 30 | 50 | 100 | entfällt |

**Tabelle 13: Ergebnisse der Korrosionsschutzprüfungen auf feuerverzinkten Stahl der Qualität Z 250 im Salzsprühtest nach ASTM B 117-73**

| | Flächen-korrosion nach 24 h in % | Flächen-korrosion nach 48 h in % | Flächen-korrosion nach 120 h in % | Flächen-korrosion nach 240 h in % | Flächen-korrosion nach 480 h in % |
|---|---|---|---|---|---|
| B 30 | 0 | 0 | 5 | 15 | 30 |
| B 31 | 0 | 0 | 2 | 10 | 20 |
| B 32 | 0 | 0 | 2 | 10 | 20 |
| B 33 | 0 | 0 | 2 | 10 | 20 |
| B 34 | 0 | 0 | 2 | 10 | 20 |
| B 35 | 0 | 0 | 20 | 10 | 20 |
| B 36 | 0 | 0 | 5 | 15 | 30 |
| B 37 | 0 | 0 | 5 | 15 | 30 |
| B 38 | 0 | 0 | 50 | 10 | 20 |
| B 39 | 0 | 0 | 10 | 20 | 30 |
| B 40 | 0 | 0 | 10 | 20 | 30 |
| VB 10 | 50 | 100 | entfällt | entfällt | entfällt |
| B 41 | 0 | 2 | 5 | 10 | 40 |
| VB 11 | 5 | 5 | 10 | 20 | 50 |
| VB 12 | 50 | 100 | entfällt | entfällt | entfällt |
| VB 13 | 50 | 100 | Entfällt | Entfällt | entfällt |

**Tabelle 14: Ergebnisse der Korrosionsschutzprüfungen Schwitzwasser-Konstantklima-Test nach DIN 50 017 KK und Stapeltest auf Galvalume^{®}**

| | Schwitzwasser-Konstant-Klima-Test DIN 50 017 KK Flächenkorrosio n nach 960 h in % | Schwitzwasser-Konstant-Klima-Test DIN 50 017 KK Flächenkorrosion nach 1920 h in % | Stapeltest Flächenkorrosion nach 28 Tagen in % | Stapeltest Kantenkorrosion nach 28 Tagen in mm |
|---|---|---|---|---|
| B30 | 0 | 10 | 0 | <1 |
| B 31 | 0 | 0 | 0 | < 1 |
| B 32 | 0 | 0 | 0 | < 1 |
| B 33 | 0 | 0 | 0 | < 1 |
| B 34 | 0 | 0 | 0 | < 1 |
| B 35 | 0 | 0 | 0 | < 1 |
| B 36 | 0 | 10 | 0 | < 1 |
| B 37 | 0 | 5 | 0 | < 1 |
| B 38 | 0 | 0 | 0 | < 1 |
| B 39 | 0 | 0 | 0 | < 1 |
| B 40 | 0 | 0 | 0 | < 1 |
| VB 10 | 10 | 40 | 100 | vollständig korrodiert |
| B 41 | 0 | 5 | 0 | 2 |
| VB 11 | 10 | 30 | 100 | vollständig korrodiert |
| VB 12 | 30 | 40 | 100 | vollständig korrodiert |
| VB 13 | 30 | 40 | 100 | vollständig korrodiert |

**Tabelle 15: Ergebnisse der Korrosop,sschutsprüfungen Schwitzwaqqer-Konstantklima-Test nach DIN 50 017 KK und Stapeltest auf HDG**

| | Schwitzwasser-Konstant-klima-Test DIN 50 017 KK Flächenkorrosion nach 960 h in % | Schwitzwasser-Konstant-klima-Test DIN 50 017 KK Flächen-korrosion nach 1920 h in % | Stapeltest Flächenkorrosion nach 28 Tagen in % | Stapeltest Kantenkorrosion nach 28 Tagen in mm |
|---|---|---|---|---|
| B30 | 0 | 10 | < 5 | 3 |
| B31 | 0 | 0 | <2 | <1 |
| B32 | 0 | 0 | <2 | <1 |
| B33 | 0 | 0 | <2 | <1 |
| B34 | 0 | 0 | <2 | <1 |
| B35 | 0 | 0 | <2 | <1 |
| B36 | 0 | 10 | <2 | <1 |
| B37 | 0 | 5 | <2 | <1 |
| B38 | 0 | 0 | <2 | <1 |
| B39 | 0 | 0 | <2 | <1 |
| B40 | 0 | 0 | <2 | <1 |
| VB 10 | 10 | 40 | 100 | vollständig korrodiert |
| B41 | 0 | 10 | < 5 | 2 |
| VB 11 | 10 | 30 | 100 | vollständig korrodiert |
| VB 12 | 30 | 40 | 100 | vollständig korrodiert |
| VB 13 | 30 | 40 | 100 | vollständig korrodiert |

Die kleinsten Werte der Korrosionstests der Tabellen 12 bis 15 geben die besten Resultate wieder. Im Vergleich zu den Beispielen 30 bis 40 zeigen die Vergleichsbeispiele 10 bis 13 deutlich schlechtere und Beispiel 41 ein wenig schlechtere Korrosionsschutzwerte der einschichtigen Oberflächenbehandlung im Vergleich zur zweischichtigen Oberflächenbehandlung.

Der Stapeltest wurde wie zuvor beschrieben ausgeführt.

Die mechanischen Prüfungen an Galvalume^{®}-Blechen bzw. bei HDG erfolgten in einer Prüfkammer nach DIN 50 017 KK über eine Prüfzeit von 4 Wochen. Danach wurde beurteilt, welche Art von Rost (Rotrost, Schwarzrost, Weißrost) sich im Kantenbereich entwickelt hatte und welcher prozentuale Flächenanteil hiervon betroffen ist. Außerdem wurde beurteilt, welche Art von Rost sich über die gesamte Oberfläche entwickelt hatte und wie groß der prozentuale korrodierte Flächenanteil auf der behandelten Blechoberfläche ist. Galvalume^{®}-Bleche korrodieren hierbei zunächst weiß bzw. schwarz und - wenn die Aluminium-Zink-Legierungsbeschichtung aufgebraucht bzw. bis auf das Stahlblech beschädigt ist - vergleichbar mit Stahl rot. Die Ergebnisse waren bei beiden Substratarten identisch.

**Tabelle 16: Ergebnisse der mechanischen Prüfungen getestet auf Galvalume^{®}-Blechen bzw. HDG**

| | Pendelhärte nach König, nach DIN 53 157 | Dornbiegetest mit konischem Dorn von 3,2 mm bis 38 mm Durchmesser, nach DIN ISO 6860 | Näpfchenzugtest nach Erichsen |
|---|---|---|---|
| B 30 | 60 | keine Risse | unbeeinträchtigt |
| B 31 | 60 | keine Risse | unbeeinträchtigt |
| B 32 | 60 | keine Risse | unbeeinträchtigt |
| B 33 | 60 | keine Risse | unbeeinträchtigt |
| B 34 | 60 | keine Risse | unbeeinträchtigt |
| B 35 | 60 | keine Risse | unbeeinträchtigt |
| B 36 | 60 | keine Risse | unbeeinträchtigt |
| B 37 | 60 | keine Risse | unbeeinträchtigt |
| B 38 | 60 | keine Risse | unbeeinträchtigt |
| B 39 | 60 | keine Risse | unbeeinträchtigt |
| B 40 | 60 | keine Risse | unbeeinträchtigt |
| VB 10 | entfällt | Risse | gerissen, Abrieb |
| B 41 | 60 | keine Risse | unbeeinträchtigt |
| VB 11 | entfällt | Risse | gerissen, Abrieb |
| VB 12 | entfällt | Risse | gerissen, Abrieb |
| VB 13 | entfällt | Risse | gerissen, Abrieb |

Die Pendelhärte wurde über jeweils 5 Meßwerte gemittelt, wobei die Werte entsprechend auf- bzw. abgerundet wurden. Je niedriger die Pendelhärte ist, desto weicher ist der Film und üblicherweise ist dann auch die Haftung des Films auf der metallischen Oberfläche besser.

Die zähelastischen Eigenschaften der erfindungsgemäßen Beschichtung wurden so eingestellt, daß die Beschichtung weder zu weich, noch zu hart für den mechanischen Angriff der Werkzeuge während der Umformung ist. Dadurch bleibt eine weitgehend unbeschädigte Beschichtung nach der Umformung erhalten. Außerdem werden die Schnittkanten durch diese zähelastischen Eigenschaften relativ gut geschützt, da die Beschichtung an den Schnittkanten nicht splittert und teilweise sogar auf die Schnittkante aufgezogen wird und dadurch einen erhöhten Kantenschutz erzielt.

Der Dornbiegetest belegt die gute Flexibilität und die gute Haftung der Beschichtung zum metallischen Untergrund sowie ihre hervorragende Umformbarkeit.

Das Umformen erfolgte wie zuvor beschrieben mit einer Näpfchenzugmaschine der Fa. Erichsen, Modell 142-20, mit einer Niederhaltekraft von 2500 kp und mit einer Ziehkraft von 2 Mp. Aus den erfindungsgemäß behandelten Blechabschnitten aus Galvalume^{®} wurden Ronden von 60 mm Durchmesser ausgestanzt, die zu hutförmigen Näpfchen mit Krempe meistens ca. 15 bis 17 mm tief und mit einem Näpfchendurchmesser von ca. 35 mm gezogen wurden. Die guten Umformeigenschaften scheinen daher von dem Gehalt an organischer Substanz, insbesondere vom oxidierten Polyethylen, zu stammen und werden durch den Gehalt an anorganischen Partikeln positiv beeinflußt.

Es wird erwartet, daß die an Galvalume^{®}-Blechen und feuerverzinkten Blechen ausgeführten Versuche und ermittelten Ergebnisse auf Bleche, die mit AlSi-, ZnAl-, ZnFe-, ZnNi-, Al und andersartigen Zn-Beschichtungen versehen sind, ohne Änderung der Verfahrensparameter übertragbar sind und zu nahezu gleichartigen Ergebnissen führen.

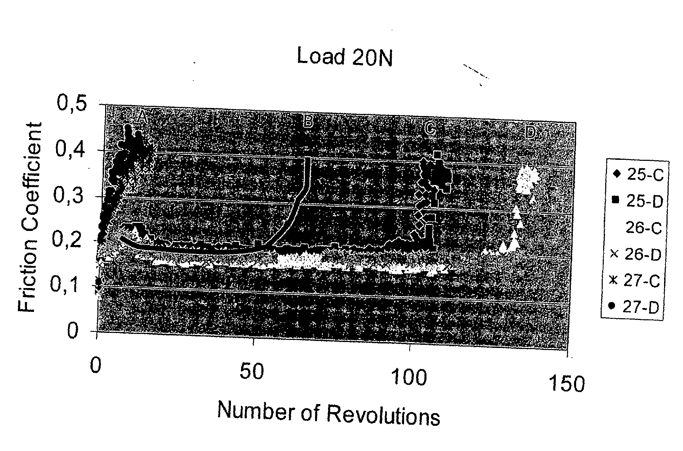

## Patentansprüche

1. Verfahren zur Beschichtung eines metallischen Bandes, wobei das Band oder die im folgenden Prozeß daraus hergestellten Bandabschnitte zuerst mit mindestens einer Korrosionsschutzschicht und danach mit mindestens einer Schicht einer lackähnlichen Polymer-haltigen Schicht überzogen wird/werden, wobei das Band nach dem Beschichten mit mindestens einer Korrosionsschutzschicht oder nach dem Beschichten mit mindestens einer Schicht einer lackähnlichen Beschichtung zu Bandabschnitten zerteilt wird, wobei die beschichteten Bandabschnitte dann umgeformt, gefügt oder/und mit mindestens einer lackähnlichen Schicht oder/und Lackschicht beschichtet werden, wobei die lackähnliche Beschichtung gebildet wird durch Beschichten der Oberfläche mit einer wässerigen Dispersion, die neben Wasser
a) einen organischen Filmbildner enthält, der aus mindestens einem wasserlöslichen oder wasserdispergierten Polymer mit einer Säurezahl im Bereich von 5 bis 200 auf der Basis von Kunstharzgemischen oder/und Mischpolymerisaten aus Kunstharz auf Basis von
Acrylat,
Ethylen,
Harnstoff-Formaldehyd,
Polyester,
Polyurethan,
Styrol,
Styrolbutadien oder/und von
Acryl-Polyester-Polyurethan-Mischpolymerisat,
Carboxylgruppen-haltigem Polyester,
Ethylen-Acryl-Mischpolymerisat,
Melamin-Formaldehyd oder/und
Styrolacrylat besteht,
b) mindestens eine anorganische Verbindung in Partikelform mit einem mittleren Partikeldurchmesser gemessen an einem Rasterelektronenmikroskop im Bereich von 0,005 bis zu 0,3 µm Durchmesser und
c) mindestens ein Gleitmittel enthält,
wobei die mit mindestens einer Korrosionsschutzschicht beschichtete metallische Oberfläche mit der wässerigen Zusammensetzung in Kontakt gebracht und ein Partikel enthaltender Film auf der metallischen Oberfläche ausgebildet wird, der anschließend getrocknet wird oder getrocknet und zusätzlich ausgehärtet wird, wobei keine aktinische Strahlung zur Aushärtung verwendet wird, wobei der getrocknete oder getrocknete und auch ausgehärtete Film eine Schichtdicke im Bereich von 0,01 bis 10 µm aufweist.

2. Verfahren nach Anspruch 1, **dadurch gekennzeichnet, daß** eine Oberfläche von Aluminium, Eisen, Kupfer, Magnesium, Nickel, Titan, Zinn, Zink oder Aluminium, Eisen, Kupfer, Magnesium, Nickel, Titan, Zinn oder/und Zink enthaltenden Legierungen beschichtet wird.

3. Verfahren nach Anspruch 1 oder 2, **dadurch gekennzeichnet, daß** die wässerige Zusammensetzung weitgehend oder gänzlich von Chrom(VI)-Verbindungen frei ist.

4. Verfahren nach einem der vorstehenden Ansprüche, **dadurch gekennzeichnet, daß** die wässerige Zusammensetzung mindestens ein organisches Lösemittel, mindestens ein Silan oder/und Siloxan berechnet als Silan, mindestens ein Vernetzungsmittel oder/und mindestens eine Chrom(VI)-Verbindung enthält.

5. Verfahren nach einem der vorstehenden Ansprüche, **dadurch gekennzeichnet, daß** der organische Filmbildner in der Form einer Lösung, Dispersion, Emulsion, Mikroemulsion oder/und Suspension vorliegt.

6. Verfahren nach einem der vorstehenden Ansprüche, **dadurch gekennzeichnet, daß** der organische Filmbildner ein Kunstharzgemisch oder/und Mischpolymerisat ist, das einen Gehalt an Kunstharz auf Basis Acrylat, Ethylen, Harnstoff-Formaldehyd, Polyester, Polyurethan, Styrol oder/und Styrolbutadien enthält, aus dem während oder nach der Abgabe von Wasser und anderen flüchtigen Bestandteilen ein organischer Film ausbildet wird.

7. Verfahren nach einem der vorstehenden Ansprüche, **dadurch gekennzeichnet, daß** die Molekulargewichte der Kunstharze, Copolymere, Polymere oder deren Derivate, Mischungen oder/und Mischpolymerisate mindestens 1000 u betragen.

8. Verfahren nach einem der vorstehenden Ansprüche, **dadurch gekennzeichnet, daß** der pH-Wert des organischen Filmbildners in einer wässerigen Zubereitung ohne Zugabe weiterer Verbindungen im Bereich von 1 bis 12 liegt.

9. Verfahren nach einem der vorstehenden Ansprüche, **dadurch gekennzeichnet, daß** der organische Filmbildner nur wasserlösliche Kunstharze oder/und Polymere enthält, die in Lösungen mit pH-Werten ≤ 5 stabil sind.

10. Verfahren nach einem der vorstehenden Ansprüche, **dadurch gekennzeichnet, daß** der organische Filmbildner Kunstharz oder/und Polymer enthält, das Carboxyl-Gruppen aufweist.

11. Verfahren nach einem der vorstehenden Ansprüche, **dadurch gekennzeichnet, daß** die Kunstharze Säuregruppen enthalten, die mit Ammoniak, mit Aminen oder/und mit Alkalimetallverbindungen stabilisiert sind.

12. Verfahren nach Anspruch 11, **dadurch gekennzeichnet, daß** die
Kunstharze Säuregruppen enthalten, die mit Morpholin, Dimethylethanolamin, Diethylethanolamin oder Triethanolamin oder/und mit Natriumhydroxid stabilisiert sind.

13. Verfahren nach einem der vorstehenden Ansprüche, **dadurch gekennzeichnet, daß** die wässerige Zusammensetzung 0,1 bis 1000 g/L des organischen Filmbildners enthält.

14. Verfahren nach einem der vorstehenden Ansprüche, **dadurch gekennzeichnet, daß** die wässerige Zusammensetzung mindestens ein teilhydrolysiertes oder gänzlich hydrolysiertes Silan enthält.

15. Verfahren nach einem der vorstehenden Ansprüche, **dadurch gekennzeichnet, daß** mindestens ein Aminosilan, ein Epoxysilan, ein Vinylsilan oder/und mindestens ein entsprechendes Siloxan enthalten ist.

16. Verfahren nach einem der vorstehenden Ansprüche, **dadurch gekennzeichnet, daß** der Gehalt an mindestens einem Silan oder/und Siloxan berechnet als Silan in der wässerigen Zusammensetzung 0,1 bis 50 g/L beträgt.

17. Verfahren nach einem der vorstehenden Ansprüche, **dadurch gekennzeichnet, daß** als anorganische Verbindung in Partikelform ein feinverteiltes Pulver, eine Dispersion oder eine Suspension von einem Carbonat, Oxid, Silicat oder Sulfat zugesetzt wird.

18. Verfahren nach einem der vorstehenden Ansprüche, **dadurch gekennzeichnet, daß** als anorganische Verbindung in Partikelform Partikel mit einer mittleren Partikelgröße im Bereich von 8 nm bis 150 nm verwendet werden.

19. Verfahren nach einem der vorstehenden Ansprüche, **dadurch gekennzeichnet, daß** als anorganische Verbindung in Partikelform Partikel auf Basis von mindestens einer Verbindung des Aluminiums, Bariums, Cers, Kalziums, Lanthans, Siliciums, Titans, Yttriums, Zinks oder/und Zirkoniums zugesetzt werden.

20. Verfahren nach einem der vorstehenden Ansprüche, **dadurch gekennzeichnet, daß** als anorganische Verbindung in Partikelform Partikel auf Basis von Aluminiumoxid, Bariumsulfat, Cerdioxid, Siliciumdioxid, Silicat, Titanoxid, Yttriumoxid, Zinkoxid oder/und Zirkonoxid zugesetzt werden.

21. Verfahren nach einem der vorstehenden Ansprüche, **dadurch gekennzeichnet, daß** die wässerige Zusammensetzung 0,1 bis 500 g/L der mindestens einen anorganischen Verbindung in Partikelform enthält.

22. Verfahren nach einem der vorstehenden Ansprüche, **dadurch gekennzeichnet, daß** die wässerige Zusammensetzung mindestens einen Korrosionsinhibitor enthält.

23. Verfahren nach Anspruch 22, **dadurch gekennzeichnet, daß** die wässerige Zusammensetzung mindestens einen Korrosionsinhibitor auf Basis von Amin(en), mindestens ein leitfähiges Polymer oder/und mindestens ein Thiol enthält

24. Verfahren nach einem der vorstehenden Ansprüche, **dadurch gekennzeichnet, daß** die wässerige Zusammensetzung mindestens ein Vernetzungsmittel auf Basis einer basischen Verbindung enthält.

25. Verfahren nach Anspruch 24, **dadurch gekennzeichnet, daß** die wässerige Zusammensetzung mindestens ein Vernetzungsmittel auf Basis von Titan, Hafnium oder/und Zirkonium oder auf Basis von Carbonat oder Ammoniumcarbonat enthält.

26. Verfahren nach einem der vorstehenden Ansprüche, **dadurch gekennzeichnet, daß** die wässerige Zusammensetzung frei von anorganischen Säuren oder/und organischen Carbonsäuren ist.

27. Verfahren nach einem der vorstehenden Ansprüche, **dadurch gekennzeichnet, daß** als organisches Lösemittel für die organischen Polymere mindestens ein wassermischbarer oder/und wasserlöslicher Alkohol, ein Glykolether oder N-Methylpyrrolidon oder/und Wasser verwendet wird.

28. Verfahren nach einem der Ansprüche 1 bis 26, **dadurch gekennzeichnet, daß** als organisches Lösemittel für die organischen Polymere nur Wasser oder im Falle der Verwendung eines Lösemittelgemisches aus mindestens einem langkettigen Alkohol mit Wasser Propylenglykol, ein Esteralkohol, ein Glykolether oder/und Butandiol, verwendet wird.

29. Verfahren nach einem der vorstehenden Ansprüche, **dadurch gekennzeichnet, daß** der Gehalt an organischem Lösemittel 0,1 bis 10 Gew.-% beträgt.

30. Verfahren nach einem der vorstehenden Ansprüche, **dadurch gekennzeichnet, daß** als Gleitmittel mindestens ein Wachs ausgewählt aus der Gruppe der Paraffine, Polyethylene und Polypropylene verwendet wird.

31. Verfahren nach Anspruch 30, **dadurch gekennzeichnet, daß** der Schmelzpunkt des als Gleitmittel eingesetzten Wachses im Bereich von 40 bis 160 °C liegt.

32. Verfahren nach einem der vorstehenden Ansprüche, **dadurch gekennzeichnet, daß** zusätzlich ein leitfähiges Polymer zugesetzt wird.

33. Verfahren nach einem der vorstehenden Ansprüche, **dadurch gekennzeichnet, daß** die wässerige Zusammensetzung mindestens ein Biozid, mindestens einen Entschäumer oder/und mindestens ein Netzmittel enthält.

34. Verfahren nach einem der vorstehenden Ansprüche, **dadurch gekennzeichnet, daß** eine wässerige Zusammensetzung mit einem pH-Wert im Bereich von 0,5 bis 12 eingesetzt wird.

35. Verfahren nach einem der vorstehenden Ansprüche, **dadurch gekennzeichnet, daß** die wässerige Zusammensetzung bei einer Temperatur im Bereich von 5 bis 50 °C auf die metallische Oberfläche aufgebracht wird.

36. Verfahren nach einem der vorstehenden Ansprüche, **dadurch gekennzeichnet, daß** die metallische Oberfläche bei der Applikation der Beschichtung auf Temperaturen im Bereich von 5 bis 120 °C gehalten wird.

37. Verfahren nach einem der vorstehenden Ansprüche, **dadurch gekennzeichnet, daß** die beschichtete metallische Oberfläche bei einer Temperatur im Bereich von 20 bis 400 °C PMT getrocknet wird.

38. Verfahren nach einem der vorstehenden Ansprüche, **dadurch gekennzeichnet, daß** die beschichteten Bänder nach einer Abkühlung auf eine Temperatur im Bereich von 40 bis 70 °C zu einem Coil aufgewickelt werden..

39. Verfahren nach einem der vorstehenden Ansprüche, **dadurch gekennzeichnet, daß** die wässerige Zusammensetzung durch Aufwalzen, Fluten, Aufrakeln, Spritzen, Sprühen, Streichen oder Tauchen oder Tauchen und nachfolgendes Abquetschen mit einer Rolle aufgetragen wird.

40. Verfahren nach einem der vorstehenden Ansprüche, **dadurch gekennzeichnet, daß** der getrocknete oder getrocknete und auch ausgehärtete Film eine Pendelhärte von 30 bis 190 s aufweist, gemessen mit einem Pendelhärteprüfer nach König nach DIN 53157.

41. Verfahren nach einem der vorstehenden Ansprüche, **dadurch gekennzeichnet, daß** der getrocknete oder getrocknete und auch ausgehärtete Film eine derartige Flexibilität aufweist, daß beim Biegen über einen konischen Dorn bei einem Dornbiegetest weitestgehend nach DIN ISO 6860 für einen Dorn von 3.2 mm bis 38 mm Durchmesser - jedoch ohne die Testfläche anzureißen - keine Risse länger als 2 mm entstehen, die bei der anschließenden Benetzung mit Kupfersulfat durch Farbumschlag infolge Kupferabscheidung auf der aufgerissenen metallischen Oberfläche erkennbar werden.

42. Verfahren nach einem der vorstehenden Ansprüche, **dadurch gekennzeichnet, daß** auf den getrockneten oder getrockneten und auch ausgehärteten Film jeweils mindestens eine Beschichtung aus Lack, Polymeren, Farbe, Klebstoff oder/und Klebstoffträger aufgebracht wird.

43. Verfahren nach einem der vorstehenden Ansprüche, **dadurch gekennzeichnet, daß** die beschichteten Metallteile, Bänder oder Bandabschnitte umgeformt, lackiert, mit Polymeren beschichtet, bedruckt, beklebt, heißgelötet, geschweißt oder/und durch Clinchen oder andere Fügetechniken miteinander oder mit anderen Elementen verbunden werden.

44. Verfahren nach einem der vorstehenden Ansprüche, **dadurch gekennzeichnet, daß** das Band nach dem Lackieren mit einer lackähnlichen Beschichtung geschnitten wird und die lackierten Bandabschnitte beim Schneiden oder/und dann umgeformt werden.

45. Verfahren nach Anspruch 44, **dadurch gekennzeichnet, daß** die lackierten Bandabschnitte danach mit anderen Formteilen durch Börteln, Clinchen, Kleben, Schweißen oder/und ein anderes mechanisches Verbindungsverfahren verbunden werden.

46. Verfahren nach einem der vorstehenden Ansprüche, **dadurch gekennzeichnet, daß** mindestens zwei oder drei Korrosionsschutzschichten nacheinander aufgebracht werden, von denen jede dieser zwei oder drei Schichten eine Korrosionsschutzschicht ausgewählt aus der Gruppe von Beschichtungen auf der Basis von jeweils Eisen-Kobalt, Nickel-Kobalt, mindestens einem Fluorid, mindestens einem komplexen Fluorid, einer organischen Hydroxyverbindung, einem Phosphat, einem Phosphonat, einem Polymer, einer Seltenerdverbindung einschließlich Verbindungen von Lanthan und Yttrium, einem Silan/Siloxan, einem Silicat, Kationen von Aluminium, Magnesium oder/und mindestens einem Übergangsmetall ausgewählt aus der Gruppe von Chrom, Eisen, Hafnium, Kobalt, Mangan, Molybdän, Nickel, Titan, Wolfram und Zirkon oder einer Beschichtung auf Basis von Nanopartikeln ist.

47. Verfahren nach einem der vorstehenden Ansprüche, **dadurch gekennzeichnet, daß** die erste Korrosionsschutzschicht in einem Auftrockenverfahren und daß die zweite Korrosionsschutzschicht in einem Auftrockenverfahren oder rinse-Verfahren aufgebracht wird.

48. Verfahren nach einem der vorstehenden Ansprüche, **dadurch gekennzeichnet, daß** die erste Korrosionsschutzschicht in einem rinse-Verfahren und daß die zweite Korrosionsschutzschicht in einem Auftrockenverfahren oder rinse-Verfahren aufgebracht wird.

49. Verfahren nach einem der vorstehenden Ansprüche, **dadurch gekennzeichnet, daß** die zweite Korrosionsschutzschicht in einem Nachspülschritt aufgebracht wird.

50. Verfahren nach einem der vorstehenden Ansprüche, **dadurch gekennzeichnet, daß** die zweite Korrosionsschutzschicht in einem Auftrockenverfahren aufgebracht wird.

51. Verfahren nach einem der vorstehenden Ansprüche, **dadurch gekennzeichnet, daß** Oberflächen von Aluminium, Eisen, Kobalt, Kupfer, Magnesium, Nickel, Titan, Zinn, Zink oder Aluminium, Eisen, Kobalt, Kupfer, Magnesium, Nickel, Titan, Zinn oder/und Zink enthaltende Legierungen beschichtet werden.

52. Verfahren nach einem der vorstehenden Ansprüche, **dadurch gekennzeichnet, daß** mit mindestens einer weitgehend oder gänzlich von Chrom-Verbindungen freien Flüssigkeit, Lösung oder Suspension vor dem Beschichten mit mindestens einem Lack oder/und mit mindestens einer lackähnlichen Polymer-haltigen Schicht, die Polymere, Copolymere, Oligomere, Phosphonate, Silane oder/und Siloxane enthält, beschichtet wird.

53. Verfahren nach einem der vorstehenden Ansprüche, **dadurch gekennzeichnet, daß** kein Blei, Cadmium, Chrom, Kobalt, Kupfer oder/und Nickel der Flüssigkeit, Lösung oder Suspension für die erste oder/und zweite Korrosionsschutzschicht zugegeben wird.

54. Verfahren nach einem der vorstehenden Ansprüche, **dadurch gekennzeichnet, daß** die Flüssigkeit, Lösung oder Suspension für mindestens eine der Korrosionsschutzschichten oder/und lackähnlichen Polymer-haltigen Schichten neben Wasser mindestens einen organischen Filmbildner enthält mit mindestens einem wasserlöslichen oder wasserdispergierten Polymer, Copolymer, Blockcopolymer, Monomer, Oligomer, deren Derivat(e), Mischung oder/und Mischpolymerisat.

55. Verfahren nach einem der vorstehenden Ansprüche, **dadurch gekennzeichnet, daß** die Flüssigkeit, Lösung oder Suspension für mindestens eine der Korrosionsschutzschichten oder/und lackähnlichen Polymer-haltigen Schichten neben Wasser einen Gesamtgehalt an Kationen, Tetrafluorokomplexen oder/und Hexafluorokomplexen von Kationen ausgewählt aus der Gruppe von Titan, Zirkonium, Hafnium, Silicium, Aluminium und Bor oder/und freies oder anderweitig gebundenes Fluor in Höhe von 0,1 bis 15 g/L, bezogen auf F₆ enthält.

56. Verfahren nach einem der vorstehenden Ansprüche, **dadurch gekennzeichnet, daß** die Flüssigkeit, Lösung oder Suspension für mindestens eine der Korrosionsschutzschichten oder/und lackähnlichen Polymer-haltigen Schichten neben Wasser einen Gesamtgehalt an freiem oder nicht an Tetra- oder Hexafluorokomplexe gebundenem Fluor in Höhe von 0,1 bis 1000 mg/L berechnet als freies Fluor enthält.

57. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten neben Wasser mindestens eine anorganische Verbindung in Partikelform mit einem mittleren Partikeldurchmesser gemessen an einem Rasterelektronenmikroskop im Bereich von 0,003 bis zu 1 µm Durchmesser auf Basis von Al₂O₃, BaSO₄, Seltenerdoxid(en), mindestens einer anderen Seltenerdverbindung, SiO₂, Silicat, TiO₂, Y₂O₃, Zn, ZnO oder/und ZrO₂ aufweist.

58. Verfahren nach Anspruch 57, **dadurch gekennzeichnet, daß** die Flüssigkeit, Lösung oder Suspension für mindestens eine der Korrosionsschutzschichten, Lackschichten oder/und lackähnlichen Polymer-haltigen Schichten neben Wasser mindestens eine dieser anorganischen Verbindungen in Partikelform in einem Gehalt im Bereich von 0,1 bis 80 g/L aufweist.

59. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder lackähnlichen Polymer-haltigen Schichten mindestens einen Korrosionsinhibitor ausgewählt aus der Gruppe von organischen Phosphatverbindungen, Phosphonatverbindungen, organischen Morpholin- und Thioverbindungen, Aluminaten, Manganaten, Titanaten und Zirkonaten enthält.

60. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder lackähnlichen Polymer-haltigen Schichten mindestens eine Verbindung zur langsamen Neutralisierung vergleichsweise saurer Gemische oder/und zum Korrosionsschutz ungeschützter oder beschädigter Partien der metallischen Oberfläche enthält.

61. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten neben Wasser mindestens ein Silan oder/und Siloxan berechnet als Silan in einem Gehalt im Bereich von 0,1 bis 50 g/L enthält.

62. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten einen organischen Filmbildner in der Form einer Lösung, Dispersion, Emulsion, Mikroemulsion oder/und Suspension enthält.

63. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten als organischen Filmbildner mindestens ein Kunstharz auf Basis Acrylat, Ethylen, Polyester, Polyurethan, Styrol, Styrolbutadien, Harnstoff-Formaldehyd, deren Derivate, Copolymere, Blockcopolymere, Monomere, Oligomere, Polymere, Mischungen oder/und Mischpolymerisate enthält.

64. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten als organischen Filmbildner ein Kunstharzgemisch oder/und Mischpolymerisat enthält, das einen Gehalt an Kunstharz auf Basis Acrylat, Ethylen, Harnstoff-Formaldehyd, Polyester, Polyurethan, Styrol oder/und Styrolbutadien oder deren Derivate, Copolymere, Crosspolyme, Oligomere, Polymere, Mischungen oder/und Mischpolymerisate enthält, aus dem während oder nach der Abgabe von Wasser und anderen flüchtigen Bestandteilen ein organischer Film ausbildet wird.

65. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten Kunstharz enthält, dessen Säurezahl im Bereich von 5 bis 250 liegt.

66. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten Kunstharze oder/und Polymere, Copolymere, Blockcopolymere, Monomere, Oligomere, Polymere, Mischungen oder/und Mischpolymerisate oder deren Derivate enthält, deren Molekulargewichte im Bereich von mindestens 1.000 u liegen.

67. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten 0,1 bis 500 g/L Kunstharze oder/und Polymere, Blockcopolymere, Copolymere, Monomere, Oligomere, Polymere, Mischungen oder/und Mischpolymerisate oder deren Derivate enthält.

68. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten einen organischen Filmbildner enthält, dessen pH-Wert in einer wässerigen Zubereitung ohne Zugabe weiterer Verbindungen im Bereich von 1 bis 12 liegt.

69. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten einen organischen Filmbildner enthält, der nur wasserlösliche Kunstharze oder/und Polymere, Copolymere, Blockcopolymere, Monomere, Oligomere, Polymere, Mischungen oder/und Mischpolymerisate oder deren Derivate enthält, die in Lösungen mit pH-Werten ≤ 5 stabil sind.

70. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten einen organischen Filmbildner enthält, dessen Kunstharze oder/und Polymere, Copolymere, Blockcopolymere, Monomere, Oligomere, Polymere, Mischungen oder/und Mischpolymerisate oder deren Derivate Carboxyl-Gruppen aufweisen.

71. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten einen organischen Filmbildner enthält, bei dem die Säuregruppen der Kunstharze oder/und Polymere, Copolymere, Blockcopolymere, Monomere, Oligomere, Polymere, Mischungen oder/und Mischpolymerisate oder deren Derivate mit Ammoniak, mit Aminen oder/und mit Alkalimetallverbindungen stabilisiert sind.

72. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten 0,1 bis 200 g/L des organischen Filmbildners enthält.

73. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten 100 bis 2000 g/L des organischen Filmbildners enthält.

74. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten einen Anteil an Monomeren im Bereich von mindestens 5 Gew.-% enthält.

75. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten 0,1 bis 50 g/L an Kationen, Tetrafluorokomplexen oder/und Hexafluorokomplexen von Kationen ausgewählt aus der Gruppe von Titan, Zirkonium, Hafnium, Silicium, Aluminium und Bor enthält.

76. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten mindestens eine metallorganische Verbindung mit einem Gehalt an Titan oder/und Zirkonium enthält.

77. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten einen Gehalt an mindestens einem Silan oder/und Siloxan berechnet als Silan in der wässerigen Zusammensetzung in einem Bereich von 0,2 bis 40 g/L enthält.

78. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten mindestens ein teilhydrolysiertes Silan, mindestens ein gänzlich hydrolysiertes Silan oder/und mindestens ein Siloxan enthält.

79. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten mindestens ein teilhydrolysiertes oder/und nicht hydrolysiertes Silan bei einem Gehalt an Silan von mehr als 100 g/L enthält.

80. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten jeweils mindestens ein Acyloxysilan, ein Alkylsilan, ein Aminosilan, ein Bis-Silyl-Silan, ein Epoxysilan, ein Fluoroalkylsilan, ein Glycidoxysilan, ein Isocyanato-Silan, ein Mercapto-Silan, ein (Meth)acrylato-Silan, ein Mono-Silyl-Silan, ein Multi-Silyl-Silan, ein Schwefel enthaltendes Silan, ein Ureidosilan, ein Vinylsilan oder/und mindestens ein entsprechendes Siloxan enthält.

81. Verfahren nach einem der vorstehenden Ansprüche, **dadurch gekennzeichnet, daß** der Flüssigkeit, Lösung oder Suspension für mindestens eine der Korrosionsschutzschichten, Lackschichten oder/und lackähnlichen Polymer-haltigen Schichten als anorganische Verbindung in Partikelform ein feinverteiltes Pulver, eine Dispersion oder eine Suspension von kolloidalen oder amorphen Partikeln zugesetzt wird.

82. Verfahren nach einem der vorstehenden Ansprüche, **dadurch gekennzeichnet, daß** der Flüssigkeit, Lösung oder Suspension für mindestens eine der Korrosionsschutzschichten, Lackschichten oder/und lackähnlichen Polymer-haltigen Schichten als anorganische Verbindung in Partikelform Partikel mit einer mittleren Partikelgröße im Bereich von 4 nm bis 150 nm zugesetzt werden.

83. Verfahren nach einem der vorstehenden Ansprüche, **dadurch gekennzeichnet, daß** der Flüssigkeit, Lösung oder Suspension für mindestens eine der Korrosionsschutzschichten, Lackschichten oder/und lackähnlichen Polymer-haltigen Schichten als anorganische Verbindung in Partikelform Partikel auf Basis von mindestens einer Verbindung des Aluminiums, Bariums, Cers, Kalziums, Lanthans, Siliciums, Titans, Yttriums, Zinks oder/und Zirkoniums zugesetzt werden.

84. Verfahren nach einem der vorstehenden Ansprüche, **dadurch gekennzeichnet, daß** der Flüssigkeit, Lösung oder Suspension für mindestens eine der Korrosionsschutzschichten, Lackschichten oder/und lackähnlichen Polymer-haltigen Schichten 0,1 bis 300 g/L der mindestens einen anorganischen Verbindung in Partikelform enthält.

85. Verfahren nach einem der vorstehenden Ansprüche, **dadurch gekennzeichnet, daß** für die Flüssigkeit, Lösung oder Suspension für mindestens eine der Korrosionsschutzschichten, Lackschichten oder/und lackähnlichen Polymer-haltigen Schichten als organisches Lösemittel für die organischen Polymere mindestens ein wassermischbarer oder/und wasserlöslicher Alkohol, ein Glykolether oder ein Pyrrolidon oder/und Wasser verwendet wird.

86. Verfahren nach einem der Ansprüche 1 bis 84, **dadurch gekennzeichnet, daß** für die Flüssigkeit, Lösung oder Suspension für mindestens eine der Korrosionsschutzschichten, Lackschichten oder/und lackähnlichen Polymer-haltigen Schichten als organisches Lösemittel für die organischen Polymere nur Wasser oder im Falle der Verwendung eines Lösemittelgemisches aus mindestens einem langkettigen Alkohol mit Wasser Propylenglykol, ein Esteralkohol, ein Glykolether oder/und Butandiol verwendet wird.

87. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten einen Gehalt an organischem Lösemittel im Bereich von 0,1 bis 10 Gew.-% enthält.

88. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten als Gleitmittel mindestens ein Wachs ausgewählt aus der Gruppe der Paraffine, Polyethylene und Polypropylene enthält.

89. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten ein Wachs als Gleitmittel enthält, dessen Schmelzpunkt im Bereich von 40 bis 160 °C liegt.

90. Verfahren nach Anspruch 89, **dadurch gekennzeichnet, daß** das Wachs in der Flüssigkeit, Lösung oder Suspension im Bereich von 0,1 bis 100 g/L enthalten ist,.

91. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten mindestens eine Seltenerdelement-Verbindung enthält.

92. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten mindestens ein Oxidationsmittel enthält.

93. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten mindestens eine Verbindung ausgewählt aus der Gruppe der folgenden Mono-, Bis- und Multi-Silane enthält:
- Mono-Silane der allgemeinen Formel SiXₘY₄₋ₘ mit m = 1 bis 3,
mit X = Alkoxy, und mit Y als einer funktionellen organischen Gruppe ausgewählt aus der Gruppe von Acyloxy, Alkyl, Acrylat, Amino, Epoxy, Fluoroalkyl, Glycidoxy, Harnstoff, Isocyanat, Mercapto, Methacrylat oder/und Vinyl oder deren Derivate,
- Bis-Silane der allgemeinen Formel Y₃₋ₚXₚ-Si-Z-Si-XₙY₃₋ₙ mit p und n = 1 bis 3 gleich oder verschieden,
mit X = Alkoxy, mit Y als funktionellen organischen Gruppen ausgewählt aus der Gruppe von Acyloxy, Alkyl, Acrylat, Amino, Epoxy, Fluoroalkyl, Glycidoxy, Harnstoff, Isocyanat, Mercapto, Methacrylat und Vinyl oder deren Derivate,
mit Z ausgewählt aus der Gruppe von CₙH₂ₙ mit n = 2 bis 20 jeweils verzweigt oder unverzweigt, von einfach ungesättigte Alkylketten der allgemeinen Formel CₙH₂ₙ₋₂ mit n = 2 bis 20 jeweils verzweigt oder unverzweigt, von zweifach oder/und mehrfach ungesättigten Alkyl-Verbindungen der allgemeinen Formeln CₙH₂ₙ₋₄ mit n = 4 bis 20 jeweils verzweigt oder unverzweigt, CₙH₂ₙ₋₆ mit n = 6 bis 20 jeweils verzweigt oder unverzweigt oder CₙH₂ₙ₋₈ mit n = 8 bis 20 jeweils verzweigt oder unverzweigt, von Ketonen, Monoalkylaminen, NH und Schwefel Sq mit q = 1 bis 20,
- Multi-Silane der allgemeinen Formel Y₃₋ₚXₚ-Si-Z'-Si-XₙY₃₋ₙ mit p und n = 1 bis 3 gleich oder verschieden,
mit X = Alkoxy, mit Y als funktionellen organischen Gruppen ausgewählt aus der Gruppe von Acyloxy, Alkyl, Acrylat, Amino, Epoxy, Fluoroalkyl, Glycidoxy, Harnstoff, Isocyanat, Mercapto, Methacrylat, Mono/Bis/Multi-Silyl und Vinyl oder deren Derivate
und mit Z' = N-Si-XᵣY₃₋ᵣ mit r = 1 bis 3 oder Schwefel Sq mit q = 1 bis 20,
- Multi-Silane der allgemeinen Formel Y₃₋ₚXₚ-Si-Z"-Si-XₙY₃₋ₙ mit p und n = 1 bis 3 gleich oder verschieden,
mit X = Alkoxy, mit Y als funktionellen organischen Gruppen ausgewählt aus der Gruppe von Acyloxy, Alkyl, Acrylat, Amino, Epoxy, Fluoroalkyl, Glycidoxy, Harnstoff, Isocyanat, Mercapto, Methacrylat, Mono/Bis/Multi-Silyl und Vinyl oder deren Derivate
und mit Z" = -R-C-[(SiXₛY₃₋ₛ)(SiXₜY₃₋ₜ)]-R'- oder Schwefel S_{q} mit q = 1 bis 20,
mit s und t = 1 bis 3 gleich oder verschieden,
mit R und R' gleich oder verschieden ausgewählt aus der Gruppe von CₙH₂ₙ mit n = 2 bis 20 jeweils verzweigt oder unverzweigt, von einfach ungesättigte Alkylketten der allgemeinen Formel CₙH₂ₙ₋₂ mit n = 2 bis 20 jeweils verzweigt oder unverzweigt, von zweifach oder/und mehrfach ungesättigten Alkyl-Verbindungen der allgemeinen Formeln CₙH₂ₙ₋₄ mit n = 4 bis 20 jeweils verzweigt oder unverzweigt, CₙH₂ₙ₋₆ mit n = 6 bis 20 jeweils verzweigt oder unverzweigt oder CₙH₂ₙ₋₈ mit n = 8 bis 20 jeweils verzweigt oder unverzweigt, von Ketonen, Monoalkylaminen und NH,
wobei die Silane jeweils hydrolysiert, teilhydrolysiert oder/und nicht hydrolysiert in einer Lösung, Emulsion oder/und Suspension vorliegen können.

94. Verfahren nach einem der vorstehenden Ansprüche, **dadurch gekennzeichnet, daß** die Flüssigkeit, Lösung oder Suspension für mindestens eine der Korrosionsschutzschichten zusätzlich mindestens eine Verbindung des Typs XYZ, X*Y*Z* oder/und X*Y*Z*Y*X* enthält, wobei Y eine organische Gruppe mit 2 bis 50 C-Atomen ist,
wobei X und Z gleich oder verschieden eine OH-, SH-, NH₂-, NHR'-, CN-, CH=CH₂-, OCN-, CONHOH-, COOR'-, Acrylsäureamid-, Epoxy-, CH₂=CR"-COO-, COOH-, HSO₃-, HSO₄-, (OH)₂PO-, (OH)₂PO₂-, (OH)(OR')PO-, (OH)(OR')PO₂-, SiH₃- oder/und eine Si(OH)₃-Gruppe sind,
wobei R' eine Alkylgruppe mit 1 bis 4 C-Atomen ist,
wobei R" ein H-Atom oder eine Alkylgruppe mit 1 bis 4 C-Atomen ist und wobei die Gruppen X und Z jeweils an die Gruppe Y in ihrer Endstellung gebunden sind,
wobei Y* eine organische Gruppe mit 1 bis 30 C-Atomen ist,
wobei X* und Z* gleich oder verschieden eine OH-, SH-, NH₂-, NHR'-, CN-, CH=CH₂-, OCN-, CONHOH-, COOR'-, Acrylsäureamid-, Epoxy-, CH₂=CR"-COO-, COOH-, HSO₃-, HSO₄-, (OH)₂PO-, (OH)₂PO₂-, (OH)(OR')PO-, (OH)(OR')PO₂-, SiH₃-, Si(OH)₃, >N-CH₂-PO(OH)₂- oder/und eine -N-[CH₂-PO(OH)₂]₂-Gruppe sind,
wobei R' eine Alkylgruppe mit 1 bis 4 C-Atomen ist und
wobei R" ein H-Atom oder eine Alkylgruppe mit 1 bis 4 C-Atomen ist.

95. Verfahren nach Anspruch 94, **dadurch gekennzeichnet, daß** die Flüssigkeit, Lösung oder Suspension für mindestens eine der Korrosionsschutzschichten mindestens eine Verbindung des Typs XYZ enthält, wobei X eine COOH-, HSO₃-, HSO₄-, (OH)₂PO-, (OH)₂PO₂-, (OH)(OR')PO- oder (OH)(OR')PO₂-Gruppe ist,
wobei Y eine organische Gruppe R ist, die 2 bis 50 C-Atome enthält, von denen mindestens 60 % dieser C-Atome als CH₂-Gruppen vorliegen, wobei Z eine OH-, SH-, NH₂-, NHR'-, CN-, CH=CH₂-, OCN-, Epoxy-, CH=CR"-COOH-, Acrylsäureamid-, COOH-, (OH)₂PO-, (OH)₂PO₂-, (OH)(OR')PO- oder (OH)(OR')PO₂-Gruppe ist,
wobei R' eine Alkylgruppe mit 1 bis 4 C-Atomen ist
und wobei R" ein H-Atom oder eine Alkylgruppe mit 1 bis 4 C-Atomen ist,.

96. Verfahren nach Anspruch 94 oder 95, **dadurch gekennzeichnet, daß** die Verbindung des Typs XYZ, X*Y*Z* oder/und X*Y*Z*Y*X* geeignet ist, selbst anordnende Moleküle auszubilden, die eine Schicht dieser selbst anordnenden Moleküle formen können.

97. Verfahren nach einem der Ansprüche 94 bis 96, **dadurch**
**gekennzeichnet, daß** die Flüssigkeit, Lösung oder Suspension für mindestens eine der Korrosionsschutzschichten mindestens eine der folgenden Verbindungen des Typs XYZ, X*Y*Z* oder/und X*Y*Z*Y*X* enthält:
1-Phosphonsäure-12-mercaptododecan,
1-Phosphonsäure-12-(N-ethylamino)dodecan,
1-Phosphonsäure-12-dodecen,
p-Xylylen-diphosphonsäure,
1,10-Decandiphosphonsäure,
1,12-Dodecandiphosphonsäure,
1,14-Tetradecandiphosphonsäure,
1-Phosphorsäure-12-hydroxydodecan,
1-Phosphorsäure-12-(N-ethylamino)dodecan,
1-Phosphorsäure-12-dodecen,
1-Phosphorsäure-12-mercaptododecan,
1,10-Decandiphosphorsäure,
1,12-Dodecandiphosphorsäure,
1,14-Tetradecandiphosphorsäure,
p,p'-Biphenyldiphosphorsäure,
1-Phosphorsäure-12-Acryloyldodecan,
1,8-Octandiphosphonsäure,
1,6-Hexandiphosphonsäure,
1,4-Butandiphosphonsäure,
1,8-Octandiphosphorsäure,
1,6-Hexandiphosphorsäure,
1,4-Butandiphosphorsäure,
Aminotrimethylenphosphonsäure,
Ethylendiamintetramethylenphosphonsäure,
Hexamethylendiamintetramethylenphosphonsäure,
Diethylentriaminpentamethylenphosphonsäure,
2-Phosphonbutan-1,2,4-tricarboxylsäure.

98. Verfahren nach einem der vorstehenden Ansprüche, **dadurch gekennzeichnet, daß** mindestens eine der Flüssigkeiten, Lösungen oder Suspensionen für mindestens eine der Korrosionsschutzschichten oder/und lackähnlichen Polymer-haltigen Schichten Phosphat und Zink, enthält.

99. Verfahren nach einem der vorstehenden Ansprüche, **dadurch gekennzeichnet, daß** mindestens eine der Flüssigkeiten, Lösungen oder Suspensionen für mindestens eine der Korrosionsschutzschichten oder/und lackähnlichen Polymer-haltigen Schichten 0,2 bis kleiner 50 g/L Zinkionen, 0,5 bis 45 g/L Manganionen und 2 bis 300 g/L Phosphationen, gerechnet als P₂O₅, enthält.

100. Verfahren nach einem der vorstehenden Ansprüche, **dadurch gekennzeichnet, daß** mindestens eine der Flüssigkeiten, Lösungen oder Suspensionen für mindestens eine der Korrosionsschutzschichten oder/und lackähnlichen Polymer-haltigen Schichten Phosphat auf Basis Zn oder ZnMn mit einem Nickelgehalt enthält..

101. Verfahren nach einem der vorstehenden Ansprüche, **dadurch gekennzeichnet, daß** mindestens eine der Flüssigkeiten, Lösungen oder Suspensionen für mindestens eine der Korrosionsschutzschichten, Lackschichten oder/und lackähnlichen Polymer-haltigen Schichten Phosphat, Fluorid, Tetrafluorid oder/und Hexafluorid enthält.

102. Verfahren nach einem der vorstehenden Ansprüche, **dadurch gekennzeichnet, daß** mindestens eine der Flüssigkeiten, Lösungen oder Suspensionen für mindestens eine der Korrosionsschutzschichten, Lackschichten oder/und lackähnlichen Polymer-haltigen Schichten Phosphonat, Tetrafluorid oder/und Hexafluorid enthält.

103. Verfahren nach einem der vorstehenden Ansprüche, **dadurch gekennzeichnet, daß** mindestens eine der Flüssigkeiten, Lösungen oder Suspensionen für mindestens eine der Korrosionsschutzschichten, Lackschichten oder/und lackähnlichen Polymer-haltigen Schichten einen organischen Filmbildner, Fluorid, Tetrafluorid, Hexafluorid oder/und mindestens eine anorganische Verbindung in Partikelform und mindestens ein Silan enthält.

104. Verfahren nach einem der vorstehenden Ansprüche, **dadurch gekennzeichnet, daß** mindestens eine der Flüssigkeiten, Lösungen oder Suspensionen für mindestens eine der Korrosionsschutzschichten, Lackschichten oder/und lackähnlichen Polymer-haltigen Schichten einen Zusatzstoff ausgewählt aus der Gruppe von organischen Bindemitteln, Bioziden, Entschäumern, Korrosionsinhibitoren, Haftvermittlern, Netzmitteln und Polymerisationsinhibitoren enthält.

105. Verfahren nach einem der vorstehenden Ansprüche, **dadurch gekennzeichnet, daß** mindestens eine der Flüssigkeiten, Lösungen oder Suspensionen für mindestens eine der Korrosionsschutzschichten, Lackschichten oder/und lackähnlichen Polymer-haltigen Schichten mindestens einen Füllstoff oder/und ein Pigment ausgewählt aus der Gruppe von Farbstoffen, Farbpigmenten, Graphit, Graphit-Glimmerpigmenten, Oxiden wie Eisenoxiden, Phosphaten, Phosphiden, Ruß und Zink enthält.

106. Verfahren nach einem der vorstehenden Ansprüche, **dadurch gekennzeichnet, daß** vor dem Auftrag einer Korrosionsschutzschicht, Lackschicht oder lackähnlichen Polymer-haltigen Schicht eine aktivierende Behandlung aufgebracht wird.

107. Verfahren nach einem der vorstehenden Ansprüche, **dadurch gekennzeichnet, daß** nach dem Auftrag einer Korrosionsschutzschicht, Lackschicht oder lackähnlichen Polymer-haltigen Schicht eine Nachspülung oder/und Passivierung aufgebracht wird.

108. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten einen pH-Wert im Bereich von 0,5 bis 12 aufweist.

109. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten bei einer Temperatur im Bereich von 5 bis 95 °C auf die jeweilige Oberfläche aufgebracht wird.

110. Verfahren nach einem der vorstehenden Ansprüche, **dadurch gekennzeichnet, daß** das Substrat oder/und die jeweilige Oberfläche bei der Applikation der Korrosionsschutzschicht(en) auf Temperaturen im Bereich von 5 bis 120 °C gehalten wird.

111. Verfahren nach einem der vorstehenden Ansprüche, **dadurch gekennzeichnet, daß** die beschichtete metallische Oberfläche bei einer Temperatur im Bereich von 20 bis 400 °C PMT getrocknet wird.

112. Verfahren nach einem der vorstehenden Ansprüche, **dadurch gekennzeichnet, daß** die beschichteten Bänder zerschnitten oder nach einer Abkühlung auf eine Temperatur im Bereich von 10 bis 70 °C zu einem Coil aufgewickelt werden.

113. Verfahren nach einem der vorstehenden Ansprüche, **dadurch gekennzeichnet, daß** die zerteilten Bänder im Randbereich nach dem Pressen, Schneiden oder/und Stanzen mit einem vorübergehend aufgebrachten, wieder zu entfernenden oder mit einem permanent schützenden Überzug beschichtet werden.

114. Verfahren nach Anspruch 113, **dadurch gekennzeichnet, daß** der permanent schützende Überzug mindestens eine Beschichtung auf Basis von Trockenschmierstoff, Phosphat, Hexafluorid, lackähnlicher Beschichtung oder/und Lack ist.

115. Verfahren nach einem der vorstehenden Ansprüche, **dadurch gekennzeichnet, daß** die Flüssigkeit, Lösung oder Suspension für mindestens eine der Korrosionsschutzschichten, Lackschichten oder/und lackähnlichen Polymer-haltigen Schichten durch Aufwalzen, Fluten, Aufrakeln, Spritzen, Sprühen, Streichen oder Tauchen aufgetragen wird.

116. Verfahren nach einem der vorstehenden Ansprüche, **dadurch gekennzeichnet, daß** die mit der Flüssigkeit, Lösung oder Suspension für mindestens eine der Korrosionsschutzschichten, Lackschichten oder/und lackähnlichen Polymer-haltigen Schichten jeweils aufgebrachte Beschichtung auf ein Schichtgewicht im Bereich von 0,0005 mg/m² bis 150 g/m² eingestellt wird.

117. Verfahren nach einem der vorstehenden Ansprüche, **dadurch gekennzeichnet, daß** auf den teilweise oder gänzlich ausgehärteten Film jeweils mindestens eine Beschichtung aus Lack oder aus einer lackähnlichen, Polymer-haltigen Beschichtung aufgebracht wird, wobei die erste Lackschicht oder lackähnliche Polymer-haltige Schicht eine Beschichtung aus einem Primer, einem 0,1 bis 10 µm dünn aufgetragenen, organische Polymere enthaltenden Material, einem Reaktionsprimer, einem Shop Primer oder einem Wash Primer besteht.

118. Verfahren nach einem der vorstehenden Ansprüche, **dadurch gekennzeichnet, daß** auf das zumindest teilweise lackierte oder lackähnlich mit einer Polymer-haltigen Schicht beschichtete Band oder auf den zumindest teilweise lackierten oder lackähnlich mit einer Polymer-haltigen Schicht beschichteten Bandabschnitt jeweils mindestens eine Beschichtung aus Lack, einem Gemisch aus oder mit Polymeren, Farbe, Klebstoff oder/und Klebstoffträger aufgebracht wird.

119. Verfahren nach einem der vorstehenden Ansprüche, **dadurch gekennzeichnet, daß** die saubere oder gereinigte oder aktivierte metallische Oberfläche mit der Flüssigkeit, Lösung oder Suspension für eine der Korrosionsschutzschichten in Kontakt gebracht und mindestens ein Film auf der metallischen Oberfläche ausgebildet wird, der anschließend getrocknet wird oder getrocknet und zusätzlich ausgehärtet wird, wobei der getrocknete oder der getrocknete und auch ausgehärtete Film jeweils eine Schichtdicke im Bereich von 0,01 bis 100 µm aufweist.

120. Verfahren nach einem der vorstehenden Ansprüche, **dadurch gekennzeichnet, daß** mindestens eine Lackschicht als Grundierung oder eine lackähnliche Polymer-haltige Schicht als Pretreatment-Primer, Primer, Primer als Ersatz des kathodischen Tauchlacks, Gleitprimer, Reaktionsprimer, Schweißprimer, Wash Primer, Klarlack oder/und Topcoat aufgebracht wird.

121. Verfahren nach einem der vorstehenden Ansprüche, **dadurch gekennzeichnet, daß** die beschichteten Bänder oder Bandabschnitte umgeformt, lackiert, mit Polymeren beschichtet, bedruckt, beklebt, heißgelötet, geschweißt oder/und durch Clinchen oder andere Fügetechniken miteinander oder mit anderen Elementen verbunden werden.

122. Verwendung der nach dem Verfahren gemäß mindestens einem der vorstehenden Ansprüche 1 bis 121 beschichteten Substrate, **dadurch gekennzeichnet, daß** das zu beschichtende Substrat eine Drahtwicklung, ein Drahtgeflecht, ein Stahlband, ein Blech, eine Verkleidung, eine Abschirmung, eine Karosserie oder ein Teil einer Karosserie, ein Teil eines Fahrzeugs, Anhängers, Wohnmobils oder Flugkörpers, eine Abdeckung, ein Gehäuse, eine Lampe, eine Leuchte, ein Ampelelement, ein Möbelstück oder Möbelelement, ein Element eines Haushaltsgeräts, ein Gestell, ein Profil, ein Formteil komplizierter Geometrie, ein Leitplanken-, Heizkörper- oder Zaunelement, eine Stoßstange, ein Teil aus oder mit mindestens einem Rohr oder/und einem Profil, ein Fenster-, Tür- oder Fahrradrahmen oder ein Kleinteil ist.

123. Verwendung der nach dem Verfahren gemäß mindestens einem der Ansprüche 1 bis 121 hergestellten Produkte im Fahrzeugbau, in der Automobilserienfertigung, für die Herstellung von Komponenten oder Karosserieteilen oder vormontierten Elementen in der Fahrzeug-, Luftfahrt- oder Raumfahrtindustrie; als Blech, Verkleidung, Karosserie oder Teil einer Karosserie, als Teil eines Fahrzeugs, Anhängers, Wohnmobils oder Flugkörpers, als Abdeckung, Profil, Formteil komplizierter Geometrie, Stoßstange, Teil aus oder mit mindestens einem Rohr oder/und einem Profil.

## Claims

1. A method for coating a metallic strip, the strip or the strip sections produced from it in the subsequent operation being first covered with at least one anticorrosion layer and then with at least one layer of a paint-like, polymer-containing layer, the strip, after coating with at least one anticorrosion layer or after coating with at least one layer of a paint-like coating, being divided into strip sections, the coated strip sections then being re-formed, joined and/or coated with at least one paint-like layer and/or paint layer, the paint-like coating being formed by coating the surface with an aqueous dispersion which contains in addition to water
a) one organic film former consisting of at least one water-soluble or water-dispersed polymer having an acid number in the range from 5 to 200 based on synthetic-resin mixtures and/or addition copolymers of synthetic resin based on
acrylate,
ethylene,
urea-formaldehyde,
polyester,
polyurethane,
styrene,
styrene-butadiene, and/or on acrylic-polyester-polyurethane addition
copolymer,
polyester containing carboxyl groups, ethylene-acrylic addition copolymer, melamine-formaldehyde and/or styrene acrylate,
b) at least one inorganic compound in particle form, having an average particle diameter, measured under a scanning electron microscope, in the diameter range from 0.005 up to 0.3 µm, and
c) at least one lubricant,
wherein the metallic surface coated with at least one anticorrosion layer is contacted with the aqueous composition, and a particle-containing film is formed on the metallic surface, and subsequently dried or dried and additionally cured, wherein no actinic radiation is used for the curing, wherein the dried or dried and also cured film has a layer thickness in the range from 0.01 to 10 µm.

2. A method according to claim 1, **characterised in that** a surface of aluminium, iron, copper, magnesium, nickel, titanium, tin, zinc or alloys containing aluminium, iron, copper, magnesium, nickel, titanium, tin and/or zinc is coated.

3. A method according to claim 1 or 2, **characterised in that** the aqueous composition is substantially or entirely free from chromium(VI) compounds.

4. A method according to any of the above claims, **characterised in that** the aqueous composition contains at least one organic solvent, at least one silane and/or siloxane calculated as silane, at least one cross-linking agent and/or at least one chromium(VI) compound.

5. A method according to any of the above claims, **characterised in that** the organic film former is in the form of a solution, dispersion, emulsion, microemulsion and/or suspension.

6. A method according to any of the above claims, **characterised in that** the organic film former is a synthetic resin mixture and/or addition copolymer which contains a content of synthetic resin based on acrylate, ethylene, urea-formaldehyde, polyester, polyurethane, styrene and/or styrene-butadiene, and from which, during or after the emission of water and other volatile constituents, an organic film is formed.

7. A method according to any of the above claims, **characterised in that** the molecular weights of the synthetic resins, copolymers, polymers or derivatives thereof, mixtures and/or addition copolymers amount to at least 1000 u.

8. A method according to any of the above claims, **characterised in that** the pH value of the organic film former in an aqueous formulation, without the addition of further compounds, is in the range from 1 to 12.

9. A method according to any of the above claims, **characterised in that** the organic film former contains only water-soluble synthetic resins and/or polymers, which are stable in solutions with pH values ≤ 5.

10. A method according to any of the above claims, **characterised in that** the organic film former contains synthetic resin and/or polymer which has carboxyl groups.

11. A method according to any of the above claims, **characterised in that** the synthetic resins contain acid groups which have been stabilized with ammonia, with amines and/or with alkali-metal compounds.

12. A method according to claim 11, **characterised in that** the synthetic resins contain acid groups which have been stabilized with morpholine, dimethylethanolamine, diethylethanolamine or triethanolamine and/or with sodium hydroxide.

13. A method according to any of the above claims, **characterised in that** the aqueous composition contains from 0.1 to 1000 g/l of the organic film former.

14. A method according to any of the above claims, **characterised in that** the aqueous composition contains at least one partly hydrolyzed or completely hydrolyzed silane.

15. A method according to any of the above claims, **characterised in that** at least one aminosilane, epoxysilane, vinylsilane and/or at least one corresponding siloxane is contained.

16. A method according to any of the above claims, **characterised in that** the content of at least one silane and/or siloxane, calculated as silane, in the aqueous composition amounts to from 0.1 to 50 g/l.

17. A method according to any of the above claims, **characterised in that** as inorganic compound in particle form a finely divided powder, a dispersion or a suspension of a carbonate, oxide, silicate or sulphate is added.

18. A method according to any of the above claims, **characterised in that** as inorganic compound in particle form particles having an average particle size in the range from 8 nm to 150 nm are used.

19. A method according to any of the above claims, **characterised in that** as inorganic compound in particle form particles based on at least one compound of aluminium, barium, cerium, calcium, lanthanum, silicon, titanium, yttrium, zinc and/or zirconium are added.

20. A method according to any of the above claims, **characterised in that** as inorganic compound in particle form particles based on alumina, barium sulphate, cerium dioxide, silica, silicate, titanium oxide, yttrium oxide, zinc oxide and/or zirconium oxide are added.

21. A method according to any of the above claims, **characterised in that** the aqueous composition contains from 0.1 to 500 g/l of the at least one inorganic compound in particle form.

22. A method according to any of the above claims, **characterised in that** the aqueous composition contains at least one corrosion inhibitor.

23. A method according to claim 22, **characterised in that** the aqueous composition contains at least one corrosion inhibitor based on amine(s), at least one conductive polymer and/or at least one thiol.

24. A method according to any of the above claims, **characterised in that** the aqueous composition contains at least one cross-linking agent based on a basic compound.

25. A method according to claim 24, **characterised in that** the aqueous composition contains at least one cross-linking agent based on titanium, hafnium and/or zirconium or based on carbonate or ammonium carbonate.

26. A method according to any of the above claims, **characterised in that** the aqueous composition is free from inorganic acids and/or organic carboxylic acids.

27. A method according to any of the above claims, **characterised in that** as organic solvent for the organic polymers at least one water-miscible and/or water-soluble alcohol, one glycol ether or N-methylpyrrolidone and/or water is used.

28. A method according to any of claims 1 to 26, **characterised in that** as organic solvent for the organic polymers only water or in the case of the use of a solvent mixture of at least one long-chain alcohol with water propylene glycol, an ester alcohol, a glycol ether and/or butanediol is used.

29. A method according to any of the above claims, **characterised in that** the content of organic solvent amounts to from 0.1 to 10% by weight.

30. A method according to any of the above claims, **characterised in that** as lubricant at least one wax selected from the group of paraffins, polyethylenes, and polypropylenes is used.

31. A method according to claim 30, **characterised in that** the melting point of the wax used as lubricant is in the range from 40 to 160°C.

32. A method according to any of the above claims, **characterised in that** additionally a conductive polymer is added.

33. A method according to any of the above claims, **characterised in that** the aqueous composition contains at least one biocide, at least one defoamer and/or at least one wetting agent.

34. A method according to any of the above claims, **characterised in that** an aqueous composition having a pH value in the range from 0.5 to 12 is used.

35. A method according to any of the above claims, **characterised in that** the aqueous composition is applied to the metallic surface at a temperature in the range from 5 to 50°C.

36. A method according to any of the above claims, **characterised in that** the metallic surface is held at temperatures in the range from 5 to 120°C upon application of the coating.

37. A method according to any of the above claims, **characterised in that** the coated metallic surface is dried at a temperature in the range from 20 to 400°C PMT.

38. A method according to any of the above claims, **characterised in that** the coated strips are wound to a coil after cooling to a temperature in the range from 40 to 70°C.

39. A method according to any of the above claims, **characterised in that** the aqueous composition is applied by rolling, flow-coating, knife-coating, spraying, squirting, brushing or dipping or dipping and subsequent squeezing off with a roller.

40. A method according to any of the above claims, **characterised in that** the dried or dried and also cured film has a pendulum hardness of from 30 to 190 s, measured with a König pendulum hardness tester in accordance with DIN 53157.

41. A method according to any of the above claims, **characterised in that** the dried or dried and also cured film has such a flexibility that bending over a conical mandrel in a mandrel bending test very substantially in accordance with DIN ISO 6860 for a mandrel of from 3.2 mm to 38 mm in diameter - but without scoring of the test area - produces no cracks longer than 2 mm that are perceptible when subsequently wetted with copper sulphate as a result of colour change as a consequence of copper deposition on the cracked metallic surface.

42. A method according to any of the above claims, **characterised in that** in each case at least one coating comprising paint, polymers, dye, adhesive and/or adhesive backing is applied to the dried or dried and also cured film.

43. A method according to any of the above claims, **characterised in that** the coated metal parts, strips or strip sections are re-formed, painted, coated with polymers, printed, bonded, hot-soldered, welded and/or connected to one another or to other elements by clinching or other joining techniques.

44. A method according to any of the above claims, **characterised in that** the strip is cut after painting with a paint-like coating, and the painted strip sections during cutting and/or then are re-formed.

45. A method according to claim 44, **characterised in that** the painted strip sections are thereafter connected to other shaped parts by crimping, clinching, adhesive bonding, welding and/or another mechanical connecting method.

46. A method according to any of the above claims, **characterised in that** at least two or three anticorrosion layers are applied in succession, of which each of these two or three layers is an anticorrosion layer selected from the group of coatings based in each case on iron-cobalt, nickel-cobalt, at least one fluoride, at least one complex fluoride, an organic hydroxy compound, a phosphate, a phosphonate, a polymer, a rare-earth compound, including lanthanum and yttrium compounds, a silane/siloxane, a silicate, cations of aluminium, magnesium and/or at least one transition metal selected from the group of chromium, iron, hafnium, cobalt, manganese, molybdenum, nickel, titanium, tungsten, and zirconium, or a coating based on nanoparticles.

47. A method according to any of the above claims, **characterised in that** the first anticorrosion layer is applied in a drying method, and **in that** the second anticorrosion layer is applied in a drying method or rinse method.

48. A method according to any of the above claims, **characterised in that** the first anticorrosion layer is applied in a rinse method, and **in that** the second anticorrosion layer is applied in a drying method or rinse method.

49. A method according to any of the above claims, **characterised in that** the second anticorrosion layer is applied in an after-rinsing step.

50. A method according to any of the above claims, **characterised in that** the second anticorrosion layer is applied in a drying method.

51. A method according to any of the above claims, **characterised in that** surfaces of aluminium, iron, cobalt, copper, magnesium, nickel, titanium, tin, zinc or alloys containing aluminium, iron, cobalt, copper, magnesium, nickel, titanium, tin and/or zinc are coated.

52. A method according to any of the above claims, **characterised in that** coating is carried out with at least one liquid, solution or suspension which is substantially or entirely free from chromium compounds before coating with at least one paint and/or with at least one paint-like polymer-containing layer which contains polymers, copolymers, oligomers, phosphonates, silanes and/or siloxanes.

53. A method according to any of the above claims, **characterised in that** no lead, cadmium, chromium, cobalt, copper and/or nickel is added to the liquid, solution or suspension for the first and/or second anticorrosion layer.

54. A method according to any of the above claims, **characterised in that** the liquid, solution or suspension for at least one of the anticorrosion layers and/or paint-like polymer-containing layers contains, in addition to water, at least one organic film former with at least one water-soluble or water-dispersed polymer, copolymer, block copolymer, monomer, oligomer, derivative(s) thereof, mixture thereof and/or addition copolymer thereof.

55. A method according to any of the above claims, **characterised in that** the liquid, solution or suspension for at least one of the anticorrosion layers and/or paint-like polymer-containing layers contains, in addition to water, a total content of cations, tetrafluoro complexes and/or hexafluoro complexes of cations selected from the group of titanium, zirconium, hafnium, silicon, aluminium, and boron and/or free or otherwise-bound fluorine, to the amount of 0.1 to 15 g/l, based on F₆.

56. A method according to any of the above claims, **characterised in that** the liquid, solution or suspension for at least one of the anticorrosion layers and/or paint-like polymer-containing layers contains, in addition to water, a total content of free fluorine or fluorine not attached to tetrafluoro or hexafluoro complexes, to the amount of 0.1 to 1000 mg/l, calculated as free fluorine.

57. A method according to any of the above claims, **characterised in that** the liquid, solution or suspension for at least one of the anticorrosion layers, paint layers and/or paint-like polymer-containing layers has, in addition to water, at least one inorganic compound in particle form having an average particle diameter, measured under a scanning electron microscope, in the range from 0.003 up to 1 µm diameter, based on Al₂O₃, BaSO₄, rare-earth oxide (s), at least one other rare-earth compound, SiO₂, silicate, TiO₂, Y₂O₃, Zn, ZnO and/or ZrO₂.

58. A method according to claim 57, **characterised in that** the liquid, solution or suspension for at least one of the anticorrosion layers, paint layers and/or paint-like polymer-containing layers has, in addition to water, at least one of these inorganic compounds in particle form in a content in the range from 0.1 to 80 g/l.

59. A method according to any of the above claims, **characterised in that** the liquid, solution or suspension for at least one of the anticorrosion layers, paint layers or paint-like polymer-containing layers contains at least one corrosion inhibitor selected from the group of organic phosphate compounds, phosphonate compounds, organic morpholine and thio compounds, aluminates, manganates, titanates, and zirconates.

60. A method according to any of the above claims, **characterised in that** the liquid, solution or suspension for at least one of the anticorrosion layers, paint layers or paint-like polymer-containing layers contains at least one compound for the slow neutralization of comparatively acidic mixtures and/or for the corrosion protection of unprotected or damaged portions of the metallic surface.

61. A method according to any of the above claims, **characterised in that** the liquid, solution or suspension for at least one of the anticorrosion layers, paint layers and/or paint-like polymer-containing layers contains, in addition to water, at least one silane and/or siloxane, calculated as silane in a content in the range from 0.1 to 50 g/l.

62. A method according to any of the above claims, **characterised in that** the liquid, solution or suspension for at least one of the anticorrosion layers, paint layers and/or paint-like polymer-containing layers contains an organic film former in the form of a solution, dispersion, emulsion, microemulsion and/or suspension.

63. A method according to any of the above claims, **characterised in that** the liquid, solution or suspension for at least one of the anticorrosion layers, paint layers and/or paint-like polymer-containing layers contains as organic film former at least one synthetic resin, based on acrylate, ethylene, polyester, polyurethane, styrene, styrene-butadiene, urea-formaldehyde, their derivatives, copolymers, block copolymers, monomers, oligomers, polymers, mixtures and/or addition copolymers.

64. A method according to any of the above claims, **characterised in that** the liquid, solution or suspension for at least one of the anticorrosion layers, paint layers and/or paint-like polymer-containing layers contains as organic film former a synthetic resin mixture and/or addition copolymer containing a content of synthetic resin based on acrylate, ethylene, urea-formaldehyde, polyester, polyurethane, styrene and/or styrene-butadiene or their derivatives, copolymers, crosspolymers, oligomers, polymers, mixtures and/or addition copolymers, from which an organic film is formed during or after the emission of water and other volatile constituents.

65. A method according to any of the above claims, **characterised in that** the liquid, solution or suspension for at least one of the anticorrosion layers, paint layers and/or paint-like polymer-containing layers contains synthetic resin whose acid number is in the range from 5 to 250.

66. A method according to any of the above claims, **characterised in that** the liquid, solution or suspension for at least one of the anticorrosion layers, paint layers and/or paint-like polymer-containing layers contains synthetic resins and/or polymers, copolymers, block copolymers, monomers, oligomers, polymers, mixtures and/or addition copolymers or derivatives thereof whose molecular weights are in the range of at least 1000 u.

67. A method according to any of the above claims, **characterised in that** the liquid, solution or suspension for at least one of the anticorrosion layers, paint layers and/or paint-like polymer-containing layers contains from 0.1 to 500 g/l synthetic resins and/or polymers, block copolymers, copolymers, monomers, oligomers, polymers, mixtures and/or addition copolymers or derivatives thereof.

68. A method according to any of the above claims, **characterised in that** the liquid, solution or suspension for at least one of the anticorrosion layers, paint layers and/or paint-like polymer-containing layers contains an organic film former whose pH value in an aqueous formulation without addition of further compounds is in the range from 1 to 12.

69. A method according to any of the above claims, **characterised in that** the liquid, solution or suspension for at least one of the anticorrosion layers, paint layers and/or paint-like polymer-containing layers contains an organic film former which contains only water-soluble synthetic resins and/or polymers, copolymers, block copolymers, monomers, oligomers, polymers, mixtures and/or addition copolymers or their derivatives, which are stable in solutions with pH values ≤ 5.

70. A method according to any of the above claims, **characterised in that** the liquid, solution or suspension for at least one of the anticorrosion layers, paint layers and/or paint-like polymer-containing layers contains an organic film former whose synthetic resins and/or polymers, copolymers, block copolymers, monomers, oligomers, polymers, mixtures and/or addition copolymers or their derivatives have carboxyl groups.

71. A method according to any of the above claims, **characterised in that** the liquid, solution or suspension for at least one of the anticorrosion layers, paint layers and/or paint-like polymer-containing layers contains an organic film former in which the acid groups of the synthetic resins and/or polymers, copolymers, block copolymers, monomers, oligomers, polymers, mixtures and/or addition copolymers or their derivatives have been stabilized with ammonia, with amines and/or with alkali-metal compounds.

72. A method according to any of the above claims, **characterised in that** the liquid, solution or suspension for at least one of the anticorrosion layers, paint layers and/or paint-like polymer-containing layers contains from 0.1 to 200 g/l of the organic film former.

73. A method according to any of the above claims, **characterised in that** the liquid, solution or suspension for at least one of the anticorrosion layers, paint layers and/or paint-like polymer-containing layers contains from 100 to 2000 g/l of the organic film former.

74. A method according to any of the above claims, **characterised in that** the liquid, solution or suspension for at least one of the anticorrosion layers, paint layers and/or paint-like polymer-containing layers contains a monomer fraction, in the region of at least 5% by weight.

75. A method according to any of the above claims, **characterised in that** the liquid, solution or suspension for at least one of the anticorrosion layers, paint layers and/or paint-like polymer-containing layers contains from 0.1 to 50 g/l of cations, tetrafluoro complexes and/or hexafluoro complexes of cations selected from the group of titanium, zirconium, hafnium, silicon, aluminium, and boron.

76. A method according to any of the above claims, **characterised in that** the liquid, solution or suspension for at least one of the anticorrosion layers, paint layers and/or paint-like polymer-containing layers contains at least one organometallic compound with a content of titanium and/or zirconium.

77. A method according to any of the above claims, **characterised in that** the liquid, solution or suspension for at least one of the anticorrosion layers, paint layers and/or paint-like polymer-containing layers contains a content of at least one silane and/or siloxane calculated as silane in the aqueous composition, in a range from 0.2 to 40 g/l.

78. A method according to any of the above claims, **characterised in that** the liquid, solution or suspension for at least one of the anticorrosion layers, paint layers and/or paint-like polymer-containing layers contains at least one partly hydrolyzed silane, at least one wholly hydrolyzed silane and/or at least one siloxane.

79. A method according to any of the above claims, **characterised in that** the liquid, solution or suspension for at least one of the anticorrosion layers, paint layers and/or paint-like polymer-containing layers contains at least one partly hydrolyzed and/or non-hydrolyzed silane, in the case of a silane content of more than 100 g/l.

80. A method according to any of the above claims, **characterised in that** the liquid, solution or suspension for at least one of the anticorrosion layers, paint layers and/or paint-like polymer-containing layers contains in each case at least one acyloxysilane, alkylsilane, aminosilane, bis-silyl-silane, epoxysilane, fluoroalkylsilane, glycidyloxysilane, isocyanatosilane, mercaptosilane, (meth)acrylatosilane, mono-silyl-silane, multi-silyl-silane, sulphur-containing silane, ureidosilane, vinylsilane and/or at least one corresponding siloxane.

81. A method according to any of the above claims, **characterised in that** the liquid, solution or suspension for at least one of the anticorrosion layers, paint layers and/or paint-like polymer-containing layers has added to it as inorganic compound in particle form a finely divided powder, a dispersion or a suspension of colloidal or amorphous particles.

82. A method according to any of the above claims, **characterised in that** the liquid, solution or suspension for at least one of the anticorrosion layers, paint layers and/or paint-like polymer-containing layers has added to it as inorganic compound in particle form particles having an average particle size in the range from 4 nm to 150 nm.

83. A method according to any of the above claims, **characterised in that** the liquid, solution or suspension for at least one of the anticorrosion layers, paint layers and/or paint-like polymer-containing layers has added to it as inorganic compound in particle form particles based on at least one compound of aluminium, barium, cerium, calcium, lanthanum, silicon, titanium, yttrium, zinc and/or zirconium.

84. A method according to any of the above claims, **characterised in that** the liquid, solution or suspension for at least one of the anticorrosion layers, paint layers and/or paint-like polymer-containing layers contains from 0.1 to 300 g/l of the at least one inorganic compound in particle form.

85. A method according to any of the above claims, **characterised in that** for the liquid, solution or suspension for at least one of the anticorrosion layers, paint layers and/or paint-like polymer-containing layers as organic solvent for the organic polymers at least one water-miscible and/or water-soluble alcohol, one glycol ether or one pyrrolidone and/or water is used.

86. A method according to any of claims 1 to 84, **characterised in that** for the liquid, solution or suspension for at least one of the anticorrosion layers, paint layers and/or paint-like polymer-containing layers as organic solvent for the organic polymers only water or in the case of the use of a solvent mixture of at least one long-chain alcohol with water propylene glycol, an ester alcohol, a glycol ether and/or butanediol is used.

87. A method according to any of the above claims, **characterised in that** the liquid, solution or suspension for at least one of the anticorrosion layers, paint layers and/or paint-like polymer-containing layers contains a content of organic solvent in the range from 0.1 to 10% by weight.

88. A method according to any of the above claims, **characterised in that** the liquid, solution or suspension for at least one of the anticorrosion layers, paint layers and/or paint-like polymer-containing layers contains as lubricant at least one wax selected from the group of paraffins, polyethylenes, and polypropylenes.

89. A method according to any of the above claims, **characterised in that** the liquid, solution or suspension for at least one of the anticorrosion layers, paint layers and/or paint-like polymer-containing layers contains a wax as lubricant whose melting point is in the range from 40 to 160°C.

90. A method according to claim 89, **characterised in that** the wax is contained in the liquid, solution or suspension in the range from 0.1 to 100 g/l.

91. A method according to any of the above claims, **characterised in that** the liquid, solution or suspension for at least one of the anticorrosion layers, paint layers and/or paint-like polymer-containing layers contains at least one rare-earth element compound.

92. A method according to any of the above claims, **characterised in that** the liquid, solution or suspension for at least one of the anticorrosion layers, paint layers and/or paint-like polymer-containing layers contains at least one oxidizing agent.

93. A method according to any of the above claims, **characterised in that** the liquid, solution or suspension for at least one of the anticorrosion layers, paint layers and/or paint-like polymer-containing layers contains at least one compound selected from the group of the following mono-, bis-, and multi-silanes:
- mono-silanes of the general formula SiXₘY₄₋ₘ with m = 1 to 3,
with X = alkoxy, and with Y as a functional organic group selected from the group of acyloxy, alkyl, acrylate, amino, epoxy, fluoroalkyl, glycidyloxy, urea, isocyanate, mercapto, methacrylate and/or vinyl or derivatives thereof,
- bis-silanes of the general formula Y₃₋ₚXₚ-Si-Z-Si-XₙY₃₋ₙ
with p and n = 1 to 3, identical or different, with X = alkoxy, with Y as functional organic groups selected from the group of acyloxy, alkyl, acrylate, amino, epoxy, fluoroalkyl, glycidyloxy, urea, isocyanate, mercapto, methacrylate and vinyl or derivatives thereof,
with Z selected from the group of CₙH₂ₙ with n = 2 to 20, in each case branched or unbranched, of singly unsaturated alkyl chains of the general formula CₙH₂ₙ₋₂ with n = 2 to 20, in each case branched or unbranched, of doubly and/or multiply unsaturated alkyl compounds of the general formulae CₙH₂ₙ₋₄ with n = 4 to 20, in each case branched or unbranched, CₙH₂ₙ₋₆ with n = 6 to 20, in each case branched or unbranched, or CₙH₂ₙ₋₈ with n = 8 to 20, in each case branched or unbranched, of ketones, monoalkylamines, NH, and sulphur Sq with q = 1 to 20,
- multi-silanes of the general formula Y₃₋ₚXₚ-Si-Z' -Si-XₙY₃₋ₙ
with p and n = 1 to 3, identical or different, with X = alkoxy, with Y as functional organic groups selected from the group of acyloxy, alkyl, acrylate, amino, epoxy, fluoroalkyl, glycidyloxy, urea, isocyanate, mercapto, methacrylate, mono/ bis/multi-silyl and vinyl or derivatives thereof,
and with Z' = N-Si-XᵣY₃₋ᵣ with r = 1 to 3 or sulphur Sq with q = 1 to 20,
- multi-silanes of the general formula Y₃₋ₚXₚ-Si-Z"-Si-XₙY₃₋ₙ
with p and n = 1 to 3, identical or different, with X = alkoxy, with Y as functional organic groups selected from the group of acyloxy, alkyl, acrylate, amino, epoxy, fluoroalkyl, glycidyloxy, urea, isocyanate, mercapto, methacrylate, mono/bis/multi-silyl and vinyl or derivatives thereof,
and with Z" = -R-C[(SᵢXₛY₃₋ₛ)(SiXₜY₃₋ₜ)]-R'- or sulphur Sq with q = 1 to 20,
with s and t = 1 to 3, identical or different, with R and R', identical or different, selected from the group of CₙH₂ₙ with n = 2 to 20, in each case branched or unbranched, of singly unsaturated alkyl chains of the general formula CₙH₂ₙ₋₂ with n = 2 to 20, in each case branched or unbranched, of doubly and/or multiply unsaturated alkyl compounds of the general formulae CₙH₂ₙ₋₄ with n = 4 to 20, in each case branched or unbranched, CₙH₂ₙ₋₆ with n = 6 to 20, in each case branched or unbranched, or CₙH₂ₙ₋₈ with n = 8 to 20, in each case branched or unbranched, of ketones, monoalkylamines and NH, wherein the silanes in each case can be present in hydrolyzed, partly hydrolyzed and/or non-hydrolyzed form in a solution, emulsion and/or suspension.

94. A method according to any of the above claims, **characterised in that** the liquid, solution or suspension for at least one of the anticorrosion layers additionally contains at least one compound of the type XYZ, X*Y*Z* and/or X*Y*Z*Y*X*,
where Y is an organic group having 2 to 50 carbon atoms,
where X and Z, identical or different, are an OH, SH, NH₂, NHR', CN, CH=CH₂, OCN, CONHOH, COOR', acrylamide, epoxide, CH₂=CR"-COO, COOH, HSO₃, HSO₄, (OH)₂PO, (OH)₂PO₂, (OH) (OR')PO, (OH)(OR')PO₂, SiH₃ and/or an Si(OH)₃ group,
where R' is an alkyl group having 1 to 4 carbon atoms,
where R" is a hydrogen atom or an alkyl group having 1 to 4 carbon atoms, and
where the groups X and Z are each attached to the group Y in the terminal position thereof,
where Y* is an organic group having 1 to 30 carbon atoms,
where X* and Z*, identical or different, are an OH, SH, NH₂, NHR', CN, CH=CH₂, OCN, CONHOH, COOR', acrylamide, epoxide, CH₂=CR"-COO, COOH, HSO₃, HSO₄, (OH)₂PO, (OH)₂PO₂, (OH)(OR')PO, (OH)(OR')PO₂, SiH₃, Si(OH)₃, >N-CH₂-PO(OH)₂ and/or an -N-[CH₂-PO(OH)₂]₂ group,
where R' is an alkyl group having 1 to 4 carbon atoms, and
where R" is a hydrogen atom or an alkyl group having 1 to 4 carbon atoms.

95. A method according to claim 94, **characterised in that** the liquid, solution or suspension for at least one of the anticorrosion layers contains at least one compound of the type XYZ, where X is a COOH, HSO₃, HSO₄, (OH)₂PO, (OH)₂PO₂, (OH) (OR') PO or (OH)(OR')PO₂ group,
where Y is an organic group R containing 2 to 50 carbon atoms, of which at least 60% of these carbon atoms are present in the form of CH₂ groups,
where Z is an OH, SH, NH₂, NHR', CN, CH=CH₂, OCN, epoxy, CH=CR"-COOH, acrylamide, COOH, (OH)₂PO, (OH)₂PO₂, (OH)(OR')PO or (OH)(OR')PO₂ group,
where R' is an alkyl group having 1 to 4 carbon atoms,
and where R" is a hydrogen atom or an alkyl group having 1 to 4 carbon atoms.

96. A method according to claim 94 or 95, **characterised in that** the compound of type XYZ, X*Y*Z* and/or X*Y*Z*Y*X* is suitable for forming self-arranging molecules, which can shape a layer of these self-arranging molecules.

97. A method according to any of claims 94 to 96, **characterised in that** the liquid, solution or suspension for at least one of the anticorrosion layers contains at least one of the following compounds of type XYZ, X*Y*Z* and/or X*Y*Z*Y*X*:
1-phosphonic acid-12-mercaptododecane,
1-phosphonic acid-12-(N-ethylamino)dodecane,
1-phosphonic acid-12-dodecene,
p-xylylenediphosphonic acid,
1,10-decanediphosphonic acid,
1,12-dodecanediphosphonic acid,
1,14-tetradecanediphosphonic acid,
1-phosphoric acid-12-hydroxydodecane,
1-phosphoric acid-12-(N-ethylamino)dodecane,
1-phosphoric acid-12-dodecene,
1-phosphoric acid-12-mercaptododecane,
1,10-decanediphosphoric acid,
1,12-dodecanephosphoric acid,
1,14-tetradecanediphosphoric acid,
p,p'-biphenyldiphosphoric acid,
1-phosphoric acid-12-acryloyldodecane,
1,8-octanediphosphonic acid,
1,6-hexanediphosphonic acid,
1,4-butanediphosphonic acid,
1,8-octanediphosphoric acid,
1,6-hexanediphosphoric acid,
1,4-butanediphosphoric acid,
aminotrimethylenephosphonic acid,
ethylenediaminetetramethylenephosphonic acid,
hexamethylenediaminetetramethylenephosphonic acid,
diethylenetriaminepentamethylenephosphonic acid,
2-phosphonobutane-1,2,4-tricarboxylic acid.

98. A method according to any of the above claims, **characterised in that** at least one of the liquids, solutions or suspensions for at least one of the anticorrosion layers and/or paint-like polymer-containing layers contains phosphate and zinc.

99. A method according to any of the above claims, **characterised in that** at least one of the liquids, solutions or suspensions for at least one of the anticorrosion layers and/or paint-like polymer-containing layers contains from 0.2 to less than 50 g/l of zinc ions, from 0.5 to 45 g/l manganese ions, and from 2 to 300 g/l phosphate ions, calculated as P₂O₅.

100. A method according to any of the above claims, **characterised in that** at least one of the liquids, solutions or suspensions for at least one of the anticorrosion layers and/or paint-like polymer-containing layers contains phosphate, based on Zn or ZnMn, with a nickel content.

101. A method according to any of the above claims, **characterised in that** at least one of the liquids, solutions or suspensions for at least one of the anticorrosion layers, paint layers and/or paint-like polymer-containing layers contains phosphate, fluoride, tetrafluoride and/or hexafluoride.

102. A method according to any of the above claims, **characterised in that** at least one of the liquids, solutions or suspensions for at least one of the anticorrosion layers, paint layers and/or paint-like polymer-containing layers contains phosphonate, tetrafluoride and/or hexafluoride.

103. A method according to any of the above claims, **characterised in that** at least one of the liquids, solutions or suspensions for at least one of the anticorrosion layers, paint layers and/or paint-like polymer-containing layers contains an organic film former, fluoride, tetrafluoride, hexafluoride and/or at least one inorganic compound in particle form, and at least one silane.

104. A method according to any of the above claims, **characterised in that** at least one of the liquids, solutions or suspensions for at least one of the anticorrosion layers, paint layers and/or paint-like polymer-containing layers contains an additive selected from the group of organic binders, biocides, defoamers, corrosion inhibitors, adhesion promoters, wetting agents, and polymerization inhibitors.

105. A method according to any of the above claims, **characterised in that** at least one of the liquids, solutions or suspensions for at least one of the anticorrosion layers, paint layers and/or paint-like polymer-containing layers contains at least one filler and/or one pigment, selected from the group of dyes, colour pigments, graphite, graphite-mica pigments, oxides such as iron oxides, phosphates, phosphides, carbon black and zinc.

106. A method according to any of the above claims, **characterised in that** prior to the application of an anticorrosion layer, paint layer or paint-like polymer-containing layer, an activating treatment is applied.

107. A method according to any of the above claims, **characterised in that** the application of an anticorrosion layer, paint layer or paint-like polymer-containing layer is followed by application of an after-rinse and/or passivation.

108. A method according to any of the above claims, **characterised in that** the liquid, solution or suspension for at least one of the anticorrosion layers, paint layers and/or paint-like polymer-containing layers has a pH value in the range from 0.5 to 12.

109. A method according to any of the above claims, **characterised in that** the liquid, solution or suspension for at least one of the anticorrosion layers, paint layers and/or paint-like polymer-containing layers is applied to the respective surface at a temperature in the range from 5 to 95°C.

110. A method according to any of the above claims, **characterised in that** the substrate and/or the respective surface are held at temperatures in the range from 5 to 120°C during application of the anticorrosion layer(s).

111. A method according to any of the above claims, **characterised in that** the coated metallic surface is dried at a temperature in the range from 20 to 400°C PMT.

112. A method according to any of the above claims, **characterised in that** the coated strips are cut up or wound to a coil after cooling to a temperature in the range from 10 to 70°C.

113. A method according to any of the above claims, **characterised in that** the divided strips, after pressing, cutting and/or punching, are coated in the edge region with a temporarily applied covering to be removed again or with a permanently protecting covering.

114. A method according to claim 113, **characterised in that** the permanently protecting covering is at least one coating based on dry lubricant, phosphate, hexafluoride, paint-like coating and/or paint.

115. A method according to any of the above claims, **characterised in that** the liquid, solution or suspension for at least one of the anticorrosion layers, paint layers and/or paint-like polymer-containing layers is applied by rolling, flow-coating, knife-coating, spraying, squirting, brushing or dipping.

116. A method according to any of the above claims, **characterised in that** the coating applied in each case with the liquid, solution or suspension for at least one of the anticorrosion layers, paint layers and/or paint-like polymer-containing layers is adjusted to a layer weight in the range from 0.0005 mg/m² to 150 g/m².

117. A method according to any of the above claims, **characterised in that** to the partly or fully cured film there is applied in each case at least one coating of paint or of a paint-like, polymer-containing coating, wherein the first paint layer or paint-like polymer-containing layer, a coating, consists of a primer, a 0.1 to 10 µm thinly applied organic-polymer-containing material, a reaction primer, a shop primer or a wash primer.

118. A method according to any of the above claims, **characterised in that** at least one coating of paint, a mixture of or with polymers, dye, adhesive and/or adhesive backing is applied in each case to the at least partly painted strip or the strip partly coated in a paint-like manner with a polymer-containing layer, or to the at least partly painted strip section or the strip section at least partly coated in a paint-like manner with a polymer-containing layer.

119. A method according to any of the above claims, **characterised in that** the clean or cleaned or activated metallic surface is contacted with the liquid, solution or suspension for one of the anticorrosion layers, and at least one film is formed on the metallic surface that is subsequently dried or dried and additionally cured, wherein the dried or the dried and also cured film has in each case a layer thickness in the range from 0.01 to 100 µm.

120. A method according to any of the above claims, **characterised in that** at least one paint layer as undercoat or one paint-like polymer-containing layer as pretreatment primer, primer, primer as replacement of the cathodic dip paint, lubricating primer, reaction primer, welding primer, wash primer, clear paint and/or topcoat is applied.

121. A method according to any of the above claims, **characterised in that** the coated strips or strip sections are re-formed, painted, coated with polymers, printed, bonded, hot-soldered, welded and/or connected to one another or to other elements by clinching or other joining techniques.

122. Use of the substrates coated by the method according to at least one of the above claims 1 to 121, **characterised in that** the substrate to be coated is a wire winding, wire mesh, steel strip, metal sheet, panelling, shield, vehicle body or part of a vehicle body, part of a vehicle, trailer, recreational vehicle or missile, cover, casing, lamp, light, traffic light element, furniture item or furniture element, an element of a household appliance, frame, profile, moulding of complex geometry, guide-board element, radiator element or fencing element, bumper, part of or with at least one pipe and/or profile, window frame, door frame or cycle frame, or a small part.

123. Use of the products produced by the method according to at least one of claims 1 to 121 in vehicle construction, in automotive production-line manufacture, for producing components or bodywork parts or pre-mounted elements in the vehicle, air-travel or space-travel industry; as metal sheet, panelling, bodywork or part of a bodywork, as part of a vehicle, trailer, recreational vehicle or missile, as a cover, profile, moulding of complex geometry, bumper, part of or with at least one pipe and/or profile.

## Revendications

1. Procédé de revêtement d'une bande métallique,
dans lequel la bande, ou les sections de bande qu'on en tire dans l'opération suivante, est ou sont recouverte(s) d'abord d'au moins une couche de protection anti-corrosion et ensuite d'au moins une couche de revêtement façon laque contenant un polymère,
dans lequel la bande est divisée en sections de bande après revêtement avec au moins une couche de protection anti-corrosion ou après revêtement avec au moins une couche de revêtement façon laque,
dans lequel les sections de bande revêtues sont ensuite façonnées, assemblées et/ou revêtues d'au moins une couche de revêtement façon laque et/ou de laque,
dans lequel on forme le revêtement façon laque en recouvrant la surface d'une dispersion aqueuse qui contient, outre de l'eau :
a) un agent filmogène organique, qui est constitué d'au moins un polymère soluble ou dispersable dans l'eau, présentant un indice d'acide de 5 à 200, à base d'un mélange de résines synthétiques et/ou d'interpolymères issus de résines synthétiques à base d'acrylate, d'éthylène, d'urée-formaldéhyde, de polyester,
de polyuréthane, de styrène, de styrène-butadiène,
et/ou d'interpolymère polyacrylique/polyester/polyuréthane, de polyester à groupes carboxyle, d'interpolymère d'éthylène et d'acrylique, de résine mélamine-formaldéhyde et/ou de styrène-acrylate,
b) au moins un composé inorganique sous forme de particules dont le diamètre moyen, mesuré à l'aide d'un microscope électronique à balayage, vaut de 0,005 à 0,3 µm,
c) et au moins un lubrifiant,
et dans lequel la surface métallique revêtue d'au moins une couche de protection anti-corrosion est mise en contact avec la composition aqueuse et il se forme sur la surface métallique un film contenant des particules, qu'on fait ensuite sécher, ou bien sécher et durcir, mais en n'utilisant aucun rayonnement actinique pour opérer ce durcissement, le film séché, ou séché et durci, étant épais de 0,01 à 10 µm.

2. Procédé conforme à la revendication 1, **caractérisé en ce que** l'on revêt une surface d'aluminium, de fer, de cuivre, de magnésium, de nickel, de titane, d'étain, de zinc, ou d'un alliage contenant de l'aluminium, du fer, du cuivre, du magnésium, du nickel, du titane, du zinc et/ou de l'étain.

3. Procédé conforme à la revendication 1 ou 2, **caractérisé en ce que** la composition aqueuse ne contient absolument ou pratiquement pas de composés de chrome-(VI).

4. Procédé conforme à l'une des revendications précédentes, **caractérisé en ce que** la composition aqueuse contient au moins un solvant organique, au moins un silane et/ou un siloxane compté comme silane, au moins un agent de réticulation et/ou au moins un composé de chrome-(VI).

5. Procédé conforme à l'une des revendications précédentes, **caractérisé en ce que** l'agent filmogène organique se présente sous la forme d'une solution, d'une dispersion, d'une émulsion, d'une microémulsion et/ou d'une suspension.

6. Procédé conforme à l'une des revendications précédentes, **caractérisé en ce que** l'agent filmogène organique est un mélange de résines synthétiques et/ou un interpolymère, qui contient une certaine quantité d'une résine synthétique à base d'acrylate, d'éthylène, d'uréeformaldéhyde, de polyester, de polyuréthane, de styrène et/ou de styrène-butadiène, et à partir duquel se forme un film organique, pendant ou après l'élimination de l'eau et des autres constituants volatils.

7. Procédé conforme à l'une des revendications précédentes, **caractérisé en ce que** les masses moléculaires des résines synthétiques, copolymères et polymères ou de leurs dérivés, mélanges et/ou interpolymères valent au moins 1000 unités.

8. Procédé conforme à l'une des revendications précédentes, **caractérisé en ce que** l'agent filmogène organique donne, dans une préparation aqueuse sans autres constituants ajoutés, un pH qui se situe dans l'intervalle allant de 1 à 12.

9. Procédé conforme à l'une des revendications précédentes, **caractérisé en ce que** l'agent filmogène organique ne contient que des résines synthétiques et/ou des polymères solubles dans l'eau et qui sont stables dans des solutions présentant un pH inférieur ou égal à 5.

10. Procédé conforme à l'une des revendications précédentes, **caractérisé en ce que** l'agent filmogène organique contient une résine synthétique et/ou un polymère qui porte(nt) des groupes carboxyle.

11. Procédé conforme à l'une des revendications précédentes, **caractérisé en ce que** les résines synthétiques contiennent des groupes acides qui sont stabilisés avec de l'ammoniac, des amines et/ou des composés de métal alcalin.

12. Procédé conforme à la revendication 11, **caractérisé en ce que** les résines synthétiques contiennent des groupes acides qui sont stabilisés avec de la morpholine, de la diméthyl-éthanolamine, de la diéthyl-éthanolamine ou de la triéthanolamine, et/ou avec de l'hydroxyde de sodium.

13. Procédé conforme à l'une des revendications précédentes, **caractérisé en ce que** la composition aqueuse contient de 0,1 à 1000 g/L de l'agent filmogène organique.

14. Procédé conforme à l'une des revendications précédentes, **caractérisé en ce que** la composition aqueuse contient au moins un silane, partiellement ou totalement hydrolysé.

15. Procédé conforme à l'une des revendications précédentes, **caractérisé en ce qu'**il y a au moins un amino-silane, un époxy-silane, un vinyl-silane et/ou au moins un siloxane correspondant.

16. Procédé conforme à l'une des revendications précédentes, **caractérisé en ce que** la teneur de la composition aqueuse en au moins un silane et/ou siloxane, compté comme silane, vaut de 0,1 à 50 g/L.

17. Procédé conforme à l'une des revendications précédentes, **caractérisé en ce qu'**on ajoute, en tant que composé inorganique sous forme de particules, une poudre fine, une dispersion ou une suspension d'un carbonate, d'un oxyde, d'un silicate ou d'un sulfate.

18. Procédé conforme à l'une des revendications précédentes, **caractérisé en ce qu'**on utilise, en tant que composé inorganique sous forme de particules, des particules dont la taille moyenne vaut de 8 nm à 150 nm.

19. Procédé conforme à l'une des revendications précédentes, **caractérisé en ce qu'**on ajoute, en tant que composé inorganique sous forme de particules, des particules à base d'au moins un composé de l'aluminium, du baryum, du cérium, du calcium, du lanthane, du silicium, du titane, de l'yttrium, du zinc et/ou du zirconium.

20. Procédé conforme à l'une des revendications précédentes, **caractérisé en ce qu'**on ajoute, en tant que composé inorganique sous forme de particules, des particules à base d'oxyde d'aluminium, de sulfate de baryum, de dioxyde de cérium, de dioxyde de silicium, de silicate, d'oxyde de titane, d'oxyde d'yttrium, d'oxyde de zinc et/ou d'oxyde de zirconium.

21. Procédé conforme à l'une des revendications précédentes, **caractérisé en ce que** la composition aqueuse contient de 0,1 à 500 g/L dudit composé inorganique sous forme de particules au nombre d'au moins un.

22. Procédé conforme à l'une des revendications précédentes, **caractérisé en ce que** la composition aqueuse contient au moins un inhibiteur de corrosion.

23. Procédé conforme à la revendication 22, **caractérisé en ce que** la composition aqueuse contient au moins un inhibiteur de corrosion à base d'une amine ou d'amines, au moins un polymère conducteur et/ou au moins un thiol.

24. Procédé conforme à l'une des revendications précédentes, **caractérisé en ce que** la composition aqueuse contient au moins un agent de réticulation à base d'un composé basique.

25. Procédé conforme à la revendication 24, **caractérisé en ce que** la composition aqueuse contient au moins un agent de réticulation à base de titane, de hafnium et/ou de zirconium ou à base de carbonate ou de carbonate d'ammonium.

26. Procédé conforme à l'une des revendications précédentes, **caractérisé en ce que** la composition aqueuse ne contient pas d'acides inorganiques et/ou d'acides organiques carboxyliques.

27. Procédé conforme à l'une des revendications précédentes, **caractérisé en ce qu'**on utilise, en tant que solvant organique pour les polymères organiques, au moins un alcool miscible à l'eau et/ou soluble dans l'eau, un éther de glycol ou de la N-méthyl-pyrrolidone, et/ou de l'eau.

28. Procédé conforme à l'une des revendications 1 à 26, **caractérisé en ce qu'**on utilise, en tant que solvant organique pour les polymères organiques, uniquement de l'eau, ou bien, dans le cas où l'on utilise un mélange de solvants constitué d'au moins un alcool à longue chaîne et d'eau, du propylèneglycol, un alcool-ester, un éther de glycol et/ou du butanediol.

29. Procédé conforme à l'une des revendications précédentes, **caractérisé en ce que** la proportion en poids de solvant organique vaut de 0,1 à 10 %.

30. Procédé conforme à l'une des revendications précédentes, **caractérisé en ce que** l'on utilise, en tant que lubrifiant, au moins une cire choisie parmi les paraffine, polyéthylène et polypropylène.

31. Procédé conforme à la revendication 30, **caractérisé en ce que** la cire utilisée comme lubrifiant présente un point de fusion situé dans l'intervalle allant de 40 à 160 °C.

32. Procédé conforme à l'une des revendications précédentes, **caractérisé en ce qu'**on ajoute en plus un polymère conducteur.

33. Procédé conforme à l'une des revendications précédentes, **caractérisé en ce que** la composition aqueuse contient au moins un agent biocide, au moins un agent anti-mousse et/ou au moins un agent mouillant.

34. Procédé conforme à l'une des revendications précédentes, **caractérisé en ce que** l'on utilise une composition aqueuse dont le pH se situe dans l'intervalle allant de 0,5 à 12.

35. Procédé conforme à l'une des revendications précédentes, **caractérisé en ce que** la composition aqueuse est appliquée sur la surface métallique à une température située dans la gamme de 5 à 50 °C.

36. Procédé conforme à l'une des revendications précédentes, **caractérisé en ce que** lors de l'application du revêtement, la surface métallique est maintenue à des températures situées dans la gamme de 5 à 120 °C.

37. Procédé conforme à l'une des revendications précédentes, **caractérisé en ce que** la surface métallique revêtue est séchée à une température (TMM ou température maximale du métal) située dans la gamme de 20 à 400 °C.

38. Procédé conforme à l'une des revendications précédentes, **caractérisé en ce que** les bandes revêtues, une fois refroidies à une température située dans la gamme de 40 à 70 °C, sont enroulées en bobine.

39. Procédé conforme à l'une des revendications précédentes, **caractérisé en ce que** la composition aqueuse est appliquée à l'aide de rouleaux, par coulée, à l'aide d'une racle, par projection, par pulvérisation, par enduction ou par immersion, ou par immersion suivie d'un exprimage effectué à l'aide d'un rouleau.

40. Procédé conforme à l'une des revendications précédentes, **caractérisé en ce que** le film séché, ou séché et durci, présente une dureté au pendule, mesurée au moyen d'un duromètre à pendule par la méthode de Koenig, selon la norme DIN 53157, de 30 à 190 secondes.

41. Procédé conforme à l'une des revendications précédentes, **caractérisé en ce que** le film séché, ou séché et durci, présente une flexibilité telle que lors d'un essai de pliage sur mandrin conique réalisé, dans la plus grande mesure, selon la norme DIN ISO 6860 avec un mandrin dont le diamètre passe de 3,2 mm à 38 mm, mais sans pratiquer d'amorce de fissure sur la surface d'essai, il ne se forme aucune fissure longue de plus de 2 m qui puisse, lors d'un mouillage ultérieur avec une solution de sulfate de cuivre, être mise en évidence par un changement de couleur consécutif au dépôt de cuivre sur la surface métallique fissurée.

42. Procédé conforme à l'une des revendications précédentes, **caractérisé en ce que**, sur le film séché, ou séché et durci, on dépose au moins un revêtement de laque, de polymère, de colorant, d'adhésif et/ou de support d'adhésif.

43. Procédé conforme à l'une des revendications précédentes, **caractérisé en ce que** les parties métalliques, bandes ou sections de bandes revêtues sont façonnées, revêtues de laque ou de polymère, compressées, collées, brasées à chaud, soudées et/ou attachées les unes aux autres ou avec d'autres éléments par agrafage ou par d'autres techniques d'assemblage.

44. Procédé conforme à l'une des revendications précédentes, **caractérisé en ce que**, après avoir laqué la bande avec un revêtement façon laque, on la découpe et l'on façonne les sections de bande laquées, au moment de la découpe et/ou par la suite.

45. Procédé conforme à la revendication 44, **caractérisé en ce que** les sections de bandes laquées sont ensuite attachées à d'autres pièces façonnées, par bordage, agrafage, collage, soudage et/ou un autre procédé mécanique de liaison.

46. Procédé conforme à l'une des revendications précédentes, **caractérisé en ce que** l'on dépose l'une après l'autre au moins deux ou trois couches de protection anti-corrosion, chacune de ces deux ou trois couches étant une couche de protection anti-corrosion choisie dans l'ensemble constitué par les revêtements à base de fer-cobalt, de nickel-cobalt, d'au moins un fluorure, d'au moins un fluorure complexe, d'un composé organique hydroxylé, d'un phosphate, d'un phosphonate, d'un polymère, d'un composé de terre rare, y compris les composés de lanthane ou d'yttrium, d'un silane/siloxane, d'un silicate, ou de cations d'aluminium, de magnésium et/ou d'au moins un métal de transition choisi parmi les chrome, fer, hafnium, cobalt, manganèse, molybdène, nickel, titane, tungstène et zirconium, ou un revêtement à base de nanoparticules.

47. Procédé conforme à l'une des revendications précédentes, **caractérisé en ce que** la première couche de protection anti-corrosion est déposée selon un procédé de dépôt sans rinçage et la deuxième couche de protection anti-corrosion est déposée selon un procédé de dépôt sans rinçage ou avec rinçage.

48. Procédé conforme à l'une des revendications précédentes, **caractérisé en ce que** la première couche de protection anti-corrosion est déposée selon un procédé de dépôt avec rinçage et la deuxième couche de protection anti-corrosion est déposée selon un procédé de dépôt sans rinçage ou avec rinçage.

49. Procédé conforme à l'une des revendications précédentes, **caractérisé en ce que** la deuxième couche de protection anti-corrosion est déposée au cours d'une opération de post-rinçage.

50. Procédé conforme à l'une des revendications précédentes, **caractérisé en ce que** la deuxième couche de protection anti-corrosion est déposée selon un procédé sans rinçage.

51. Procédé conforme à l'une des revendications précédentes, **caractérisé en ce que** l'on revêt des surfaces d'aluminium, de fer, de cobalt, de cuivre, de magnésium, de nickel, de titane, d'étain ou de zinc, ou d'alliages contenant de l'aluminium, du fer, du cobalt, du cuivre, du magnésium, du nickel, du titane, de l'étain et/ou du zinc.

52. Procédé conforme à l'une des revendications précédentes, **caractérisé en ce que**, avant d'effectuer l'opération de revêtement avec au moins une laque et/ou avec au moins une couche de revêtement façon laque contenant un polymère, qui contient un polymère, copolymère, oligomère, phosphonate, silane et/ou siloxane, on réalise un revêtement avec au moins un liquide, une solution ou une suspension qui ne contient pas ou pratiquement pas de composés du chrome.

53. Procédé conforme à l'une des revendications précédentes, **caractérisé en ce qu'**on n'ajoute pas de plomb, de cadmium, de chrome, de cobalt, de cuivre et/ou de nickel au liquide, à la solution ou à la suspension servant à former la première et/ou la deuxième couche(s) de protection anti-corrosion.

54. Procédé conforme à l'une des revendications précédentes, **caractérisé en ce que** le liquide, la solution ou la suspension servant à former au moins l'une des couches de protection anti-corrosion et/ou des couches de revêtement façon laque contenant un polymère contient, outre de l'eau, au moins un agent filmogène organique comportant au moins un polymère, copolymère, copolymère à blocs, monomère ou oligomère, soluble dans l'eau ou dispersable dans l'eau, et/ou l'un ou plusieurs de leurs dérivés, l'un de leurs mélanges et/ou l'un de leurs interpolymères.

55. Procédé conforme à l'une des revendications précédentes, **caractérisé en ce que** le liquide, la solution ou la suspension servant à former au moins l'une des couches de protection anti-corrosion et/ou des couches de revêtement façon laque contenant un polymère contient, outre de l'eau, une quantité totale de cations, complexes tétrafluorures et/ou complexes hexafluorures de cations, choisis dans l'ensemble formé par ceux des titane, zirconium, hafnium, silicium, aluminium et bore, et/ou de fluor libre ou autrement lié, de 0,1 à 15 g/L, ramenée à F₆.

56. Procédé conforme à l'une des revendications précédentes, **caractérisé en ce que** le liquide, la solution ou la suspension servant à former au moins l'une des couches de protection anti-corrosion et/ou des couches de revêtement façon laque contenant un polymère contient, outre de l'eau, une quantité totale de fluor libre ou non lié au sein de complexes tétrafluorures et/ou hexafluorures, calculée en fluor libre, de 0,1 à 1000 mg/L.

57. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient, outre de l'eau, au moins un composé inorganique, sous forme de particules dont le diamètre moyen, mesuré à l'aide d'un microscope électronique à balayage, vaut de 0,003 à 1 µm, à base d'oxyde d'aluminium, de sulfate de baryum, d'un oxyde ou d'oxydes de terre(s) rare(s), d'au moins un autre composé de terre rare, de silice, de silicate, d'oxyde de titane, d'oxyde d'yttrium, de zinc, d'oxyde de zinc et/ou d'oxyde de zirconium.

58. Procédé conforme à la revendication 57, **caractérisé en ce que** le liquide, la solution ou la suspension servant à former au moins l'une des couches de protection anti-corrosion, des couches de laque et/ou des couches de revêtement façon laque contenant un polymère contient, outre de l'eau, au moins l'un de ces composés inorganiques en particules en une concentration valant de 0,1 à 80 g/L.

59. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient au moins un inhibiteur de corrosion choisi dans l'ensemble constitué par les composés de type phosphate organique, les composés de type phosphonate, les composés organiques de type morpholine ou de type thio, et les aluminates, manganates, titanates et zirconates.

60. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient au moins un composé servant à la neutralisation lente de mélanges relativement acides et/ou à la protection anti-corrosion de zones non protégées ou détériorées de la surface métallique.

61. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient, outre de l'eau, au moins un silane et/ou siloxane en une quantité, calculée en silane, de 0,1 à 50 g/L.

62. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient un agent filmogène organique, présent sous la forme d'une solution, d'une dispersion, d'une émulsion, d'une microémulsion et/ou d'une suspension.

63. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient, en tant qu'agent filmogène organique, au moins une résine synthétique à base d'acrylate, d'éthylène, de polyester, de polyuréthane, de styrène, de styrène-butadiène ou d'uréeformaldéhyde, ou de l'un de leurs dérivés, copolymères, copolymères à blocs, monomères, oligomères, polymères, mélanges et/ou interpolymères.

64. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient, en tant qu'agent filmogène organique, un mélange de résines synthétiques et/ou un interpolymère, qui contient une certaine quantité d'une résine synthétique à base d'acrylate, d'éthylène, d'urée-formol, de polyester, de polyuréthane, de styrène et/ou de styrène-butadiène ou d'un de leurs dérivés, copolymères, polymères réticulés, oligomères, polymères, mélanges et/ou interpolymères, et à partir duquel se forme un film organique, pendant ou après l'élimination de l'eau et des autres constituants volatils.

65. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient une résine synthétique dont l'indice d'acide vaut de 5 à 250.

66. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient des résines synthétiques et/ou de leurs copolymères, copolymères à blocs, monomères, oligomères, polymères, mélanges et/ou interpolymères ou leurs dérivés, dont les masses moléculaires valent au moins 1000 unités.

67. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient de 0,1 à 500 g/L de résines synthétiques et/ou de leurs copolymères, copolymères à blocs, monomères, oligomères, polymères, mélanges et/ou interpolymères ou leurs dérivés.

68. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient un agent filmogène organique qui, dans une composition aqueuse sans autres composants ajoutés, donne un pH valant de 1 à 12.

69. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient un agent filmogène organique qui ne contient que des résines synthétiques hydrosolubles et/ou de leurs copolymères, copolymères à blocs, monomères, oligomères, polymères, mélanges et/ou interpolymères ou leurs dérivés, qui sont stables dans des solutions présentant un pH inférieur ou égal à 5.

70. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient un agent filmogène organique dont les résines synthétiques et/ou leurs copolymères, copolymères à blocs, monomères, oligomères, polymères, mélanges et/ou interpolymères ou leurs dérivés comportent des groupes carboxyle.

71. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient un agent filmogène organique dans lequel les groupes acides des résines synthétiques et/ou de leurs copolymères, copolymères à blocs, monomères, oligomères, polymères, mélanges et/ou interpolymères ou leurs dérivés sont stabilisés avec de l'ammoniac, des amines et/ou des composés de métal alcalin.

72. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient de 0,1 à 200 g/L de l'agent filmogène organique.

73. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient de 100 à 2000 g/L de l'agent filmogène organique.

74. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient des monomères en une proportion d'au moins 5 % en poids.

75. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient de 0,1 à 50 g/L de cations, complexes tétrafluorures et/ou complexes hexafluorures de cations, choisis dans l'ensemble constitué par ceux des titane, zirconium, hafnium, silicium, aluminium et bore.

76. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient au moins un composé organo-métallique comportant du titane et/ou du zirconium.

77. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient au moins un silane et/ou siloxane, en une concentration, calculée en silane dans la composition aqueuse, située dans la gamme de 0,2 à 40 g/L.

78. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient au moins un silane partiellement hydrolysé, au moins un silane totalement hydrolysé, et/ou au moins un siloxane.

79. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient au moins un silane partiellement hydrolysé et/ou non hydrolysé, en une concentration de plus de 100 g/L de silane.

80. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient, au nombre d'au moins un dans chaque cas, un acyloxy-silane, un alkyl-silane, un amino-silane, un bis-silyl-silane, un époxy-silane, un fluoroalkyl-silane, un glycidyloxy-silane, un isocyanato-silane, un mercapto-silane, un acryloyloxy-silane ou méthacryloyloxy-silane, un mono-silyl-silane, un poly-silyl-silane, un silane comportant du soufre, un uréido-silane, un vinyl-silane et/ou au moins un siloxane correspondant.

81. Procédé conforme à l'une des revendications précédentes, **caractérisé en ce qu'**on ajoute au liquide, à la solution ou à la suspension servant à former au moins l'une des couches de protection anti-corrosion, des couches de laque et/ou des couches de revêtement façon laque contenant un polymère, en tant que composé inorganique sous forme de particules, une poudre fine ou une dispersion ou suspension de particules colloïdales ou amorphes.

82. Procédé conforme à l'une des revendications précédentes, **caractérisé en ce qu'**on ajoute au liquide, à la solution ou à la suspension servant à former au moins l'une des couches de protection anti-corrosion, des couches de laque et/ou des couches de revêtement façon laque contenant un polymère, en tant que composé inorganique sous forme de particules, des particules dont la taille moyenne se situe dans la gamme de 4 nm à 150 nm.

83. Procédé conforme à l'une des revendications précédentes, **caractérisé en ce qu'**on ajoute au liquide, à la solution ou à la suspension servant à former au moins l'une des couches de protection anti-corrosion, des couches de laque et/ou des couches de revêtement façon laque contenant un polymère, en tant que composé inorganique sous forme de particules, des particules à base d'au moins un composé de l'aluminium, du baryum, du cérium, du calcium, du lanthane, du silicium, du titane, de l'yttrium, du zinc et/ou du zirconium.

84. Procédé conforme à l'une des revendications précédentes, **caractérisé en ce qu'**on ajoute au liquide, à la solution ou à la suspension servant à former au moins l'une des couches de protection anti-corrosion, des couches de laque et/ou des couches de revêtement façon laque contenant un polymère, de 0,1 à 300 g/L du composé inorganique sous forme de particules au nombre d'au moins un.

85. Procédé conforme à l'une des revendications précédentes, **caractérisé en ce qu'**on utilise, pour le liquide, la solution ou la suspension servant à former au moins l'une des couches de protection anti-corrosion, des couches de laque et/ou des couches de revêtement façon laque contenant un polymère, en tant que solvant organique pour les polymères organiques, au moins un alcool miscible à l'eau et/ou soluble dans l'eau, un éther de glycol ou une pyrrolidone, et/ou de l'eau.

86. Procédé conforme à l'une des revendications 1 à 84, **caractérisé en ce qu'**on utilise, pour le liquide, la solution ou la suspension servant à former au moins l'une des couches de protection anti-corrosion, des couches de laque et/ou des couches de revêtement façon laque contenant un polymère, en tant que solvant organique pour les polymères organiques, uniquement de l'eau, ou bien, dans le cas où l'on utilise un mélange de solvants constitué d'au moins un alcool à longue chaîne, du propylèneglycol, un alcool-ester, un éther de glycol et/ou du butanediol, avec de l'eau.

87. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient un solvant organique en une proportion de 0,1 à 10 % en poids.

88. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient, en tant que lubrifiant, au moins une cire choisie parmi les paraffines, polyéthylènes et polypropylènes.

89. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient, en tant que lubrifiant, une cire qui présente un point de fusion situé dans l'intervalle allant de 40 à 160 °C.

90. Procédé conforme à la revendication 89, **caractérisé en ce que** la cire est contenue dans le liquide, la dispersion ou la suspension en une concentration de 0,1 à 100 g/L.

91. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient au moins un composé d'un élément des terres rares.

92. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient au moins un agent oxydant.

93. Procédé conforme à l'une des revendications précédentes, **caractérisé en ce que** le liquide, la solution ou la suspension servant à former au moins l'une des couches de protection anti-corrosion, des couches de laque et/ou des couches de revêtement façon laque contenant un polymère contient au moins un composé choisi dans l'ensemble formé par les monosilanes, disilanes et polysilanes suivants :
- les monosilanes de formule générale SiXₘY₄₋ₘ,
dans laquelle l'indice m vaut de 1 à 3,
et dans laquelle X représente un groupe alcoxy et Y représente un groupe organique fonctionnel choisi dans l'ensemble formé par les groupes acyloxy, alkyle, acrylato, amino, époxy, fluoroalkyle, glycidyloxy, uréido, isocyanato, mercapto, méthacrylato et/ou vinyle, ainsi que leurs dérivés ;
- les disilanes de formule générale Y₃₋ₚXₚ-Si-Z-Si-Xₙ-Y₃₋ₙ,
dans laquelle les indices p et n sont égaux ou différents et valent de 1 à 3,
dans laquelle les symboles X représentent des groupes alcoxy et les symboles Y représentent des groupes organiques fonctionnels choisis dans l'ensemble formé par les groupes acyloxy, alkyle, acrylato, amino, époxy, fluoroalkyle, glycidyloxy, uréido, isocyanato, mercapto, méthacrylato et vinyle, ainsi que leurs dérivés,
et dans laquelle Z représente une entité choisie dans l'ensemble formé par les groupes alcanediyle, de formule CₙH₂ₙ où l'indice n vaut de 2 à 20, à chaîne ramifiée ou non ramifiée, les groupes alcanediyle mono-insaturés, de formule CₙH₂ₙ₋₂ où l'indice n vaut de 2 à 20, à chaîne ramifiée ou non ramifiée, les groupes alcanediyle di-insaturés et/ou poly-insaturés, de formule CₙH₂ₙ₋₄ où l'indice n vaut de 4 à 20, à chaîne ramifiée ou non ramifiée, de formule CₙH₂ₙ₋₆ où l'indice n vaut de 6 à 20, à chaîne ramifiée ou non ramifiée, ou de formule CₙH₂ₙ₋₈ où l'indice n vaut de 8 à 20, à chaîne ramifiée ou non ramifiée, les groupes à fonction cétone ou monoalkyl-amine, le chaînon symbolisé par -NH-, et les chaînes d'atomes de soufre symbolisées par -S_{q}- où l'indice q vaut de 1 à 20 ;
- les polysilanes de formule générale Y₃₋ₚXₚ-Si-Z'-Si-XₙY₃₋ₙ,
dans laquelle les indices p et n sont égaux ou différents et valent de 1 à 3,
dans laquelle les symboles X représentent des groupes alcoxy et les symboles Y représentent des groupes organiques fonctionnels choisis dans l'ensemble formé par les groupes acyloxy, alkyle, acrylato, amino, époxy, fluoroalkyle, glycidyloxy, uréido, isocyanato, mercapto, méthacrylato, monosilyle, disilyle, polysilyle et vinyle, ainsi que leurs dérivés,
et dans laquelle Z' représente un groupe symbolisé par N-Si-XᵣY₃₋ᵣ où l'indice r vaut de 1 à 3, ou une chaîne d'atomes de soufre symbolisée par -S_{q}- où l'indice q vaut de 1 à 20 ;
- les polysilanes de formule générale Y₃₋ₚXₚ-Si-Z"-Si-XₙY₃₋ₙ, dans laquelle les indices p et n sont égaux ou différents et valent de 1 à 3,
dans laquelle les symboles X représentent des groupes alcoxy et les symboles Y représentent des groupes organiques fonctionnels choisis dans l'ensemble formé par les groupes acyloxy, alkyle, acrylato, amino, époxy, fluoroalkyle, glycidyloxy, uréido, isocyanato, mercapto, méthacrylato, monosilyle, disilyle, polysilyle et vinyle, ainsi que leurs dérivés,
et dans laquelle Z" représente une chaîne d'atomes de soufre symbolisée par -S_{q}- où l'indice q vaut de 1 à 20, ou un groupe représenté par la formule -R-C[(SiXₛY₃₋ₛ)(SiXₜY₃₋ₜ)]-R'- où les indices s et t sont égaux ou différents et valent de 1 à 3, et R et R' représentent des entités identiques ou différentes et choisies dans l'ensemble formé par les groupes alcanediyle, de formule CₙH₂ₙ où l'indice n vaut de 2 à 20, à chaîne ramifiée ou non ramifiée, les groupes alcanediyle mono-insaturés, de formule CₙH₂ₙ₋₂ où l'indice n vaut de 2 à 20, à chaîne ramifiée ou non ramifiée, les groupes alcanediyle di-insaturés et/ou poly-insaturés, de formule CₙH₂ₙ₋₄ où l'indice n vaut de 4 à 20, à chaîne ramifiée ou non ramifiée, de formule CₙH₂ₙ₋₆ où l'indice n vaut de 6 à 20, à chaîne ramifiée ou non ramifiée, ou de formule CₙH₂ₙ₋₈ où l'indice n vaut de 8 à 20, à chaîne ramifiée ou non ramifiée, les groupes à fonction cétone ou monoalkyl-amine, et le chaînon symbolisé par -NH- ;
étant entendu que ces silanes peuvent dans chaque cas se présenter sous forme hydrolysée, partiellement hydrolysée et/ou non hydrolysée, dans une solution, une émulsion et/ou une suspension.

94. Procédé conforme à l'une des revendications précédentes, **caractérisé en ce que** le liquide, la solution ou la suspension servant à former au moins l'une des couches de protection anti-corrosion contient en outre au moins un composé de type XYZ, X*Y*Z* et/ou X*Y*Z*Y*X*, étant entendu que :
- Y représente un groupe organique comportant de 2 à 50 atomes de carbone ;
- X et Z représentent des entités identiques ou différentes, et représentent chacun un groupe symbolisé par OH, SH, NH₂, NHR', CN, CH=CH₂, OCN, CONHOH ou COOR', un groupe acrylamido ou époxy, ou un groupe symbolisé par CH₂=CR"-COO, COOH, HSO₃, HSO₄, (OH)₂PO, (OH)₂PO₂, (OH)(OR')PO, (OH)(OR')PO₂, SiH₃ et/ou Si(OH)₃, où R' représente un groupe alkyle comportant 1 à 4 atomes de carbone, R" représente un atome d'hydrogène ou un groupe alkyle comportant 1 à 4 atomes de carbone, et chacun des groupes représentés par X et Z est lié au groupe représenté par Y en sa position terminale ;
- Y* représente un groupe organique comportant de 1 à 30 atomes de carbone ;
- et X* et Z* représentent des entités identiques ou différentes, et représentent chacun un groupe symbolisé par OH, SH, NH₂, NHR', CN, CH=CH₂, OCN, CONHOH ou COOR', un groupe acrylamido ou époxy, ou un groupe symbolisé par CH₂=CR"-COO, COOH, HSO₃, HSO₄, (OH)₂PO, (OH)₂PO₂, (OH)(OR')PO, (OH)(OR')PO₂, SiH₃, Si(OH)₃, >N-CH₂-PO(OH)₂ et/ou -N[CH₂-PO(OH)₂]₂, où R' représente un groupe alkyle comportant 1 à 4 atomes de carbone, et R" représente un atome d'hydrogène ou un groupe alkyle comportant 1 à 4 atomes de carbone.

95. Procédé conforme à la revendication 94, **caractérisé en ce que** le liquide, la solution ou la suspension servant à former au moins l'une des couches de protection anti-corrosion contient au moins un composé de type XYZ dans lequel :
- X représente un groupe symbolisé par COOH, HSO₃, HSO₄, (OH)₂PO, (OH)₂PO₂, (OH)(OR')PO ou (OH)(OR')PO₂,
- Y représente un groupe organique comportant de 2 à 50 atomes de carbone, dans lequel au moins 60 % de ces atomes de carbone se présentent sous forme de groupes CH₂ ;
- et Z représente un groupe symbolisé par OH, SH, NH₂, NHR', CN, CH=CH₂ ou OCN, un groupe époxy ou acrylamido, ou un groupe symbolisé par CH=CR"-COOH, COOH, (OH)₂PO, (OH)₂PO₂, (OH)(OR')PO ou (OH)(OR')PO₂, où R' représente un groupe alkyle comportant 1 à 4 atomes de carbone, et R" représente un atome d'hydrogène ou un groupe alkyle comportant 1 à 4 atomes de carbone.

96. Procédé conforme à la revendication 94 ou 95, **caractérisé en ce que** le composé de type XYZ, X*Y*Z* ou X*Y*Z*Y*X* est apte à constituer des molécules auto-organisantes qui peuvent former une couche de ces molécules auto-organisantes.

97. Procédé conforme à l'une des revendications 94 à 96, **caractérisé en ce que** le liquide, la solution ou la suspension servant à former au moins l'une des couches de protection anti-corrosion contient au moins l'un des composés suivants, de type XYZ, X*Y*Z* et/ou X*Y*Z*Y*X* :
acide 12-mercapto-dodécane-1-phosphonique
acide 12-(N-éthyl-amino)-dodécane-1-phosphonique
acide dodéc-11-ène-1-phosphonique
acide para-xylylène-diphosphonique
acide décane-1,10-diphosphonique
acide dodécane-1,12-diphosphonique
acide tétradécane-1,14-diphosphonique
acide 12-hydroxy-dodécane-1-phosphorique
acide 12-(N-éthyl-amino)-dodécane-1-phosphorique
acide dodéc-11-ène-1-phosphorique
acide 12-mercapto-dodécane-1-phosphorique
acide décane-1,10-diphosphorique
acide dodécane-1,12-diphosphorique
acide tétradécane-1,14-diphosphorique
acide p,p'-biphényl-diphosphorique
acide 12-acryloyl-dodécane-1-phosphorique
acide octane-1,8-diphosphonique
acide hexane-1,6-diphosphonique
acide butane-1,4-diphosphonique
acide octane-1,8-diphosphorique
acide hexane-1,6-diphosphorique
acide butane-1,4-diphosphorique
acide amino-tris(méthylène-phosphonique)
acide éthylènediamine-tétra(méthylène-phosphonique)
acide hexaméthylènediamine-tétra(méthylène-phosphonique)
acide diéthylènetriamine-penta(méthylène-phosphonique)
acide 2-phosphono-butane-1,2,4-tricarboxylique.

98. Procédé conforme à l'une des revendications précédentes, **caractérisé en ce qu'**au moins l'un des liquides, solutions ou suspensions servant à former au moins l'une des couches de protection anti-corrosion et/ou des couches de revêtement façon laque contenant un polymère contient un phosphate et du zinc.

99. Procédé conforme à l'une des revendications précédentes, **caractérisé en ce qu'**au moins l'un des liquides, solutions ou suspensions servant à former au moins l'une des couches de protection anti-corrosion et/ou des couches de revêtement façon laque contenant un polymère contient de 0,2 à moins de 50 g/L d'ions de zinc, de 0,5 à 45 g/L d'ions de manganèse et de 2 à 300 g/L d'ions phosphate, teneur calculée en P₂O₅.

100. Procédé conforme à l'une des revendications précédentes, **caractérisé en ce qu'**au moins l'un des liquides, solutions ou suspensions servant à former au moins l'une des couches de protection anti-corrosion et/ou des couches de revêtement façon laque contenant un polymère contient un phosphate à base de zinc ou de zinc et manganèse et contenant du nickel.

101. Procédé conforme à l'une des revendications précédentes, **caractérisé en ce qu'**au moins l'un des liquides, solutions ou suspensions servant à former au moins l'une des couches de protection anti-corrosion, couches de laque et/ou couches de revêtement façon laque contenant un polymère contient un phosphate, un fluorure, un tétrafluorure et/ou un hexafluorure.

102. Procédé conforme à l'une des revendications précédentes, **caractérisé en ce qu'**au moins l'un des liquides, solutions ou suspensions servant à former au moins l'une des couches de protection anti-corrosion, couches de laque et/ou couches de revêtement façon laque contenant un polymère contient un phosphonate, un tétrafluorure et/ou un hexafluorure.

103. Procédé conforme à l'une des revendications précédentes, **caractérisé en ce qu'**au moins l'un des liquides, solutions ou suspensions servant à former au moins l'une des couches de protection anti-corrosion, couches de laque et/ou couches de revêtement façon laque contenant un polymère contient un agent filmogène organique, un fluorure, un tétrafluorure, un hexafluorure et/ou au moins un composé inorganique en particules et au moins un silane.

104. Procédé conforme à l'une des revendications précédentes, **caractérisé en ce qu'**au moins l'un des liquides, solutions ou suspensions servant à former au moins l'une des couches de protection anti-corrosion, couches de laque et/ou couches de revêtement façon laque contenant un polymère contient un adjuvant choisi dans l'ensemble constitué par les liants organiques, biocides, agents anti-mousse, inhibiteurs de corrosion, adhésifs, agents mouillants et inhibiteurs de polymérisation.

105. Procédé conforme à l'une des revendications précédentes, **caractérisé en ce qu'**au moins l'un des liquides, solutions ou suspensions servant à former au moins l'une des couches de protection anti-corrosion, couches de laque et/ou couches de revêtement façon laque contenant un polymère contient au moins une charge et/ou un pigment choisi dans l'ensemble formé par les colorants, pigments colorés, graphite, pigments mica-graphite, oxydes comme les oxydes de fer, phosphates, phosphures, noir de fumée et zinc.

106. Procédé conforme à l'une des revendications précédentes, **caractérisé en ce que**, avant le dépôt d'une couche de protection anti-corrosion, d'une couche de laque ou d'une couche de revêtement façon laque contenant un polymère, on effectue un traitement d'activation.

107. Procédé conforme à l'une des revendications précédentes, **caractérisé en ce que**, après le dépôt d'une couche de protection anti-corrosion, d'une couche de laque ou d'une couche de revêtement façon laque contenant un polymère, on effectue un rinçage et/ou une passivation.

108. Procédé conforme à l'une des revendications précédentes, **caractérisé en ce que** le liquide, la solution ou la suspension servant à former au moins l'une des couches de protection anti-corrosion, couches de laque et/ou couches de revêtement façon laque contenant un polymère présente un pH situé dans la gamme de 0,5 à 12.

109. Procédé conforme à l'une des revendications précédentes, **caractérisé en ce que** le liquide, la solution ou la suspension servant à former au moins l'une des couches de protection anti-corrosion, couches de laque et/ou couches de revêtement façon laque contenant un polymère est déposé(e) sur la surface concernée à une température située dans la gamme de 5 à 95 °C.

110. Procédé conforme à l'une des revendications précédentes, **caractérisé en ce que**, lors de l'application de la couche ou des couches de protection anti-corrosion, on maintient le substrat et/ou la surface concernée à une température située dans la gamme de 5 à 120 °C.

111. Procédé conforme à l'une des revendications précédentes, **caractérisé en ce que** les surfaces métalliques revêtues sont séchées à une température située dans la gamme de 20 à 400 °C (TMM).

112. Procédé conforme à l'une des revendications précédentes, **caractérisé en ce que** les bandes revêtues sont découpées, ou enroulées en bobine après refroidissement jusqu'à une température située dans la gamme de 10 à 70 °C.

113. Procédé conforme à l'une des revendications précédentes, **caractérisé en ce que** les bandes divisées sont recouvertes dans la zone de bordure, après pressage, découpage et/ou estampage, d'un revêtement protecteur qui est permanent ou bien provisoire et amovible.

114. Procédé conforme à la revendication 113, **caractérisé en ce que** le revêtement protecteur permanent est au moins une couche de revêtement à base de lubrifiant sec, de phosphate ou d'hexafluorure, de laque et/ou de revêtement façon laque.

115. Procédé conforme à l'une des revendications précédentes, **caractérisé en ce que** le liquide, la solution ou la suspension servant à former au moins l'une des couches de protection anti-corrosion, couches de laque et/ou couches de revêtement façon laque contenant un polymère est déposé(e) par calandrage, coulée, étalement à l'aide d'une racle, projection, pulvérisation, enduction ou immersion.

116. Procédé conforme à l'une des revendications précédentes, **caractérisé en ce que** le poids de couche de chaque revêtement déposé à partir du liquide, de la solution ou de la suspension servant à former au moins l'une des couches de protection anti-corrosion, couches de laque et/ou couches de revêtement façon laque contenant un polymère est ajusté à une valeur située dans l'intervalle allant de 0,0005 mg/m² à 150 g/m².

117. Procédé conforme à l'une des revendications précédentes, **caractérisé en ce que**, sur le film partiellement ou complètement durci, on dépose à chaque fois au moins un revêtement formé d'une laque ou d'un revêtement façon laque contenant un polymère, étant entendu que la première couche de laque ou couche de revêtement façon laque contenant un polymère est un revêtement formé d'un primaire, d'un matériau contenant des polymères organiques et déposé en film mince de 0,1 à 10 µm d'épaisseur, d'un primaire réactif, d'un primaire lavabilisateur (wash primer) ou d'un primaire de préfabrication (shop primer).

118. Procédé conforme à l'une des revendications précédentes, **caractérisé en ce que**, sur la bande au moins partiellement laquée ou recouverte façon laquée d'une couche contenant un polymère, ou sur la section de bande au moins partiellement laquée ou recouverte façon laquée d'une couche contenant un polymère, on dépose dans chaque cas au moins un revêtement constitué de laque, un mélange constitué de polymères, colorants, adhésifs et/ou supports d'adhésif ou comprenant de tels constituants.

119. Procédé conforme à l'une des revendications précédentes, **caractérisé en ce que** l'on met en contact avec la surface métallique, propre, nettoyée ou activée, le liquide, la solution ou la suspension servant à former l'une des couches de protection anti-corrosion, et l'on en fait sur la surface métallique au moins un film que l'on fait ensuite sécher, ou sécher et en outre durcir, à la suite de quoi le film séché, ou séché et durci, présente une épaisseur située dans la gamme de 0,01 à 100 µm.

120. Procédé conforme à l'une des revendications précédentes, **caractérisé en ce que** l'on dépose au moins une couche de laque en tant que couche de fond ou une couche de revêtement façon laque contenant un polymère en tant que primaire de prétraitement, primaire, primaire remplaçant une laque de trempage cathodique, primaire lubrifiant, primaire réactif, primaire de soudage, primaire lavabilisateur, laque transparente et/ou couche de dessus.

121. Procédé conforme à l'une des revendications précédentes, **caractérisé en ce que** les bandes ou sections de bandes revêtues sont façonnées, laquées, revêtues de polymère, compressées, collées, brasées à chaud, soudées et/ou attachées les unes aux autres ou avec d'autres éléments par agrafage ou par d'autres techniques d'assemblage.

122. Utilisation d'un substrat revêtu selon un procédé conforme à l'une au moins des revendications 1 à 121, **caractérisée en ce que** le substrat à revêtir est un enroulement de fil métallique, un treillis de fils métalliques, un ruban d'acier, une tôle, un revêtement, un blindage, une carrosserie ou une pièce de carrosserie, une pièce de véhicule, de remorque, de mobil-home ou de missile, un couvercle, un boîtier, une lampe, un appareil d'éclairage, un élément de lampe suspendue, un meuble ou un élément de meuble, un élément d'appareil ménager, un châssis, un profilé, une pièce moulée de forme géométrique complexe, un élément de planche de guidage, de radiateur ou de clôture, un pare-chocs, une pièce constituée d'au moins un tube et/ou un profilé ou comprenant au moins un tube et/ou un profilé, un cadre de fenêtre, de porte ou de bicyclette, ou une petite pièce.

123. Utilisation d'un produit fabriqué selon un procédé conforme à l'une au moins des revendications 1 à 121 dans la construction de véhicules, dans la production en série d'automobiles, pour la fabrication de composants ou de pièces de carrosserie ou d'éléments prémontés dans l'industrie automobile, l'industrie aéronautique ou l'industrie spatiale, en tant que tôle, revêtement, carrosserie ou pièce de carrosserie, en tant que pièce de véhicule, de remorque, de mobil-home ou de missile, en tant que couvercle, profilé, pièce moulée de forme géométrique complexe, pare-chocs, ou en tant que pièce constituée d'au moins un tube et/ou un profilé ou comprenant au moins un tube et/ou un profilé.
